(19) Europäisches Patentamt
European Patent Office
Office européen des brevets

(11) **EP 3 627 218 A1**

(12) **EUROPEAN PATENT APPLICATION**
published in accordance with Art. 153(4) EPC

(43) Date of publication:
**25.03.2020  Bulletin 2020/13**

(51) Int Cl.:
**G03B 17/02** *(2006.01)*    **G03B 11/04** *(2006.01)*
**G03B 17/18** *(2006.01)*    **G03B 17/56** *(2006.01)*
**H04N 5/225** *(2006.01)*

(21) Application number: **18802217.2**

(22) Date of filing: **05.03.2018**

(86) International application number:
**PCT/JP2018/008289**

(87) International publication number:
**WO 2018/211780 (22.11.2018 Gazette 2018/47)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **18.05.2017  JP 2017099167**

(71) Applicant: **Sony Corporation
Tokyo 108-0075 (JP)**

(72) Inventors:
• **TADANO, Ryuichi
  Tokyo 108-0075 (JP)**
• **YAMAMOTO, Hiroshi
  Tokyo 108-0075 (JP)**
• **NAKAGAWA, Sho
  Tokyo 108-0075 (JP)**
• **OZONE, Takayoshi
  Tokyo 108-0075 (JP)**

(74) Representative: **D Young & Co LLP
120 Holborn
London EC1N 2DY (GB)**

(54) **IMAGING DEVICE**

(57)    To simplify shooting operations. There are therefore provided a casing, an attachment part configured to mount the casing on the neck of a user, and an optical system that is provided at a lower part of the casing and has an optical axis facing downward relative to the horizontal direction.

FIG. 1

**Description**

TECHNICAL FIELD

The present technology relates to a technical field of shooting apparatus. It particularly relates to a shooting apparatus with a fisheye lens.

BACKGROUND ART

A semispherical camera or a spherical camera has been known as a shooting apparatus such as camera or video camera. For example, Patent Document 1 discloses a technology for spherical camera.

CITATION LIST

PATENT DOCUMENT

Patent Document 1: Japanese Patent Application Laid-Open No. 2016-149752

SUMMARY OF THE INVENTION

PROBLEMS TO BE SOLVED BY THE INVENTION

Incidentally, in a case where shooting is performed by use of a shooting apparatus, a shooting operation may be difficult depending on a situation. For example, it is a case where working steps are shot during cooking, a case where shooting is performed during exercise such as jogging, or the like.
Thus, the shooting apparatus according to the present technology is directed for simplifying shooting operations.

SOLUTIONS TO PROBLEMS

A shooting apparatus according to the present technology includes a casing, an attachment part configured to mount the casing on the neck of a user, and an optical system that is provided at a lower part of the casing and has an optical axis facing downward relative to the horizontal direction.
Thereby, the optical system is preferably arranged in the use state. Further, an upper part of the casing is prevented from being captured within a field of view of the optical system.
In the shooting apparatus, the attachment part may be provided at the upper part of the casing.
Thereby, the shooting apparatus is used while suspended from above, for example.
In the shooting apparatus, the optical axis of the optical system may be a straight line facing downward relative to the horizontal direction while a rear face part of the casing is along a gravitational direction.
Thereby, the upper part of the casing is prevented from being captured within the angle of view of the optical system.
In the shooting apparatus, a tilt of the optical axis relative to the horizontal direction may be between around 10° and around 50°.
Thereby, a region in front of the casing is covered as a shooting range in the shooting apparatus placed of the chest.
For example, in the shooting apparatus, the tilt $\alpha$ of the optical axis may be assumed at:

$$(\theta - (\phi - \pi)/2) \leq \alpha \leq (\theta + (\phi - \pi)/2)$$

where $\theta$ is a constant indicating an angle formed by the chest of a standing person and a vertical face, $\phi$ is an angle of view of the optical system, and $\pi$ is the circumference ratio.
Thereby, in a case where the shooter with an average tilt of the chest uses the shooting apparatus while the casing is placed on his/her chest, the region in front of the casing is covered as a shooting range.
The shooting apparatus includes a strap attached on the casing, and the casing may be in a vertically long shape in which the vertical width is larger than the horizontal width while it is suspended by the strap.
Thereby, a lens of the optical system closest to an object is only projected toward the object, thereby preventing the casing from being captured within the angle of view in the right and left directions.

The shooting apparatus may have a 3-axis gyro sensor as the posture data generation part.

The 3-axis gyro sensor is provided thereby to acquire a fine posture state of the shooting apparatus.

The shooting apparatus may have a 3-axis acceleration sensor as the posture data generation part.

The 3-axis acceleration sensor is provided thereby to acquire a fine posture state of the shooting apparatus.

An operation piece may be provided on the upper face part of the casing in the shooting apparatus.

An operation piece may be provided only on one side face part out of a right side face part and a left side face part of the casing in the shooting apparatus.

A plurality of operation pieces may be provided on the one side face part in the shooting apparatus.

An operation piece may be provided on the upper face part of the casing in the shooting apparatus, and an operation piece may be provided only on one side face part out of the right side face part and the left side face part of the casing.

In the shooting apparatus, the casing has a front face part, a rear face part, an upper face part, a lower face part, and right and left side face parts, and is provided with a plurality of operation pieces, and all the operation pieces to be provided on the side face parts among the plurality of operation pieces may be provided on either the left side face part or the right side face part.

Thereby, the operation pieces are less likely to be erroneously operated.

An operation piece which is enabled during shooting may be provided on the upper face part in the shooting apparatus.

Thereby, operability is enhanced.

In particular, in a case where the shooting apparatus is used while suspended from the neck by use of the strap, the operation piece provided on the upper face part can be operated without gripping the casing, thereby enhancing operability.

A still image shooting function operation piece may be provided for the operation piece on the upper face part in the shooting apparatus.

A marker recording function operation piece may be provided for the operation piece on the upper face part in the shooting apparatus.

A moving picture shooting function operation piece may be provided for the operation piece on the side face part in the shooting apparatus.

A time-lapse moving picture shooting function operation piece may be provided for the operation piece on the side face part.

The shooting apparatus includes a strap attached on the casing and provided with a male connector at one end and a female connector at the other end, and the strap may be annular by inserting the male connector into the female connector.

Thereby, the strap can be mounted without putting the user's head through the annular part.

In the shooting apparatus, the male connector and the female connector have magnets, respectively, and the male connector may be attachable/removable to/from the female connector by the magnets.

Thereby, the attracting forces are caused between the male connector and the female connector while the male connector is inserted into the female connector.

In the shooting apparatus, a guide part is provided inside the female connector, and the male connector is not substantially rotatable relative to the female connector while the male connector is inserted into the female connector.

Thereby, the strap is less likely to be twisted.

The attachment part in the shooting apparatus may be a strap with a guide part.

The casing in the shooting apparatus has an attachment part to which the strap is attached, and a straight line connecting the center of gravity of the shooting apparatus and the attachment part may be orthogonal to the optical axis of the optimal system while the casing is suspended by the strap.

Thereby, the optical axis of the optical system is substantially horizontal while the shooting apparatus is suspended by the strap.

The shooting apparatus may include a report part configured to report that shooting is in progress.

Thereby, a person as an object is prevented from being unintentionally shot.

The shooting apparatus may include a lens cover capable of covering the optical system.

Thereby, the lens can be prevented from being unintentionally touched.

The shooting apparatus may include a vibration part configured to provide notification of a reduction in power supply voltage during shooting.

Thereby, the shooter can recognize a reduction in battery.

The vibration part in the shooting apparatus may be provided inside the casing.

Thereby, a vibration is transmitted to the chest via the casing while the casing is placed on the chest.

The shooting apparatus includes a strap attached on the casing, and the vibration part may be provided on the strap.

For example, the vibration part is provided on the connector parts of the strap, and thus a vibration is transmitted to the neck of the shooter.

The shooting apparatus may include microphones provided at the upper part and the lower part of the casing.

The microphones are provided at the upper part and the lower part, and thus voice of the shooter which is larger from above can be extracted in a case where the shooting apparatus is used while suspended from the neck.

EFFECTS OF THE INVENTION

According to the present technology, the shooting operations are simplified.

Additionally, the effects described herein are not necessarily restrictive, and may be any of the effects described in the present disclosure.

BRIEF DESCRIPTION OF DRAWINGS

Fig. 1 is a perspective view of a shooting apparatus according to an embodiment of the present technology.
Fig. 2 is a side view of the shooting apparatus.
Fig. 3 is a perspective view illustrating a state in which a lid part is removed.
Fig. 4 is diagrams for explaining an angle of view of an optical system.
Fig. 5 is diagrams illustrating the shooting apparatus placed on the chest.
Fig. 6 is a perspective view of the shooting apparatus.
Fig. 7 is a perspective view of a male connector and a female connector.
Fig. 8 is schematic diagrams illustrating states in which the male connector is inserted into the female connector while being rotated.
Fig. 9 is diagrams for explaining a force applied to the connectors when a function button is pressed.
Fig. 10 is a diagram illustrating the shooting apparatus suspended from the neck.
Fig. 11 is a diagram illustrating a gravitational position of the shooting apparatus.
Fig. 12 is schematic diagrams illustrating the shooting apparatus provided with a lens cover.
Fig. 13 is a perspective view illustrating an example in which a casing is in a vertically long shape.
Fig. 14 is a perspective view illustrating an example in which microphones are provided only at the upper part of the casing.
Fig. 15 is an explanatory diagram illustrating examples in which a vibration part is provided on the connector parts of a strap.
Fig. 16 is an explanatory diagram illustrating another form of the shooting apparatus.
Fig. 17 is a diagram illustrating another exemplary connector parts of the strap.
Fig. 18 is a state transition diagram of the operation states.
Fig. 19 is a functional block diagram of the shooting apparatus.
Fig. 20 is explanatory diagrams of communication between the shooting apparatus and an external apparatus.
Fig. 21 is an explanatory diagram of a hardware configuration of an information processing apparatus.
Fig. 22 is an explanatory diagram of posture data and image correction processings.
Fig. 23 is an explanatory diagram of posture data and image correction processings.
Fig. 24 is graphs for explaining exposure adjustment and gain adjustment for illuminance.
Fig. 25 is a flowchart of automatic exposure control.
Fig. 26 is block diagrams for microphones.
Fig. 27 is another block diagram for microphones.
Fig. 28 is a functional block diagram of another form of the shooting apparatus.
Fig. 29 is flowcharts illustrating exemplary controls of a camera unit and a detection unit.
Fig. 30 is a timing chart for detecting and storing posture data.
Fig. 31 is a flowchart for explaining association between image data and posture data.
Fig. 32 is a functional block diagram of still another form of the shooting apparatus.
Fig. 33 is flowcharts illustrating exemplary controls of the camera unit and the detection unit.
Fig. 34 is a timing chart for detecting and storing posture data.
Fig. 35 is a diagram illustrating a state in which a light is irradiated from a light emission part onto an out-of-range region.
Fig. 36 is an explanatory diagram of an application screen of the information processing apparatus according to the embodiment.
Fig. 37 is an explanatory diagram of the application screen of the information processing apparatus according to the embodiment.

Fig. 38 is explanatory diagrams of image data blur correction according to the embodiment.

Fig. 39 is explanatory diagrams of image's gravitational direction correction according to the embodiment.

Fig. 40 is explanatory diagram of exemplary displays during image data reproduction according to the embodiment.

Fig. 41 is explanatory diagrams of exemplary displays during image data reproduction according to the embodiment.

Fig. 42 is a block diagram of a functional configuration of the information processing apparatus according to the embedment.

Fig. 43 is a block diagram of a functional configuration of an image correction processing part according to the embodiment.

Fig. 44 is an explanatory diagram of association between a fisheye image and a virtual sphere according to the embodiment.

Fig. 45 is explanatory diagrams of association between an output image and the virtual sphere according to the embodiment.

Fig. 46 is explanatory diagrams of rotation of an output image plane and perspective projection according to the embodiment.

Fig. 47 is explanatory diagrams of an input image and an output image according to the embodiment.

Fig. 48 is explanatory diagrams of gravitational direction correction according to the embodiment.

Fig. 49 is a flowchart of a reproduction processing according to the embodiment.

Fig. 50 is a flowchart of the reproduction processing according to the embodiment.

Fig. 51 is a flowchart of a record processing according to the embodiment.

Fig. 52 is a flowchart of other exemplary record processing according to the embodiment

Fig. 53 is a diagram schematically illustrating an entire configuration of an operating room system.

Fig. 54 is a diagram illustrating exemplary display of an operation screen on a concentrated operation panel.

Fig. 55 is a diagram illustrating a surgery to which the operating room system is applied by way of example.

Fig. 56 is a block diagram illustrating an exemplary functional configuration of a camera head and a CCU illustrated in Fig. 55.

MODE FOR CARRYING OUT THE INVENTION

An embodiment will be described below with reference to the accompanying drawings in the following order.

<1. Configuration of shooting apparatus>
<2. Transitions of operation states>
<3. Exemplary internal configuration I of shooting apparatus>
<4. Configuration of information processing apparatus>
<5. Posture data>
<6. Exposure adjustment>
<7. Microphone>
<8. Exemplary internal configuration II of shooting apparatus>
<9. Exemplary internal configuration III of shooting apparatus>
<10. Reproduction/edition screen of information processing apparatus>
<11. Image correction processings during reproduction>
<12. Functional configuration of information processing apparatus>
<13. Exemplary processings of information processing apparatus>
<14. Summary of information processing apparatus>
<15. Applications>
<16. Present technology>

<1. Configuration of shooting apparatus>

Additionally, in the following description, the side closer to a shooter of a shooting apparatus will be denoted as behind, and the side closer to an object will be denoted as ahead. Then, the left and right directions relative to a shooter of the camera will be descried. Further, a gravitational direction will be denoted as vertical direction. Furthermore, a direction orthogonal to the gravitational direction will be denoted as horizontal direction.

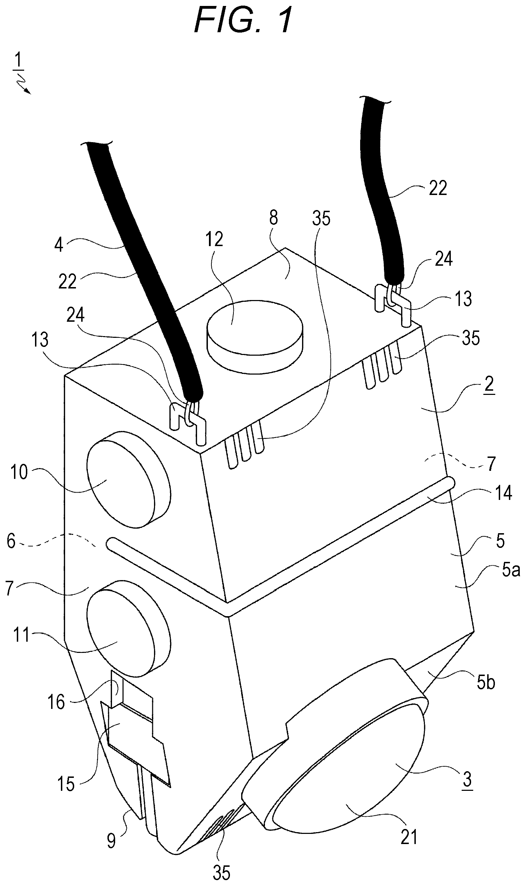

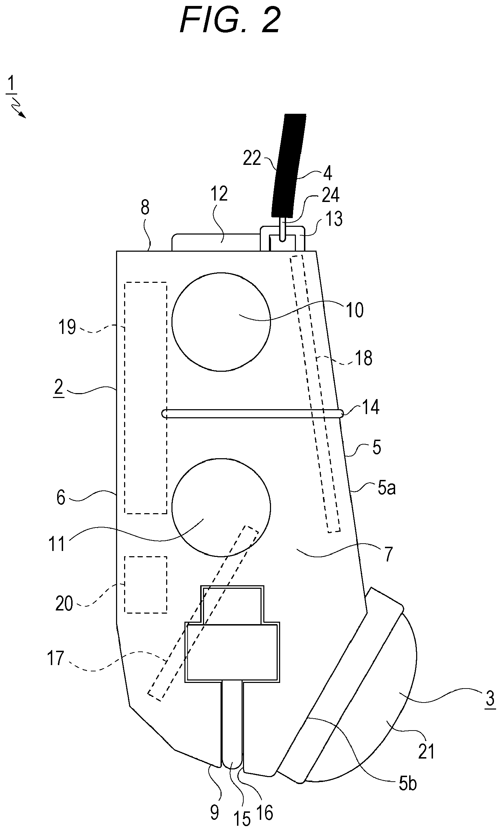

As illustrated in Fig. 1 and Fig. 2, a shooting apparatus 1 includes a box-shaped casing 2 for housing various members therein, an optical system 3 including various lenses attached on the casing 2, and a strap 4 attached on the casing 2.

The casing 2 is shaped in a substantially rectangular box including a front face part 5, a rear face part 6 (back face part), right and left side face parts 7, 7, an upper face part 8, and a lower face part 9. The casing 2 is configured such that the width in the right and left directions is larger than the width in the vertical direction. Additionally, the upper face part 8 and the lower face part 9 are defined while the casing 2 is suspended from the heck of a shooter (user). That is, a face part which faces upward in the state (suspended state) illustrated in Fig. 1 or Fig. 2 is denoted as upper face part 8. The lower face part 9 is similarly defined.

The front face part 5 includes an upper part 5a as a plan part facing slightly upward relative to the horizontal direction, and a lower part 5b attached with the optical system 3 as a plan part continuous from the lower end of the upper part 5a and facing downward relative to the horizontal direction at around 30°.

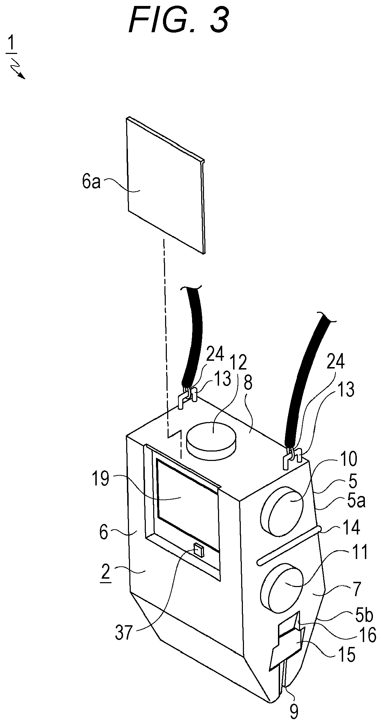

Part of the rear face part 6 is assumed as a slidable lid part 6a (see Fig. 3)

The right side face part 7 of the casing 2 viewed from a shooter is provided with a moving picture button 10 for performing a moving picture shooting operation, and a time-lapse button 11 for performing a time-lapse moving picture shooting operation. The time-lapse button 11 is provided below the moving picture button 10.

The upper face part 8 of the casing 2 is provided with a function button 12 for performing various functions. An operation and a function of the shooting apparatus 1 in a case where each button is pressed will be described below.

The operation pieces provided on the right and left side face parts 7, 7 of the casing 2 are only the moving picture button 10 and the time-lapse button 11, and both operation pieces are provided on the right side face part 7. That is, no operation piece is provided on the left side face part 7.

It is assumed that when operating the moving picture button 10 or the time-lapse button 11 provided on the right side face part 7, the user presses a right button while placing his/her fingers on the left side face part 7. Thus, if a button is present also on the left side, the user can erroneously press the left button.

To the contrary, no operation piece is provided on the left side face part 7 in the shooting apparatus 1 according to the present embodiment, and thus the erroneous operation as described above can be prevented. In particular, the user can easily press each operation piece without watching his/her hands due to the prevention of erroneous operation in a case where he/she shoots any work in process, for example, and thus a preferable shooting state can be easily kept without losing working efficiency.

The upper face part 8 of the casing 2 is provided with attachment parts 13, 13 for attaching the strap 4 horizontally apart. The attachment part 13 is C-shaped opened toward the upper face part 8, for example.

A report part 14 is provided at the center part of the casing 2 in the vertical direction over the right side face part 7, the upper part 5a of the front face part 5, and the left side face part 7. The report part 14 has a function of emitting a light in order to report a state or the like of the shooting apparatus to the shooter and his/her surrounding persons, and includes a light source such as light emitting diode (LED), a light source driving circuit, and a cover lens for diffusing a light emitted from the light source.

A housing recess 16 for housing a connector cable 15 is provided from the upper end to the lower end of the left side face part 7, from the left end to the right end of the lower face part 9, and from the lower end to the center part of the right side face part 7 in the casing 2.

The connector cable 15 is drawn from the inside of the casing 2 to the outside at the upper end of the left side face part 7, for example, and is housed in the housing recess 16 over the left side face part 7, the lower face part 9, and the right side face part 7 in the state illustrated in Fig. 1. The connector cable 15 is used for transmitting image data or the like shot by the shooting apparatus 1 to an external terminal or the like.

The connector cable is assumed as a universal serial bus (USB) cable, or the like, for example.

A shooting board 17 for shooting an image formed by the optical system 3, a control board 18 for performing various processings for the shooting apparatus 1, and a battery 19 for supplying a drive voltage to each part are arranged inside the casing 2 (see Fig. 2).

The shooting board 17 includes an imaging device, a peripheral circuit, and the like.

The battery 19 is removable by sliding the lid part 6a.

A card slot (not illustrated)) for inserting a card-shaped storage medium, a vibration part 20 for vibrating the shooting apparatus 1, a microphone (described below) for inputting (recording) voice, and the like are additionally arranged inside the casing 2 as needed. Further, a wireless communication button 37 is also arranged in the casing 2. The wireless communication button 37 is exposed by sliding the lid part 6a, for example, to be able to be pressed (see Fig. 3).

The optical system 3 includes a fisheye lens 21 arranged closest to an object, and other group of lenses (not illustrated). Additionally, the fisheye lens 21 is an exemplary optical system for forming an image in other than the central projection system as a general projection system. A system other than the central projection system may be the equidistant projection system, the equisolid angle projection system, the orthogonal projection system, the stereographic projection system, or the like, for example.

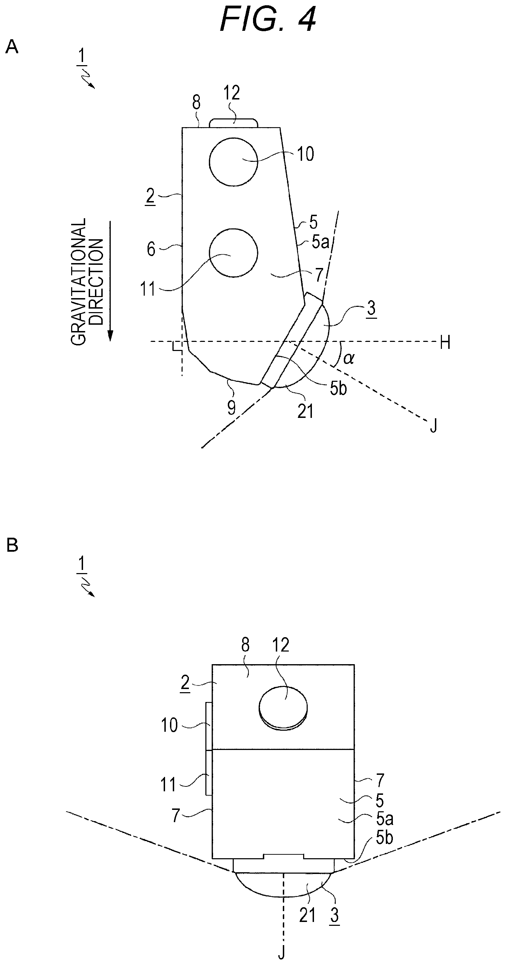

Fig. 4A is a side view of the shooting apparatus 1, and Fig. 4B is a diagram illustrating the shooting apparatus 1 substantially from above. An angle of view of the fisheye lens 21 of the optical system 3 is indicated in a chain line in each Figure. As illustrated, the angle of view of the fisheye lens 21 is 180° or more, and is assumed at 220°, for example.

The shooting apparatus 1 according to the present embodiment is configured such that the width in the right and left directions of the casing 2 is smaller than the width in the vertical direction as illustrated in Fig. 4B. Thereby, the optical system 3 is only projected ahead so that the casing 2 is prevented from being captured within the angle of view in the right and left directions.

Thereby, the performance of the optical system 3 having the fisheye lens 21 with a wide angle of view and the like can be sufficiently utilized to perform shooting.

Further, as illustrated in Fig. 4A, an optical axis J of the fisheye lens 21 is assumed as a straight line facing downward from the horizontal direction relative to an object while the rear face part 6 is along a gravitational direction (vertical direction). Specifically, the optical system 3 is attached on the lower part 5b of the front face part 5 facing downward relative to the horizontal direction at around 30°, and the optical system 3 is attached such that the orientation of the face of the lower part 5b is parallel to the optical axis J of the optical system, and thus the upper part of the casing 2 is prevented from being captured within the angle of view of the fisheye lens 21.

Thereby, the wide angle of view of the fisheye lens 21 is utilized to perform shooting in a wide range.

Additionally, the rear face part 6 illustrated in Fig. 4A and the like are assumed as a plan face, but may be a non-plan face. For example, the rear face part 6 may partially include a curved face or the rear face part 6 may be in a wavy shape. The optical axis J of the fisheye lens 21 is assumed as a straight line facing downward from the horizontal direction relative to an object in such a rear face part 6 while the rear face part 6 is placed along the gravitational direction.

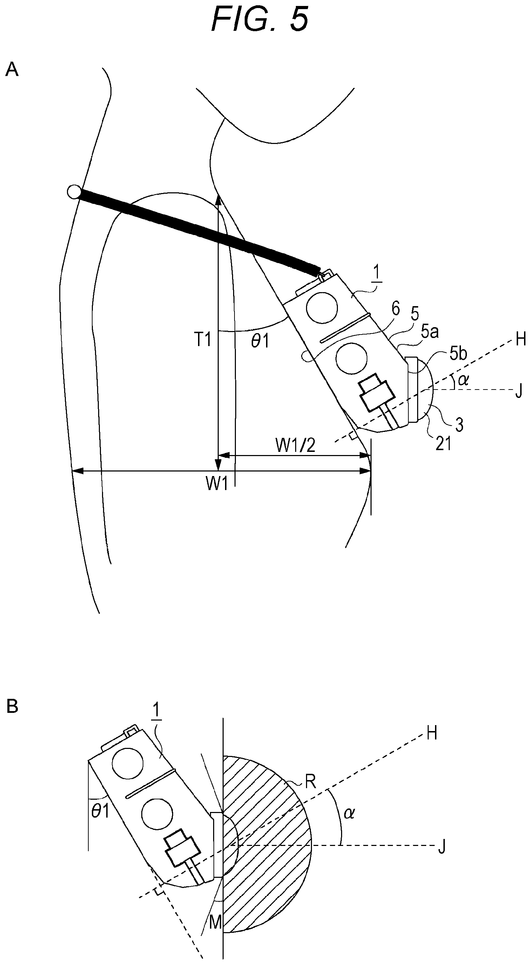

Fig. 5A is a diagram illustrating an orientation of the chest of a typical person relative to the horizontal direction. Assuming an angle $\theta 1$ formed by the chest of a standing person and the vertical face, it is desirable that an angle formed by the rear face part 6 of the casing 2 and the lower part 5b of the front face part 5 is assumed at $\theta 1$. Thereby, the optical axis J of the optical system 3 faces substantially ahead while the rear face part 6 is placed on the chest of the standing shooter. Thus, substantially the same scene as the field of view of the shooter can be shot, and an image can be shot in a realistic feeling of sharing shooter's

experience via the shot image.

Specific examples will be described.

Assuming an average female chest thickness W1 of 220.7 and an average difference T1 between the neck measurement height and the nipple height of 195.7, $\theta 1 = \arctan ((W1/2)/T1)$ is assumed and $\theta 1$ is 29.4°. In such an example, the optical system 3 is attached on the lower part 5b of the front face part 5 facing downward relative to the horizontal direction at around 30° as in the present embodiment, and the shooting apparatus 1 is in a preferable posture in a case where it is actually suspended from the neck for use.

Further, W1 is assumed to vary from 156.50702 to 284.893 and T1 is assumed to vary from 187.2749 to 204.1251 in consideration of a variation ($3\sigma$) in individual persons. In this case, $\theta 1$ varies from 22.7° to 34.9°. Additionally, $\sigma$ indicates a standard deviation.

Further, there will be assumed that the shooting range is at 180° ahead of the shooting apparatus 1 (range R shaded in Fig. 5B).

Assuming an angle of view $\phi$ of the fisheye lens, a margin M of the angle of view of the fisheye lens can be expressed in the following Equation.

$$M = (\phi - \pi)/2$$

For example, at $\phi$ = 220°, M is 20°. That is, both the upper margin and the lower margin of the fisheye lens are 20°, respectively, while the optical axis J of the optical system of the shooting apparatus 1 placedon the chest is in the vertical direction.

In such a state, an angle $\alpha$ (or tilt of the optical axis J) formed by a line H orthogonal to the rear face part 6 and the optical axis J of the optical system 3 needs to be ($\theta 1 - (\phi - \pi)/2$) or more and ($\theta 1 + (\phi - \pi)/2$) or less in order to cover the shaded range R as shooting range.

If the angle $\theta 1$ formed by the chest and the vertical face is 30° and the angle of view $\phi$ is 220°, the angle $\alpha$ is between 10° and 50°. The condition is met so that the shooter with an average chest tilt can easily shoot in a range of 180° ahead of him/her.

That is, the shooting apparatus 1 is configured such that the optical axis J of the optical system 3 faces downward at around 30° while the casing 2 is simply suspended, and the optical axis J faces substantially ahead (substantially horizontal) while the casing 2 is placed on the chest of the shooter.

Additionally, in a case where the casing 2 is used while it is placed on the chest, the vibration part 20 is provided inside the casing 2, and thus a vibration of the vibration part 20 can be transmitted to the chest of the shooter. That is, various report functions can be effectively worked.

Additionally, generally, if the vibration part 20 provided in the casing 2 is vibrated during shooting, the shooting apparatus 1 can cause a blur in a shot image. Thus, a processing which vibrates the casing 2 is not usually performed. However, the shooting apparatus 1 according to the present embodiment is configured to perform a blur correction processing described below when reproducing a shot image, thereby vibrating the casing 2 during shooting.

The strap 4 has two cord parts 22, 22. One cord part 22 is attached with a male connector 23 at one end and attached with an annular attached part 24 at the other end.

The other cord part 22 is attached with a female connector 25 at one end and attached with an attached part 24 at the other end.

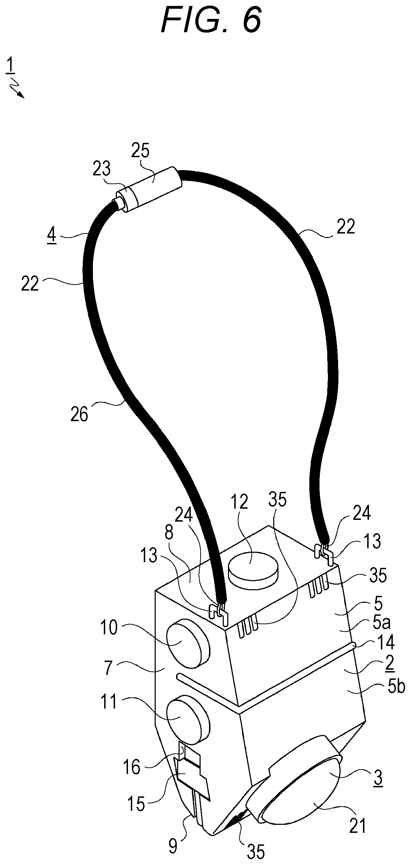

The male connector 23 is inserted into the female connector 25 so that the two cord parts 22, 22 are coupled. The attached parts 24 of the respective cord parts 22 are then attached to the attachment parts 13, 13 of the casing 2, respectively, so that the strap 4 and the upper face part 8 of the casing 2 form an annular part 26 (see Fig. 6).

The annular part 26 is a larger ring than the neck of a person, and is a smaller ring than the head of the person, for example. Thereby, the strap 4 can be prevented from slipping off from the head when the shooter bows, thereby preventing the shooting apparatus 1 from being damaged, for example. Then, the shooting apparatus 1 can be mounted while the shooter is in various postures, thereby shooting in various situations.

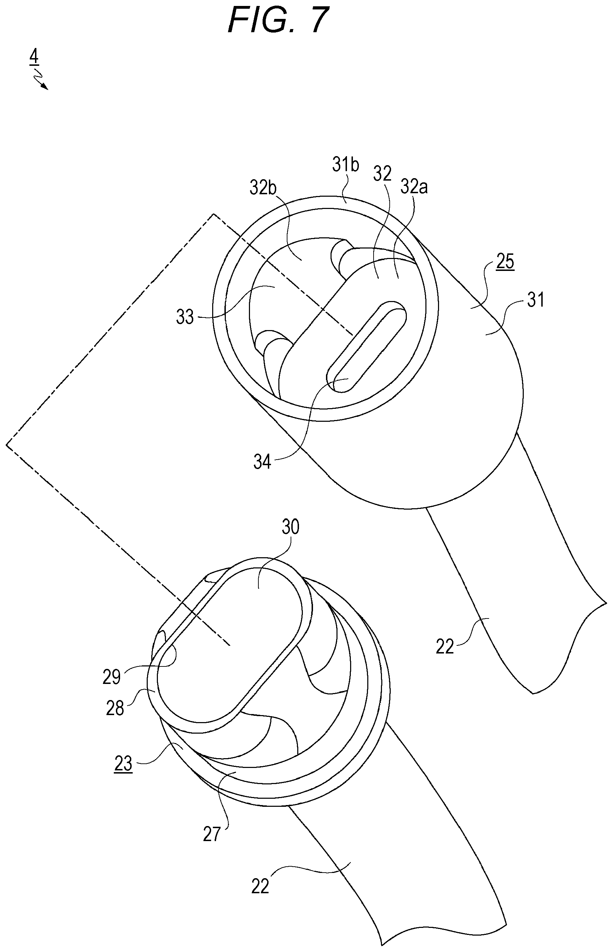

The male connector 23 is magnetically inserted into the female connector 25. It will be specifically described with reference to Fig. 7.

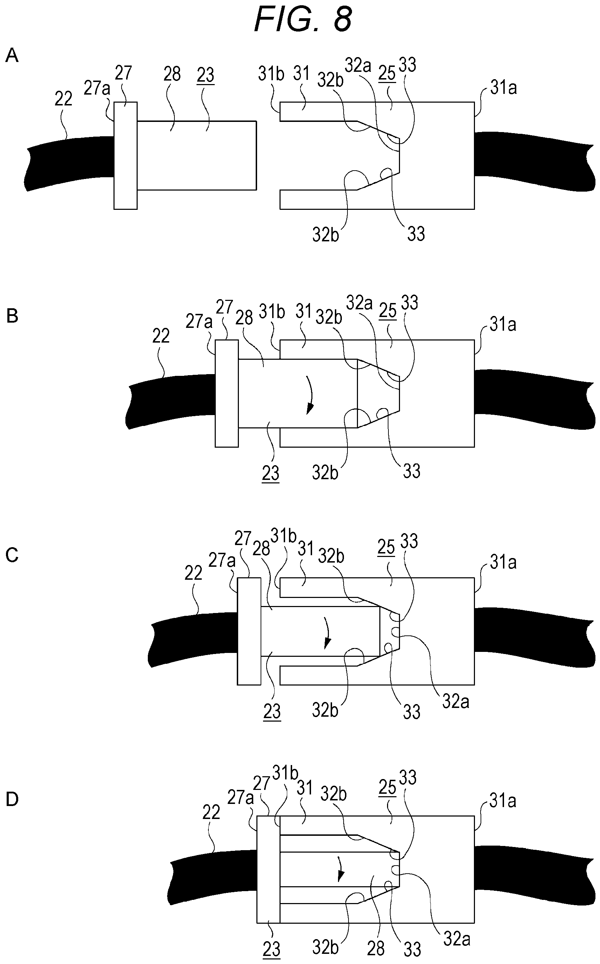

The male connector 23 includes a columnar base part 27, and an oval projection part 28 projected from the base part 27 in the axial direction. One end of the base part 27 in the axial direction is assumed as an attachment face 27a (see Fig. 8) attached with the cord part 22. The oval projection part 28 has an oval cross-section orthogonal to the axial direction, and is formed with a magnet mount hole 29 at the center. A magnet 30 is inserted into the magnet mount hole 29.

The female connector 25 includes a cylindrical tube part 31, and a partition plate 32 provided inside the tube part 31. One end of the tube part 31 is assumed as an attachment end 31a attached with the cord part 22, and the other end is assumed as an opening end 31b. The partition plate 32 includes an oval face part 32a having substantially the same cross-section shape as the oval projection part 28 of the male connector 23. Further, a part outside the oval face part 32a is assumed as tilted face part 32b in the partition plate 32. The tilted face part 32b includes a tilted face closer to the opening end 31b toward the outer periphery, and the tilted face part functions as a guide part 33.

A magnet 34 is attached between the partition plate 32 and the attachment end 31a. The magnet 30 and the magnet 34 are attached opposite to each other while the male connector 23 is inserted into the female connector 25.

The function of the guide part 33 will be described with reference to Fig. 8. Additionally, Fig. 8 schematically illustrates the outer shapes of the male connector 23 and the female connector 25.

Fig. 8A illustrates a state before the male connector 23 is inserted into the female connector 25. Fig. 8B illustrates a state in which the male connector 23 is inserted into the female connector 25 until the oval projection part 28 contacts with the tilted face part 32b as the guide part 33 from the state of Fig. 8A.

Further, the male connector 23 needs to be rotated in either direction in order to deeper insert the male connector 23 into the female connector 25. The cross-section shape of the oval projection part 28 of the male connector 23 is not a perfect circle but an oval shape, and thus the oval projection part 28 is rotated thereby to move deeper between the guide parts 33, 33.

Fig. 8C illustrates a state in which the male connector 23 is rotated at around 45° from the state illustrated in Fig. 8B. Fig. 8D illustrates a state in which the male connector 23 is rotated at around 90° from the state illustrated in Fig. 8B.

Finally, the tip face of the oval projection part 28 and the oval face part 32a are tightly contacted as illustrated in Fig. 8D, and the male connector 23 is completely inserted into the female connector 25. In this state, a preferable coupling state between the male connector 23 and the female connector 25 is secured due to the attracting forces of the magnet 30 of the male connector 23 and the magnet 34 of the female connector 25.

Further, the male connector 23 and the female connector 25 are coupled by the magnets, and thus a complicated structure for coupling/releasing both connectors is not required, thereby achieving a reduction in cost or simplified manufacture steps. Further, both connectors can be realized in a simple structure, and are difficult to damage, for example, thereby achieving a longer life of the parts.

The oval projection part 28 of the male connector 23 is not a perfect circle and the outside part of the oval face part 32a of the female connector 25 is assumed as the tilted face part 32b, and thus the male connector 23 does not rotate relative to the female connector 25 while the male connector 23 is inserted into the female connector 25.

Thus, the cord parts 22 are not twisted and are kept at an appropriate state. Further, the annular part 26 formed by the cord parts 22 is prevented from being reduced while the shooting apparatus 1 is mounted, thereby preventing a person who mounts the apparatus from feeling uncomfortable around the neck.

Further, the annular part 26 is a smaller ring than the head of a person as described above, and thus the user holds the male connector 23 and the female connector 25 while the annular part 26 is released, and then connects them on the back of the neck when mounting the shooting apparatus 1. At this time, the annular part 26 can be easily formed in the procedure of Fig. 8A to Fig. 8D, and the shooting apparatus 1 can be very smoothly mounted.

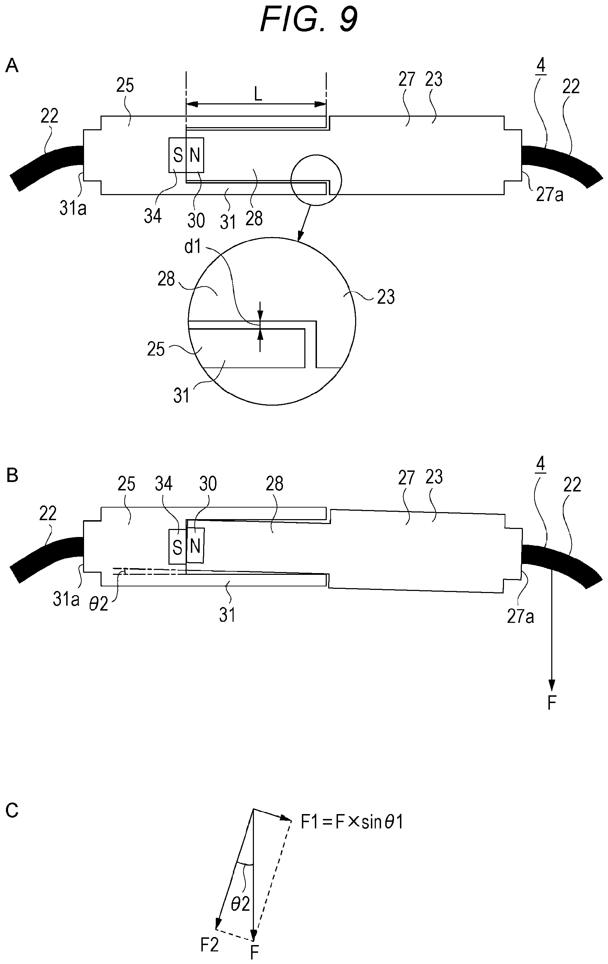

A case in which the function button 12 provided on the upper face part 8 of the casing 2 is pressed when the strap 4 is hanged on the neck will be described with reference to Fig. 9.

Fig. 9A and Fig. 9B are schematic diagrams simply illustrating the male connector 23 and the female connector 25.

A gap d1 is formed between the oval projection part 28 and the inner face (or the guide part 33) of the tube part 31 while the male connector 23 is inserted into the female connector 25.

When the function button 12 is pressed in the state illustrated in Fig. 9A, a downward force F is applied to the male connector 23 via the strap 4. The male connector 23 is tilted relative to the female connector 25 at an angle $\theta 2$ due to the force F (see Fig. 9B). Additionally, $\theta 2$ is determined by the gap d1 and a depth L of the tube part 31 of the female connector 25.

Fig. 9C illustrates how much force is applied in a direction in which the magnet 30 of the male connector 23 is separated from the magnet 34 of the female connector 25 by the force F.

A force F1 applied in the direction in which the magnet 30 is separated from the magnet 34 is $F \times \sin(\theta 2)$.

Assuming a force F3 as an attracting force between the magnet 30 and the magnet 34, the male connector 23 is separated from the female connector 25 and the annular state of the strap 4 is released when the condition F1 > F3 is met.

For example, when the gap d1 and the depth L are formed at $\sin(\theta 2)$ of around 0.1, both magnets are separated from each other in a case where the condition $F \times \sin(\theta 2)$ > F3 is met. That is, F is more than 10 times larger than F3. Thus, in a case where the function button 12 is pressed by a force less than 10 times larger than the force F3 between both magnets, the annular state of the strap 4 is kept, and the shooting apparatus 1 is prevented from dropping from the neck.

In this way, even if the function button 12 is pressed without holding the shooting apparatus 1 suspended from the neck, the gap d1 and the depth L are appropriately set, and thus the male connector 23 and the female connector 25 of the strap 4 are not separated and the shooting apparatus 1 does not drop. That is, the function button 12 can be easily pressed, and operability of various operations for shooting can be secured.

Further, the function button 12 can be pressed without holding the casing 2 in hands, and thus the function button 12 can be pressed without touching various lenses provided in the optical system 3, thereby preventing the lenses from being damaged or contaminated. Further, a hand or the like can be prevented from being captured in image data.

Furthermore, the gap D1 and the depth L are appropriately set, and thus even if a load is applied to the male connector 23 or the female connector 25 of the strap 4 due to the weight of the casing 2 or each part arranged therein, the connectors are difficult to decouple, and the shooting apparatus 1 is prevented from dropping. Similarly, even in a case where a load is applied to the connector parts by an operation of the shooter, the shooting apparatus 1 is less likely to drop.

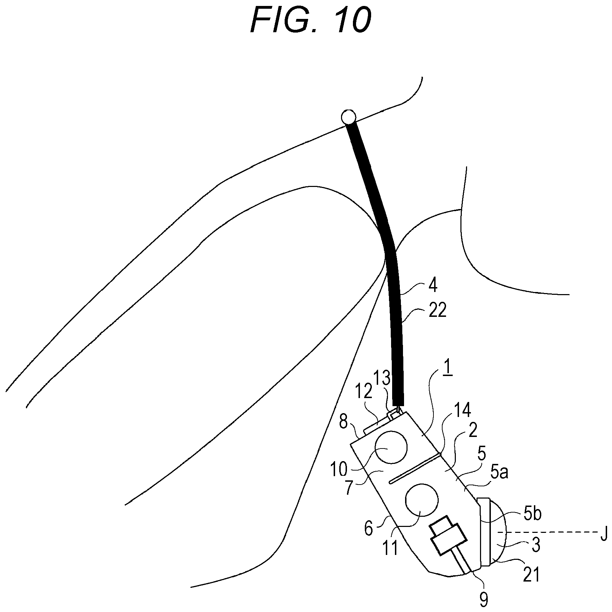

Incidentally, the optical axis J of the optical system 3 maybe configured to face substantially ahead while the casing 2 of the shooting apparatus 1 is simply suspended. For example, the shooting apparatus 1 is used not only in a state in which the rear face part 6 is placed on the chest of the shooter but also in other state. Specifically, it may be used while the shooter bends as illustrated in Fig. 10.

The state illustrated in Fig. 10 is that the shooting apparatus 1 is suspended by the strap 4 from the neck. The shooting apparatus 1 according to the present embodiment may be configured such that the optical axis J of the optical system 3 faces substantially ahead even in a state in which the shooting apparatus 1 is suspended by the strap 4.

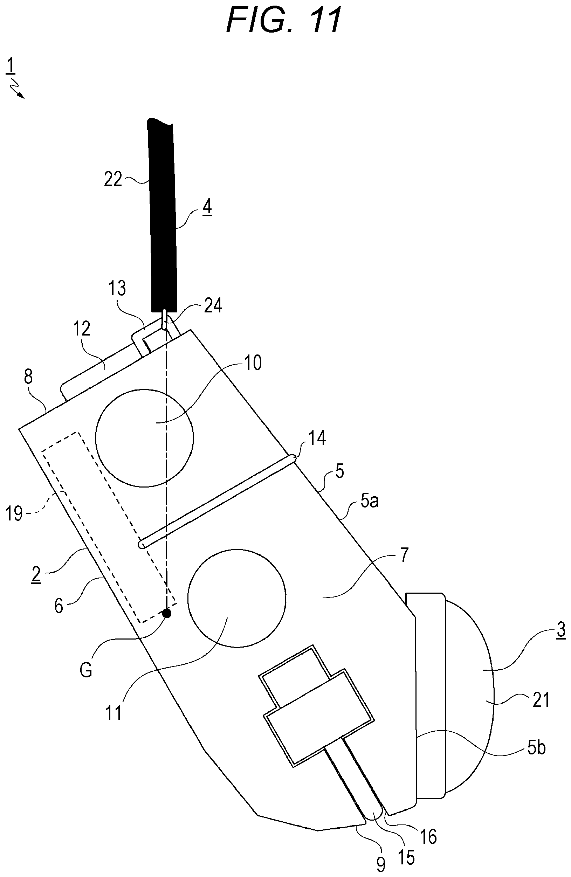

It will be specifically described with reference to Fig. 11.

An approximate position of the center of gravity of the shooting apparatus 1 is determined by a heavier member among the respective members provided in the shooting apparatus 1. For example, in a case where the battery 19 and the optical system 3 provided in the shooting apparatus 1 are heavier, an approximate position of the center of gravity is determined by their installation positions.

Further, a posture of the shooting apparatus 1 (posture of the casing 2) suspended from the neck is such that the positions (attachment parts 13) where the strap 4 is arranged and the center of gravity are arranged in the vertical direction . Fig. 11 illustrates a positional relationship of the center of gravity G of the shooting apparatus 1 and the attachment parts 13 of the strap 4 in a chain line. As illustrated, the center of gravity G is positioned in the vertical direction relative to the attachment parts 13 (or attached parts 24) .

The respective parts are arranged in the shooting apparatus 1 such that the optical axis J of the optical system 3 is in the horizontal direction in the state where the center of gravity G and the attachment parts 13 are arranged in the vertical direction.

In other words, when the posture of the shooting apparatus 1 is such that the optical axis J of the optical system 3 is in the horizontal direction, a heavymember (optical system 3) is arranged ahead of the positions where the strap 4 is attached (the positions where the attached parts 24 and the attachment parts 13 contact), and a heavy member (battery) is arranged behind the attachment positions.

Thereby, the optical axis J of the optical system 3 faces substantially ahead in the state in which the shooting apparatus 1 is suspended by the strap 4. That is, the shooter can shoot ahead of him/her in the horizontal direction without supporting the shooting apparatus 1 in hands even when the shooter bends.

Further, the vertical orientation of the optical system 3 of the shooting apparatus 1 changes less even if the shooter alternately bends and stands up, thereby shooting an image with less blurs.

The shooting apparatus 1 includes microphones 35 for inputting voice.

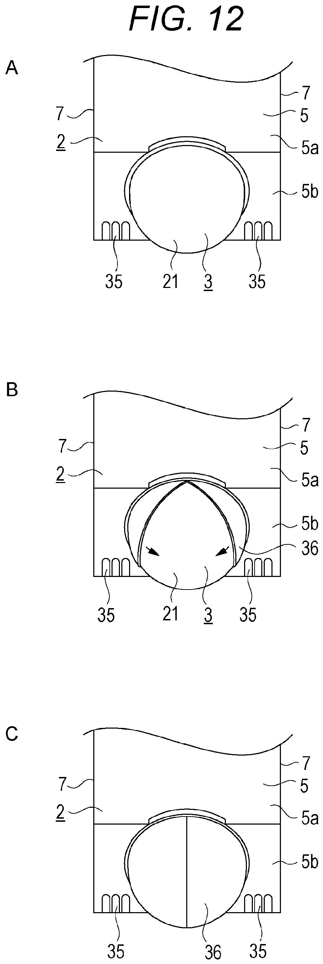

Two microphones 35 are provided horizontally apart along the upper end of the upper part 5a of the front face part 5, and two are provided horizontally apart along the lower end of the lower part 5b of the front face part 5, for example (see Fig. 1 and Fig. 12).

The shooting apparatus 1 additionally includes a 3-axis gyro sensor (described below) as a posture data generation part and a 3-axis acceleration sensor (described below) inside the casing 2. Posture data indicates a posture of the shooting apparatus 1, and is used for various corrections described below.

The 3-axis gyro sensor and the 3-axis acceleration sensor maybe attached at any positions on the rigid body of the shooting apparatus 1.

Further, a lens cover 36 for covering the front end part of the optical system 3 provided in the shooting apparatus 1 or part of the fisheye lens 21 exposed from the casing 2 is provided.

The lens cover 36 is slidable, for example, and is configured to move between "open position" (see Fig. 12A) where the fisheye lens 21 is exposed to be able to shoot as need and "protection position" (see Fig. 12C) where all or part of the fisheye lens 21 is covered. Additionally, Fig. 12B illustrates a state in which the lens cover 36 is being moved from the open position to the protection position.

The lens cover 36 is attached on the optical system 3, and thus the lens is prevented from being unintentionally touched and damaged not during shooting.

Further, the optical system 3 is covered with the lens cover 36 not during shooting thereby to notify the surroundings of the non-shooting state.

Additionally, in a case where the lens cover 36 is moved from the open position to the protection position while the shooting apparatus 1 is shooting, shooting may be canceled or temporarily stopped. Further, shooting is canceled or temporarily stopped, and additionally voltage supply to the shooting board 18 or the like may be stopped.

Thereby, power consumption of the shooting apparatus 1 can be restricted and a longer shooting time can be achieved. Further, the battery 19 mounted on the shooting apparatus 1 can be downsized due to restricted power consumption.

Furthermore, voltage supply is stopped thereby to achieve a longer life of each part.

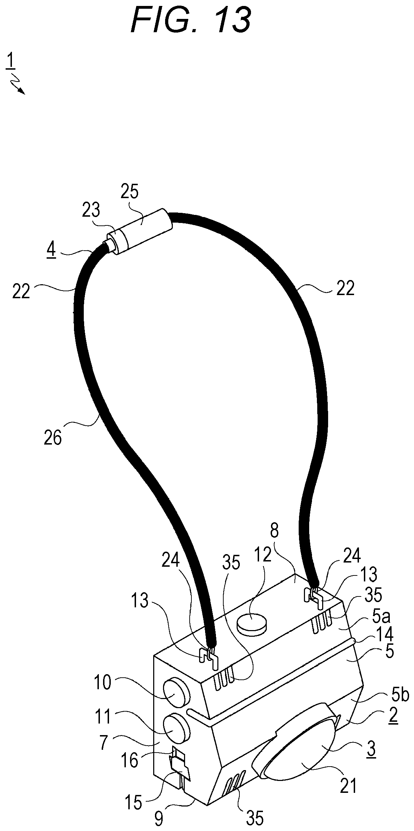

Additionally, various shapes of the shooting apparatus 1 can be assumed. A vertically-long shape has been described above by way of example, but a horizontally-long shape may be employed as illustrated in Fig. 13. That is, the respective components similar to those in Fig. 1 are provided in the horizontally-long casing 2.

With such a shape, when the casing 2 is swung in the right and left directions while the shooting apparatus 1 is placed on the chest of the shooter, a preferable placement state of the rear face part 6 on the chest is secured, and the casing 2 is prevented from being more swung than the shooter is swung in the right and left directions.

Additionally, as the horizontal width of the casing 2 is larger, a more preferable placement state against horizontal swinging can be easily kept, but it is preferable that both the right end left ends of the casing 2 are not captured within the angle of view of the fisheye lens 21.

The casing 2 is shaped to be as horizontally long as both the right and left ends of the casing 2 are not captured within the angle of view of the fisheye lens 21, thereby providing the shooting apparatus 1 resistant to horizontal swinging while optimizing the use of the angle of view of the fisheye lens 21.

Further, any number of microphones 35 may be employed. A plurality of microphones 35 may be provided to collect sounds in stereo, or one microphone 35 may be provided to monaurally collect sounds.

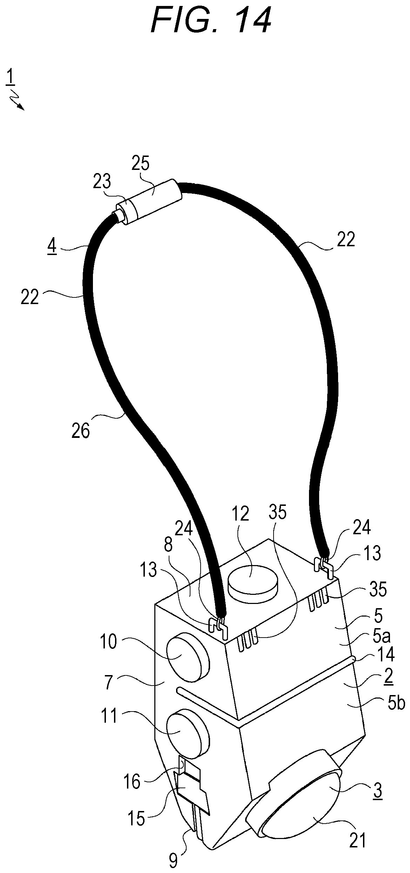

Various arrangements of one or more microphones 35 are assumed. For example, the microphones are provided at the upper part and the lower part of the casing 2 as illustrated in Fig. 6, and additionally the microphones 35 may be provided only at the upper part of the casing 2 as illustrated in Fig. 14.

Further, though not illustrated, the microphones 35 may be provided only at the lower part of the casing 2.

Further, the microphones 35 may be provided on the cord parts 22 of the strap 4, inside the male connector 23, or inside the female connector 25.

Furthermore, bone-conducting microphones 35 may be employed for the microphones 35.

Further, various examples of arrangements and numbers of the vibration parts 20 are assumed.

The above example illustrates that the vibration part 20 is provided on the casing 2, but the vibration part 20 may be provided on the strap 4. For example, the vibration part 20 may be provided on the cord part 22 of the strap 4, the male connector 23, or the female connector 25.

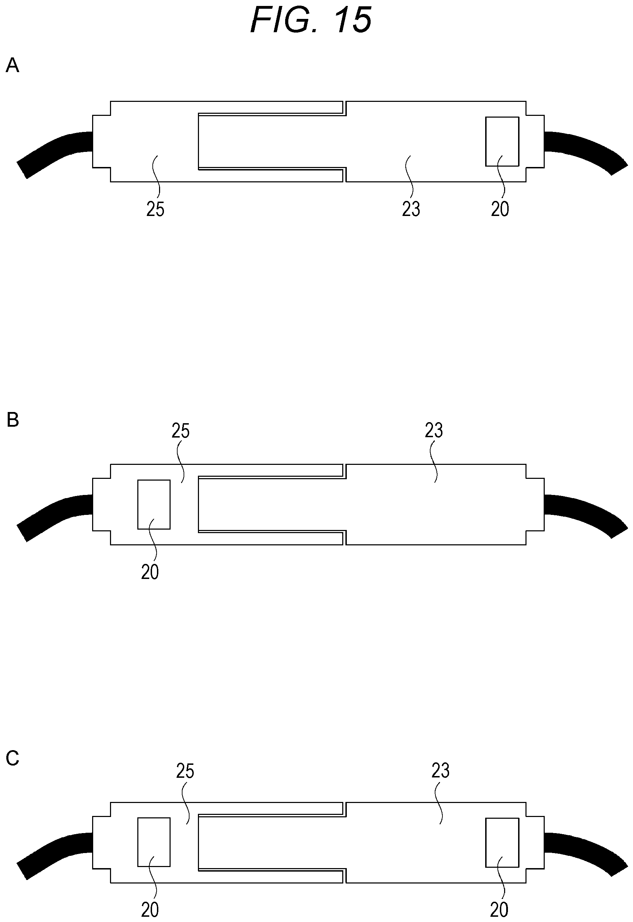

Fig. 15 illustrates some examples in which the vibration part 20 is provided on the male connector 23 or the female connector 25.

Fig. 15A illustrates an example in which the vibration part 20 is provided only on the male connector 23, and Fig. 15B illustrates an example in which the vibration part 20 is provided only on the female connector 25.

The vibration part 20 is provided on one connector, thereby efficiently making a notification to the shooter using the vibration part 20 while reducing the number of parts and reducing cost.

Fig. 15C illustrates an example in which the vibration parts 20, 20 are provided on both the male connector 23 and the female connector 25. The vibration parts 20 are provided on both connectors, thereby making a reliable notification to the shooter by strong vibrations. Further, two vibration parts 20, 20 are provided thereby to increase notification patterns. For example, there can be employed a notification pattern in which only the vibration part 20 provided on the male connector 23 is vibrated, a notification pattern in which only the vibration part 20 provided on the female connector 25 is vibrated, a notification pattern in which both the vibration parts 20, 20 are alternately vibrated, and the like. Thus, each pattern has different notification information, and a plurality of items of information can be provided in notification by use of the vibration parts 20.

Additionally, the shooting apparatus 1 is used while the strap 4 is put around the neck such that the connector parts contact with the neck of the shooter. Thus, as illustrated in each Figure, the vibration parts 20 are provided on the connector parts so that vibrations can be transmitted to the neck of the shooter, thereby making a reliable notification which the shooter easily knows.

An example in which an attachment unit 500 including the optical system and a detection unit 131 is attached on other camera device 501 will be described. Additionally, the optical system 3 provided in the attachment unit 500 may be some lenses or the like for complementing an optical system provided in the camera device 501. For example, the camera device 501 is assumed as a Smartphone, and the attachment unit 500 includes the fisheye lens 21 for complementing the optical system of the Smartphone, or the like. That is, the optical system of the attachment unit 500 and the optical system of the camera device 501 may be combined to obtain a desired image.

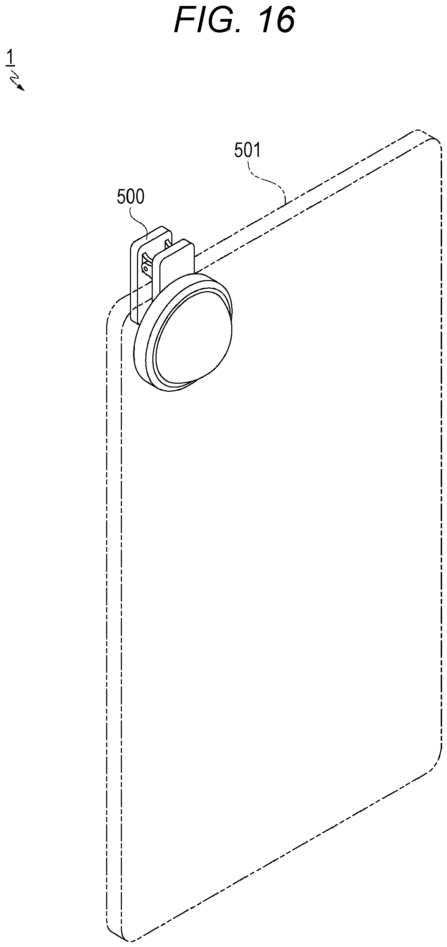

Fig. 16 illustrates an example in which the attachment unit 500 is attached on the camera device 501 as a Smartphone. The optical system provided in the attachment unit 500 includes a fisheye lens.

Even the shooting apparatus 1 like this including the camera device 501 and the attachment unit 500 can obtain various effects described above.

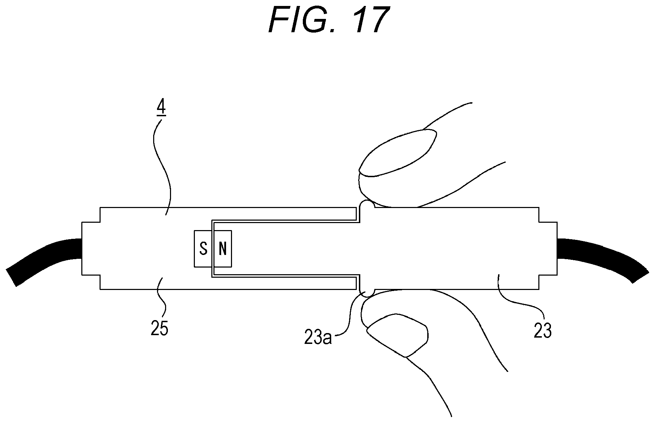

Fig. 17 is a diagram illustrating another example of the connector parts.

The male connector 23 is configured of an insertion part to be inserted into the female connector 25 and the other non-insertion part, and a flange-shaped grip part 23a may be formed on the non-insertion part.

In a case where the male connector 23 is inserted into the female connector 25, a finger is hooked on the grip part 23a so that the finger does not slip toward the female connector 25 beyond the grip part 23a.

Thereby, the finger is prevented from being sandwiched between the male connector 23 and the female connector 25.

Further, in a case where the male connector 23 is removed from the female connector 25, a finger is hooked on the grip part 23a, and thus a force required for removal is reduced. That is, it is easily removed.

<2. Transitions of operation states>

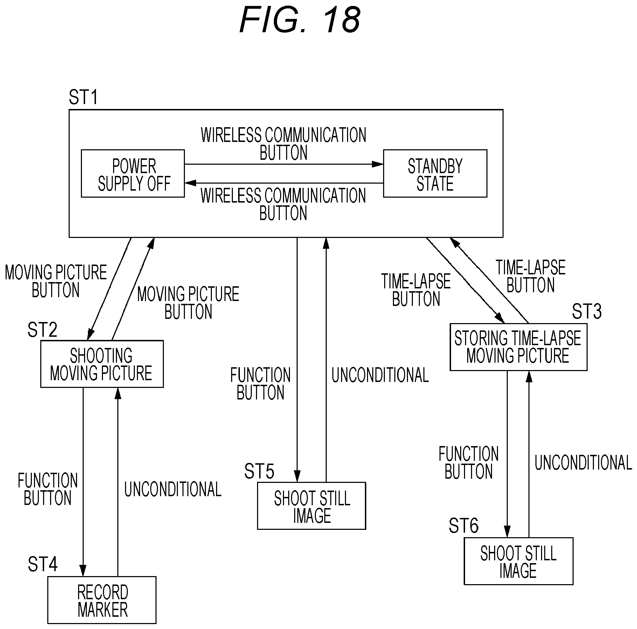

Fig. 18 illustrates exemplary transitions of the operation states of the shooting apparatus 1.

State ST1 indicates that the shooting apparatus 1 is in the "power-off state" or the "standby state".

In this case, the standby state indicates that the shooting apparatus 1 can make wireless communication with an external device in a communication system such as wireless fidelity (Wi-Fi) (trademark) . For example, in a state in which wireless communication with an external device such as portable terminal is established, the shooter can perform the operations corresponding to the moving picture button 10, the time-lapse button 11, and the function button 12 via the operations of the external device.

The power-off state and the standby state are switched by pressing the wireless communication button 37 described above, for example. The wireless communication button 37 is not provided on the outer periphery of the casing 2 in order to prevent an erroneous operation, and is provided inside the casing 2 to be operable when the lid part 6a shielding the housing part of the battery 19 is opened, for example.

When the moving picture button 10 is pressed in state ST1, state ST1 transits to the "moving picture shooting state" in state ST2. The moving picture shooting state is a state in which an image formed by the optical system 3 is shot at a predetermined frame rate thereby to generate/store moving picture data. In this state, the report part 14 lights in red thereby to report the shooting state to the surroundings, for example.

When the time-lapse button 11 is pressed in state ST1, state ST1 transits to the "time-lapse moving picture storing state" in state ST3. The time-lapse moving picture storing state is a state in which a valid frame is intermittently extracted from consecutive frames to be shot thereby to generate and store moving picture data (fast-forwarding-like moving picture). In this state, the report part 14 lights in blue thereby to report the shooting state to the surroundings, for example.

Additionally, moving picture data as time-lapse moving picture may be generated by alternately transiting to the time-lapse moving picture storing state and the power-off state. Specifically, in a case where each still image configuring a time-lapse moving picture is shot at 3-second intervals, the shooting apparatus 1 may transit to the power-off state until the next shooting timing comes after shooting one still image, for example. Alternatively, a processing of setting an imaging device in the sleep mode or a processing of setting a signal processing part (such as digital signal processor (DSP)) to the low-power consumption mode may be performed.

Thereby, power consumed by the shooting apparatus 1 for generating time-lapse moving picture data can be reduced, thereby achieving a longer shooting time.

Further, the moving picture data generated by the shooting apparatus 1 may be assumed to be the same as normal moving picture data, and still image data as component is thinned from the moving picture data when editing the moving picture data in other information processing apparatus for the edition thereby to generate a time-lapse moving picture.

Thereby, the processing of generating/storing moving picture data in the shooting apparatus 1 in state ST2 is substantially the same as the processing of gene rating/storing time-lapse moving picture data in the shooting apparatus 1 in state ST3, and thus the processings can be simplified.

When the function button 12 is pressed in the moving picture shooting state in state ST2, state ST2 transits to the "marker recording state" in state ST4. The marker recording state is a state in which an edition point for editing a moving picture later is recorded. For example, moving picture data can be reproduced from a marked scene during moving picture edition, or moving picture data based on a marked position can be deleted.

After a marker is recorded in the marker recording state, the shooting apparatus 1 automatically transits to the moving picture shooting state in state ST2.

When the function button 12 is pressed in the time-lapse moving picture storing state in state ST3, state ST3 transits to the "still image shooting state" in state ST6. An image formed by the optical system 3 is shot and stored as still image data in the still image shooting state.

After the still image is stored in the still image shooting state, the shooting apparatus 1 automatically transits to the time-lapse moving picture storing state in state ST3.

Additionally, in a case where the function button 12 is pressed in state ST3, state ST3 may transit not to state ST6 but to state ST4. That is, a marker may be recorded in a frame of a time-lapse moving picture, which is performed immediately before or after.

Further, the transitions may be switched on the basis of the operation forms of pressing the function button 12. For example, state ST3 may transit to state ST6 in a case where the function button 12 is pressed short, and state ST3 may transit to state ST4 in a case where the function button 12 is pressed long.

Additionally, the transition destinations may be switched depending on the number of times the function button 12 is pressed within a certain time.

When the function button 12 is pressed in state ST1, state ST1 transits to the "still image shooting state" in state ST5. An image formed by the optical system 3 is shot and stored as still image data in the still image shooting state.

After the still image is stored in the still image shooting state, the shooting apparatus 1 automatically transits to state ST1.

Additionally, in the still image shooting state in state ST5 and state ST6, an electronic shutter sound or the like may be output from a voice output part provided in the casing 2 when the still image data is stored. Thereby, the surroundings are notified of the fact that a still image is shot.

Further, the report part 14 may be blinked, for example, for reporting the fact instead of outputting sound. Of course, a sound may be output and the report part 14 may be lit at the same time.

A report is made depending on each state, thereby preventing a person as an object from being unintentionally shot.

The report part 14 makes a report depending on each state described above, and may report other states. For example, in a state in which the battery 19 provided in the shooting apparatus 1 is heavily consumed and the remaining operation time is short, the report part 14 may blink in red for reporting a reduction in the battery capacity, for example.

Thereby, the shooter can recognize the reduction in battery, and can take an action for elongating the shooting time, such as performing the operations less times.

Further, the report part 14 may be alternately lit in red and blue for reporting that a card-shaped storage medium is not inserted.

Additionally, the report part 14 provided over the right side face part 7, the upper part 5a of the front face part 5, and the left side face part 7 may be divided into subparts and provided with a plurality of report functions for reporting a state of states ST1 to ST6 and a reduction in the battery capacity at the same time. For example, part of the report part 14 provided on the right and left side face parts 7 is blinked in red to report a reduction in the battery capacity, and part of the report part 14 provided at the upper part 5a of the front face part 5 is lit in red to report that the shooting apparatus 1 is in state ST1.

Additionally, a plurality of report functions may be divided in time series. Specifically, a state of the shooting apparatus 1 may be reported three seconds after a reduction in the battery capacity is reported for three seconds.

Further, as described above, the shooting apparatus 1 can selectively generate image data as a moving picture including each frame at a predetermined frame rate (moving picture shooting in state ST2) and generate image data as an intermittent moving picture assuming an intermittent frame as a valid frame at a predetermined frame rate (time-lapse moving picture storing in state ST3).

That is, the shooter can selectively record a moving picture and an intermittent moving picture (time-lapse moving picture) when taking an action.

Further, the time-lapse moving picture enables the amount of data in a longer-time moving picture to be reduced or the video effects unique to the time-lapse moving picture to be enjoyed.

<3. Exemplary internal configuration I of shooting apparatus>

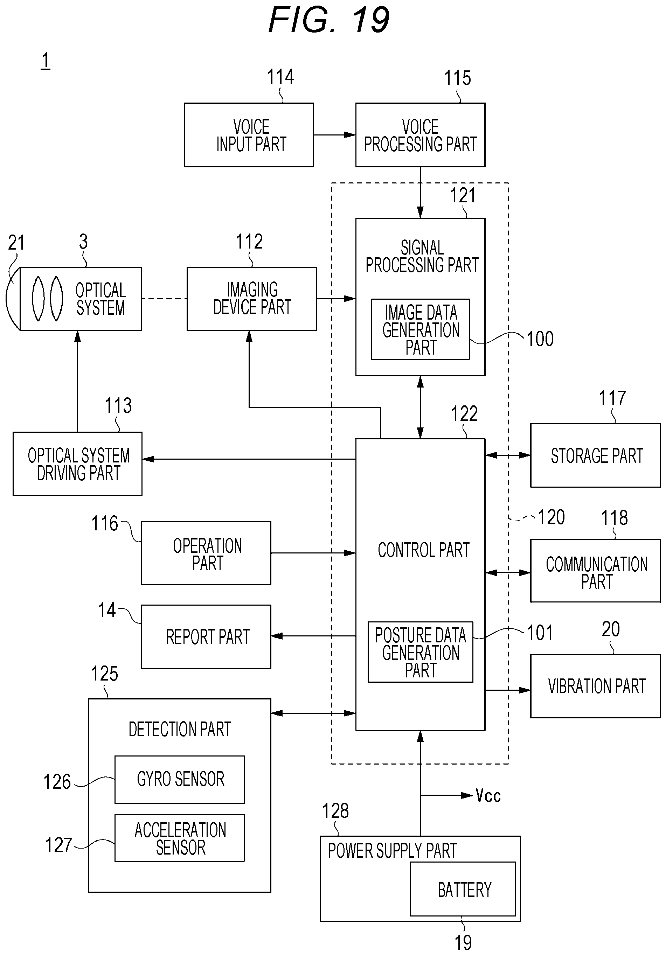

An exemplary internal configuration I of the shooting apparatus 1 will be described with reference to Fig. 19.

As illustrated in Fig. 19, the shooting apparatus 1 includes the optical system 3, an imaging device part 112, an optical system driving part 113, a voice input part 114, a voice processing part 115, an operation part 116, a storage part 117, a communication part 118, a signal processing part 121, a control part 122, a detection part 125, a power supply part 128, the vibration part 20, and the report part 14.

At first, the optical system 3, the imaging device part 112, and the signal processing part 121 are provided as shooting parts for shooting an image by a lens optical system and generating image data.

The optical system 3 is configured of the fisheye lens 21, a focus lens, a condensing lens, and the like. It may further include a zoom lens or a diaphragm mechanism. A light from an object is condensed into the imaging device part 112 by the optical system 3.

The fisheye lens 21 is directed for condensing a light by projection (such as equidistant projection) other than central projection and guiding it to the imaging device part 112 in the subsequent phase. Additionally, the projection system of the fisheye lens 21 is not limited to equidistant projection, and may employ any projection other than central projection. For example, orthogonal projection or stereographic projection may be employed.

Further, an image shot by use of the fisheye lens 21 is included in the scope of wide-angle images.

The imaging device part 112 has an imaging device of charge coupled device (CCD) type, complementary metal oxide semiconductor (CMOS) type, or the like, for example, and a peripheral circuit system.

The imaging device part 112 performs a correlated double sampling (CDS) processing, an automatic gain control (AGC) processing, or the like, for example, on an electric signal obtained by photoelectric conversion in the imaging device, and further performs an analog/digital (A/D) conversion processing thereon. Furthermore, an imaging signal as digital data is output to the signal processing part 121 in the subsequent phase.

The imaging signal is obtained by an arrangement of the imaging device. The imaging device is configured of a plurality of pixels arranged in a 2D matrix shape, and includes a circular fisheye image as an object image incident via the fisheye lens 21.

The optical system driving part 113 drives the focus lens in the optical system 3 and performs the focus operation under control of the control part 122.

Further, in a case where a diaphragm mechanism or a zoom lens is provided in the optical system 3, the optical system driving part 113 may drive the diaphragm mechanism in the optical system 3 and make exposure adjustment, and may drive the zoom lens and perform the zoom operation under control of the control part 122.

The signal processing part 121 is configured as an image processing processor by a DSP or the like, for example. The signal processing part 121 performs various signal processings on a digital signal (shot image signal) from the imaging device part 112.

For example, the signal processing part 121 performs a noise cancel processing, a color correction processing, a contour emphasis processing, a resolution conversion processing, a codec processing, and the like on the shot image signal.

In the present embodiment, the shooting apparatus 1 shoots a moving picture as normal moving picture or time-lapse moving picture, and thus the signal processing part 121 functions as an image data generation part 100 for generating image data as a moving picture on the basis of the output from the imaging device part 112.

One or more microphones 35 are provided as the voice input parts 114. A voice signal collected by the microphone 35 is subjected to the processings such as amplification, equalization, and AD conversion in the voice processing part 115, and is supplied as digital voice data to the signal processing part 121.

The digital voice data is subjected to the required processings such as digital filter processing, noise cancelation, and encoding in the signal generation part 121, for example, and is recorded as voice data attached to the image data.

The control part 122 is configured of a microcomputer (computation processing apparatus) including a central processing unit (CPU), a read only memory (ROM), a random access memory (RAM), a flash memory, and the like.

The CPU executes the programs stored in the ROM, the flash memory, or the like thereby to totally control the entire shooting apparatus 1.

The RAM is used for temporarily storing data, programs, or the like as a working area for various data processings of the CPU.

The ROM or the flash memory (nonvolatile memory) is used to store the operating system (OS) by which the CPU controls each part, content files such as image files, application programs for various operations, firmware, and the like.

The control part 122 like this controls the operations of each required part for instructing various signal processings in the signal processing part 121, the shooting operation in response to an operation of the shooter or the storage/reproduction operation in the storage part 117, the camera operations such as focus/exposure adjustment, the communication operation with an external device by the communication part 118, and the like.

Further, the control part 122 instructs the signal processing part 121, and outputs the signal-processed image data to the storage part 117 or the communication part 118.

Further, according to the present embodiment, the control part 122 generates posture data indicating a posture of the shooting apparatus 1 on the basis of detection information from the detection part 125. In particular, the posture data is generated corresponding to each frame of the image data (moving picture) generated in the signal processing part 121. That is, the control part 122 functions as a posture data generation part 101 for generating posture data of the casing of the shooting apparatus 1 in response to each frame of the image data. Posture data corresponding to each frame of image data is generated thereby to realize each correction such as blur correction described below.

Additionally, the signal processing part 121 and the control part 122 may be integrated as a one-chip microcomputer 120 or the like.

The storage part 117 stores a moving picture or time-lapse moving picture generated by the signal processing part 121 (image data generation part 100), or image data as still image in a storage medium under control of the control part 122. The storage medium may be removable like a memory card, an optical disc, a magnetic tape, or the like, and may be a stationary hard disk drive (HDD), a semiconductor memory module, or the like.

Further, the storage part 117 may be provided with an encoder or a decoder for performing compression/encoding or decompression/decoding on image data, and may record encoded data in the storage medium.

Further, the storage part 117 stores the posture data generated by the control part 122 (posture data generation part 101) in the storage medium.

The storage part 117 like this is a form of a data output part for outputting the image data and the posture data to the storage medium.

That is, the image data and the posture data are stored in the storage medium, and thus each item of data can be passed to an external device, for example. Therefore, various processings (detailed below) such as edition processing can be performed in the external device. Thus, a program region in which the shooting apparatus 1 performs the processings does not need to be provided in the storage region in the shooting apparatus 1, and the storage region can be reduced.

The communication part 118 makes wired or wireless communication with an external device (not illustrated) under control of the control part 122. That is, it transmits the image data or the posture data to the external device, receives control data from the external device, and the like.

For example, the communication part 118 transmits the image data and the posture data stored in the storage part 117 to the external device under control of the control part 122. Thereby, the shooting apparatus 1 can output the image data and the posture data to the external device (not illustrated), and process the image data as a shot moving picture in the external device by use of the posture data.

Further, as described above, the operations corresponding to the moving picture button 10, the time-lapse button 11, and the function button 12 can be received from the external device via wireless communication or the like.

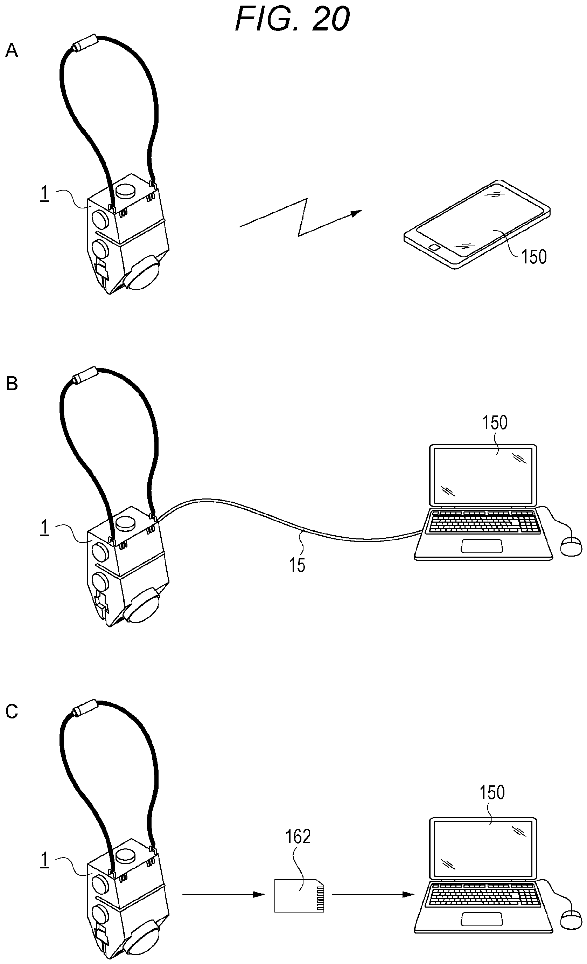

The communication part 118 can transmit the image data and the posture data to an information processing apparatus 150 as an external apparatus via wireless communication as illustrated in Fig. 20A, for example. The wireless communication may be in a communication system conforming to a wireless communication standard or the like such as WiFi or Bluetooth, for example.

Further, the communication part 118 can transmit the image data and the posture data to the information processing apparatus 150 via wired communication as illustrated in Fig. 20B, for example. The wired communication may be made by use of the connector cable 15 such as USB cable, for example.

Further, the communication part 118 as a network communication part may make communication via various networks such as Internet, home network, and local area network (LAN), and may exchange various items of data with a server, a terminal, and the like on the networks.

The communication part 118 like this is a form of the data output part for outputting the image data and the posture data to the external device.

That is, the image data and the posture data can be provided to the external device.

Thus, various processings (detailed below) such as edition processing can be performed in the external device, and a program region for performing the processings does not need to be provided in the storage region of the shooting apparatus 1, and the storage region can be reduced.

Additionally, the image data and the posture data may be transmitted to the information processing apparatus 150 not only via the communication part 118 but also via a storage medium such as a memory card 162 in which the image data and the posture data are stored by the storage part 117 as illustrated in Fig. 20C.

The operation part 116 of Fig. 19 collectively indicates the input functions of inputting operations of the shooter. That is, the respective operation pieces of the moving picture button 10, the time-lapse button 11, the function button 12, and the wireless communication button 37 are collectively denoted as operation part 116.

The operation information indicating the operations is supplied to the control part 122. The control part 122 performs control required for performing the above operation transitions depending on the operation information.

The detection part 125 collectively indicates various sensors. Specifically, it is provided with a gyro sensor 126 for detecting a posture of the shooting apparatus 1, or hand shaking, for example, an acceleration sensor 127 for detecting a moving acceleration or a gravitational direction of the shooting apparatus 1, and the like. The gyro sensor 126 is assumed as a 3-axis sensor for detecting the angular speeds in the x-, y-, and z-axis directions. The acceleration sensor 127 is similarly assumed as a 3-axis sensor for detecting the accelerations in the x-, y-, and z-axis directions.

Further, though not illustrated, the detection part 125 is provided with an illuminance sensor for detecting external illuminance for exposure adjustment or the like, a distance measurement sensor for measuring a distance to an object, and the like.

Various sensors in the sensor part 125 transmit the detection signals to the control part 122, respectively. The control part 30 can perform various controls by use of the information detected by the detection part 125.

In particular, the control part 122 generates the posture data on the basis of the detection signals of the gyro sensor 126 and the acceleration sensor 127 by the function of the posture data generation part 101 as described above.

The vibration part 20 is configured of a vibration reed configuring a vibrator, and its driving system, and generates vibrations under control of the control part 122.

In the present embodiment, the vibration part 20 vibrates for alerting the remaining amount of the battery.

The report part 14 is configured of a LED for emitting a light on the casing 2, an LED driving circuit, and a cover lens as described above, and emits a light under control of the control part 122.

For example, a light is emitted during the moving picture shooting operation thereby to report that moving picture shooting is in progress to the surroundings.

The power supply part 128 generates a required voltage by use of the battery 7 as a voltage source, and supplies operation power Vcc to each part.

In the present embodiment, the control part 122 reports the voltage of the battery 7 thereby to monitor the remaining amount of the battery. Thereby, when the remaining amount of the battery reduces, for example, the vibration part 20 is caused to vibrate thereby to notify of the shooter the shortage of the remaining amount of the battery.

<4. Configuration of information processing apparatus>

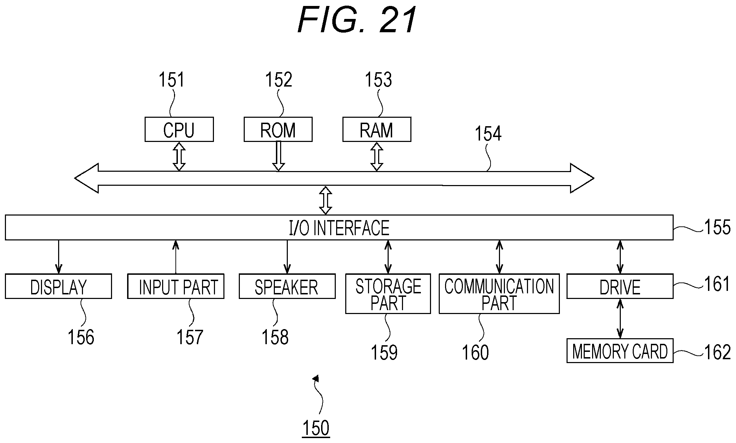

A configuration of the information processing apparatus 150 for receiving the image data and the posture data from the shooting apparatus 1 as illustrated in Fig. 20 will be subsequently described. The information processing apparatus 150 is realized in a hardware configuration as in Fig. 21, for example.

As illustrated in Fig. 21, the information processing apparatus 150 has a central processing unit (CPU) 151, a read only memory (ROM) 152, and a random access memory (RAM) 153.

The CPU 151 performs various processings according to the programs stored in the ROM 152 or the programs loaded from a storage part 159 into the RAM 153. The RAM 153 further stores data and the like required when the CPU 151 performs various processings.

The CPU 151, the ROM 152, and the RAM 153 are mutually connected via a bus 154. The bus 154 is further connected with an I/O interface 155.

The I/O interface 155 is connectable with a display 156 including a liquid crystal panel, an organic electro luminescence (EL) panel, or the like, an input part 157 configured of a keyboard, a mouse, and the like, a speaker 158, the storage part 159 configured of a hard disk drive (HDD), and the like, a communication part 160, and the like.

The display 156 may be integrated with the information processing apparatus 150 or may be separated therefrom. For example, a shot image or a corrected image described below is displayed.

The input part 157 indicates an input device used by a user using the information processing apparatus 150.

The communication part 160 performs communication processings via a network including Internet, or makes communication with a peripheral device. At least the communication part 160 can make wired or wireless communication with the communication part 118 of the shooting apparatus 1.

The I/O interface 155 is connected with a drive 161 as needed and mounted with the memory card 162, and a computer program read from the memory card 162 is installed in the storage part 159 as needed, and data processed in the CPU 151 is stored in the memory card 162.

Of course, the drive 161 may be a recording/reproducing drive for a removable storage medium such as magnetic disc, optical disc, and magnetooptical disc.

In such a hardware configuration, the information processing apparatus 150 according to the embodiment can perform various processings (described below). Specifically, it reproduces an image or edits image data by use of the image data and the posture data acquired from the shooting apparatus 1.

The processings are realized in software activated in the CPU 151. A program configuring the software is downloaded from a network or read from a removable storage medium to be installed in the information processing apparatus 150 of Fig. 21. Alternatively, the program may be previously stored in the storage part 159 such as HDD. When the program is then activated in the CPU 151, each function of the information processing apparatus 150 is performed.

Additionally, the information processing apparatus 150 is not limited to being configured as a single information processing apparatus 150 in the hardware configuration as illustrated in Fig. 21, and may be configured of a plurality of systemized information processing apparatuses. The plurality of information processing apparatuses may be systemized via LAN or the like, or may be arranged at remote places via virtual private network (VPN) or the like using Internet or the like. The plurality of information processing apparatuses may include an information processing apparatus usable in a Cloud computing service.

Further, the information processing apparatus 150 can be realized as a personal computer of stationary type, notebook type, or the like, or a portable terminal such as tablet terminal or Smartphone.

Various electronic devices such as image edition apparatus, record/reproduction apparatus, and TV receiver are configured as in Fig. 21 thereby to function as the information processing apparatus 150.

<5. Posture data>

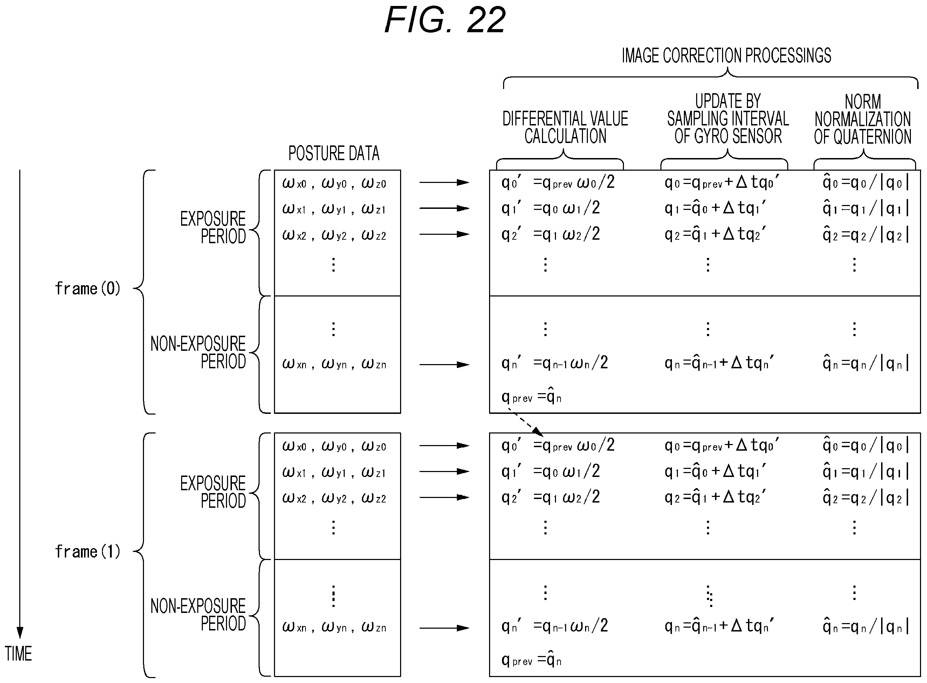

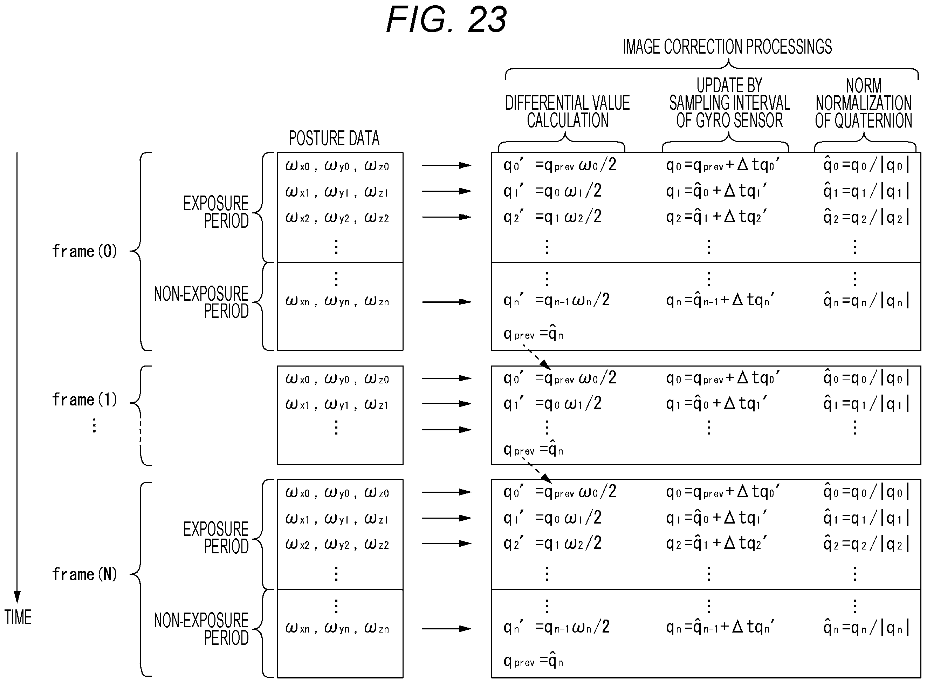

The posture data generated by the control part 122 of the shooting apparatus 1 will be described with reference to Fig. 22 and Fig. 23.

The posture data indicates a posture of the casing 2 of the shooting apparatus 1, and is generated by the posture data generation part 101 provided in the control part 122. The posture data may be angular speed data measured by the gyro sensor 126, acceleration data measured by the acceleration sensor 127, or the like, for example.

Fig. 22 is a diagram illustrating the posture data generated by the control part 122 of the shooting apparatus 1, and various image correction processings performed by the external information processing apparatus 150 which receives the posture data.

The posture data corresponding to each frame period is generated for the image data as a moving picture in which a plurality of frames is consecutive.

Fig. 22 illustrates two consecutive frame periods of one frame assumed as frame (0) and its subsequent frame assumed as frame (1). The respective detection signals of the three axes acquired from the gyro sensor 126 are sampled in each frame thereby to obtain angular speed data $\omega x0$, $\omega y0$, and $\omega z0$ at that time.

Additionally, though not illustrated, the respective detection signals of the three axes by the acceleration sensor 127 are similarly sampled to obtain acceleration data ax0, ay0, and az0 at that time.

The control part 122 generates the angular speed data $\omega x0$, $\omega y0$, and $\omega z0$ and the acceleration data ax0, ay0, and az0 as posture date at one sample time.

The control part 122 generates such posture data at a predetermined sample timing.

The generated posture data is supplied to the storage part 117, and is stored together with the image data. It is then associated with the image data and output to the external information processing apparatus 150 by the communication part 118 or a storage medium.

The information processing apparatus 150 makes blur correction, gravitational direction correction, or the like on the image data by use of the posture data acquired from the shooting apparatus 1. For the difference therebetween, various processings are performed on the posture data thereby to obtain necessary posture information as illustrated in Fig. 22. The image correction processings are, for example, a differential value calculation processing, a processing of updating by a sampling interval of the gyro sensor 126, a quaternion norm normalization processing, or the like.

Additionally, the control part 122 may calculate such differential value or the norm normalization value, and transfer the posture data including them to the information processing apparatus 150.

Here, the control part 122 generates the posture data at one or more sample timings for one frame period of the image data being shot, for example.

For example, it is assumed that the posture data is generated once in one frame period. It is further assumed that the posture data is generated a plurality of times in one frame period as illustrated in Fig. 22 for information indicating more precise posture variations.

Additionally, the exposure period and the non-exposure period in Fig. 22 indicate an exposure period and a non-exposure period of the imaging device determined by an electronic shutter speed of the imaging pixels of the imaging device part 112.

A period of each frame determined by a predetermined frame frequency can be divided into an exposure period and a non-exposure period, where the exposure period is a period in which a light passing through the optical system 3 is exposed to the imaging device part 112, and varies depending on the electronic shutter speed. The frame period is constant, and thus the non-exposure time is shorter as the exposure period is longer, and the non-exposure time is longer as the exposure period is shorter.

In the example of Fig. 22, the sampling rate for the detection signals by the gyro sensor 126 is set at a higher frequency rate than the frame rate, and the posture data is generated a plurality of times in one frame period.

Additionally, the posture data is generated at a constant cycle irrespective of the exposure period and the non-exposure period.

In this way, the control part 122 (posture data generation part 101) is assumed to generate the posture data a plurality of times in one frame period of the image data generated by the image data generation part 100. The detection data associated with the posture by the sensor is sampled at a higher frequency sampling arte than a frame synchronous signal (vertical synchronous signal) to generate the posture data so that the posture data is information indicating a posture change during one frame period.

For example, a posture change in a frame period can be detected, and thus the posture data is usable for rolling distortion correction.

Additionally, the posture data is generated per sample timing even in the non-exposure period since a posture difference per certain time is accumulated thereby to be information indicating the amount of displacement from the initial posture.

The image data obtained in the shooting apparatus 1 is a fisheye image. A cutout position of the fisheye image is changed on a virtual sphere thereby to make blur correction, and thus the cutout position is reversely displaced relative to the direction and amount of blur in order to do so.

In this case, absolute posture information of the shooting apparatus 1 is required with reference to a posture (such as in the shooting direction in a posture at the start of shooting). In order to do so, posture data (information indicating an angular change) obtained at each timing needs to be accumulated.

According to the fact, assuming that the posture data is generated at a higher sampling rate than the frame rate, if the posture data stops being generated in the non-exposure period, a timing when the posture cannot be displaced is caused. Thereby, the posture information as absolute position is inaccurate. Thus, even the posture data synchronized with the moving picture frames is generated irrespective of the frame operations including the electronic shutter speed and the posture data is generated at a predetermined sampling rate, thereby always calculating the accurate position information for blur correction.

As another example, generating the posture data in a case where a time-lapse moving picture is shot for generating an intermittent frame moving picture will be described with reference to Fig. 23.

At the time of time-lapse moving picture shooting, the image data is generated at a sufficiently long interval for the frame rate. That is, moving picture data is generated by intermittent frames.

frame (0) to frame (N) as shot frames are illustrated in the example of Fig. 23, where frame (0) and frame (N) are valid frames (frames recorded as image data) and frame (1) to frame (N-1) are invalid frames not included in the image data.

For example, in the time-lapse moving picture shooting at an interval of about three seconds for a frame rate of 30 frame per second (fps), first shooting of valid frame (0) to shooting of next valid frame (90) is performed through invalid frame (1) to frame (89). The next valid frame to frame (90) is frame(180) .

The frames included and recorded in the image data as a time-lapse moving picture are only the valid frames, and are frame(0), frame(90), frame(180), · · · in this case.

As illustrated in Fig. 23, the angular speed data keeps being acquired by sampling the detection signals of the gyro sensor 126 in each valid frame period and each invalid frame period. Further, though not illustrated, the acceleration data also keeps being acquired by sapling the detection signals of the acceleration sensor 127. The posture data is then generated at each time.

That is, in a case where the image data generation part 100 generates the image data as an intermittent frame moving picture by time-lapse shooting, the posture data generation part 101 generates the posture data in both the valid frame period and the invalid frame period.

The posture data is generated also in the invalid frame period, a posture difference at each time can be accumulated irrespective of the valid frame period/invalid frame period to be information by which the amount of displacement can be accurately found from the initial posture.

Additionally, the same sampling rate of the gyro sensor 126 may be used for the valid frames and the invalid frames, but it is not essential. For example, a lower sampling rate may be used in the invalid frame period.

That is, in a case where the signal processing part 121 (image data generation part 100) generates the image data as an intermittent frame moving picture, the control part 122 (posture data generation part 100) may generate the posture data in one frame period less times in the invalid frame period than in the valid frame period.

The detection information of the gyro sensor or the acceleration sensor is sampled at a higher rate than the frame rate thereby to generate the posture data in order to cope with rolling distortion. If the posture data at as small line internals as possible (as many times as possible in one frame period) is present, accordingly rolling distortion can be corrected with higher accuracy.

On the other hand, the posture data corresponding to one or more times per frame is enough for detecting a camera posture per frame unless rolling distortion correction is considered. Then, in the case of a time-lapse moving picture, the posture data in a frame period not in use cannot be used for rolling distortion. Thus, the sampling rate is lowered in the invalid frame period, thereby achieving a reduction in consumed power of the camera and a reduction in the amount of the posture data.

Additionally, in a case where the condition that at least one items of posture data corresponding to one frame is always generated is met, the sampling rate in the invalid frame period is assumed to be at least equal to the frame synchronous signal (vertical synchronous signal).

The shooting apparatus 1 according to the present embodiment shoots a moving picture such as semispherical image or spherical image by the optical system 3 using a fisheye lens in a non-central projection system. In this case, the posture data of the casing 2 corresponding to each frame of the moving picture or the posture data of the casing 2 corresponding to each sample timing of the gyro sensor 126 is output as described above. The posture data at a corresponding timing for each frame is obtained in this way thereby to process the image data as a moving picture later by use of the posture data.

Further, the shooting apparatus 1 includes the storage part 117 and the communication part 118 as data output parts.

The storage part 117 stores the image data and the posture data in a storage medium. For example, the posture data can be stored together with the image data by use of an incorporated card medium or the like. Further, the communication part 118 can transmit the image data and the posture data to the external device (information processing apparatus 150).

That is, the image data generated by the image data generation part 100 and the posture data generated by the posture data generation part 101 are output to the external device in the wired or wireless communication processing. Alternatively, the image data and the posture data can be passed via a storage medium such as the memory card 162.

Thereby, the external device (information processing apparatus 150) can acquire the image data and the posture data together, and the external device can process the image data as a moving picture later by use of the posture data.

According to the present embodiment, the posture data generation part 101 acquires an angular speed change at each time from the detection information of the 3-axis gyro sensor 126, and generates the posture data based thereon.

Further, the posture data generation part 101 acquires a posture change relative to a gravitational direction at each time from the detection information of the 3-axis acceleration sensor 127 or the magnitude of an acceleration on the main body (the casing 2 or each part arranged inside and outside it) of the shooting apparatus 1 by its motion, and generates the posture data based thereon.

Thereby, a fine posture state of the shooting apparatus 1 can be assumed as information indicated per frame.

Additionally, the value of an acceleration on the main body of the shooting apparatus 1 can be information indicating an active motion of the main body of the shooting apparatus 1, information for achieving reliable estimation of the gravitational direction, or an element for determining whether or not to make gravitational direction correction described below.

Further, according to the present embodiment, the posture data may include not both the angular speed data and the acceleration data but either of them. Further, 1- or 2-axis angular speed data or acceleration data may be employed.

Further, in Fig. 22 and Fig. 23, the angular speed data or the acceleration data obtained as a detection signal of the gyro sensor 126 or the acceleration sensor 127 is handled as the posture data, but data obtained by performing each image correction processing on the angular speed data or the acceleration data may be assumed as posture data.

<6. Exposure adjustment>

The shooting apparatus 1 according to the present embodiment uses the posture data for exposure control. Exposure control will be described herein assuming that the electronic shutter speed is adjusted and the AGC processing is gain-adjusted.

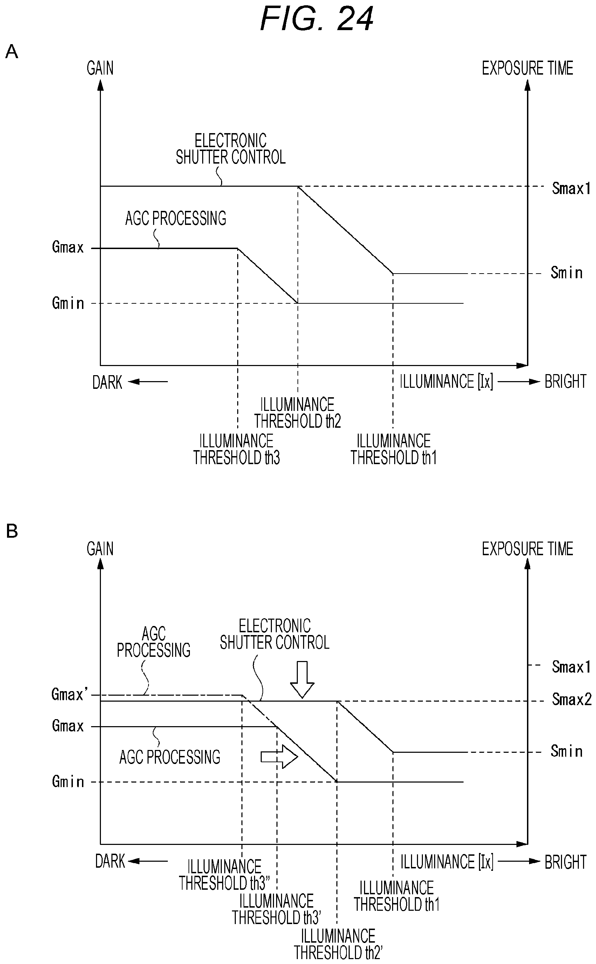

It will be specifically described with reference to Fig. 24.

Fig. 24A and Fig. 24B illustrate exposure control characteristics. The horizontal axis in each Figure indicates illuminance, and the vertical axis indicates an exposure time of the electronic shutter and an AGC gain.

In a case where the illuminance is sufficiently high or in a case where the illuminance Ix is higher than an illuminance threshold th1, the exposure time is the shortest within the adjustment range at a minimum value Smin, and the gain of the AGC processing is at a minimum value Gmin within the adjustment range.

On the other hand, in a case where the amount of light is lacking, the exposure time of the electronic shutter is prolonged or the gain of the AGC processing is increased thereby to make exposure adjustment. However, exposure adjustment by increasing the gain for an output signal from the imaging device is disadvantageous in noise or the like, and thus electronic shutter control is first performed.

According to the present embodiment, in a case where a change in the posture data is small, exposure adjustment is first made by the characteristics of Fig. 24A.

In a case where the illuminance Ix is higher than an illuminance threshold th2 and is equal to or lower than the illuminance threshold th1, the exposure time is prolonged depending on the illuminance Ix. At this time, the gain of the AGC processing remains at the minimum value Gmin.

A maximum value of the exposure time for exposure adjustment is set at "Smax1". It is assumed that when the illuminance Ix is at the illuminance threshold th2, the exposure time reaches the maximum value Smax1.

In this case, a further reduction in illuminance is not handled by shutter speed control, and is handled by the AGC gain.

In a case where the illuminance Ix is higher than an illuminance threshold th3 and is equal to or lower than the illuminance threshold th2, the exposure time remains at the maximum value Smax1 and the gain of the AGC processing is changed. That is, the gain is increased depending on the illuminance Ix.

A maximum value of the AGC gain for exposure adjustment is set at "Gmax". It is assumed that when the illuminance Ix is at the illuminance threshold th3, the AGC gain reaches the maximum value Gmax.

When the illuminance Ix is equal to or lower than the illuminance threshold th3, the exposure time is at the maximum value Smax1 and the AGC gain is at the maximum value Gmax.

On the other hand, Fig. 24B illustrates an example in a case where a change in the posture data is large. Specifically, it is determined that a change in the posture data is large in a case where the change amount of the posture data per unit time is at a threshold or higher, for example. In this case, exposure adjustment is made by the characteristics of Fig. 24B.

In comparison with Fig. 24A, the maximum value Smax1 of the exposure time is changed to a maximum value Smax2. Further, the illuminance thresholds th2 and th3 for determining a period of gain control are changed to illuminance thresholds th2' and th3', respectively.

In a case where the illuminance Ix is higher than the illuminance threshold th1, the exposure time is at the maximum value Smin and the gain of the AGC processing is at the minimum value Gmin.

In a case where the illuminance Ix is higher than the illuminance threshold th2' (> illuminance threshold th2) and is equal to or lower than the illuminance threshold th1, the gain of the AGC processing remains at Gmin and the exposure time is adjusted depending on the illuminance Ix.

In a case where the illuminance Ix is higher than the illuminance threshold th3' (> illuminance threshold th3) and is equal to or lower than the illuminance threshold th2, the exposure time remains at Smax2 (< Smax1) and the gain of the AGC processing is adjusted depending on the illuminance Ix.

In a case where the illuminance Ix is equal to or lower than the illuminance threshold th3', the exposure time is at the maximum value Smax2 and the AGC gain is at the maximum value Gmax.

Additionally, a solid line indicating the AGC processing in the example of Fig. 24B indicates that the maximum value Gmax is at the same level as in Fig. 24A, but the gain maximum value may be higher to be a maximum value Gmax' as indicated in a chain line. Further, the illuminance threshold th3' is accordingly assumed as an illuminance threshold th3". In the case of Fig. 24B, the maximum value Smax1 of the exposure time is changed to the maximum value Smax2 and the gain maximum value has to be accordingly increased since the total gain in a dark scene is lower and consequently a resultant image is dark.

Additionally, the maximum value Smax1 of the exposure time is lowered to the maximum value Smax2 in the adjustment range and the illuminance threshold th2' is accordingly increased over the illuminance threshold th2 to be handled by gain adjustment in order to achieve a smaller increase in the exposure time for increasing brightness of a shot image than in a case where a change in the posture data is small.

The maximum value Smax2 of the exposure time or the illuminance thresholds th3' and th2' are set in consideration of disadvantages in noise due to an increase in the AGC gain and influences of blurs due to the prolonged exposure time.

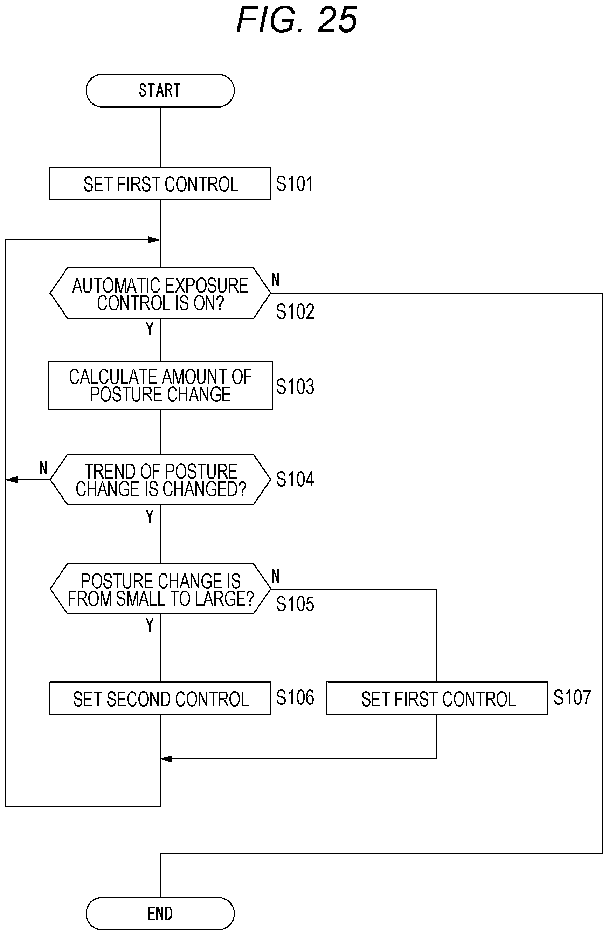

Specific processings for making electronic shutter speed adjustment and gain adjustment as illustrated in Fig. 24A and Fig. 24B will be illustrated in Fig. 25.

In automatic exposure control, the control part 122 first performs a first control setting processing in step S101. In the first control setting processing, the illuminance threshold th1, the illuminance threshold th2, and the illuminance threshold th3 are set to be used as the determination thresholds of the illuminance Ix. Further, in the first control setting processing, the maximum value of electronic shutter control is set at "Smax1". Thereby, automatic exposure adjustment is made by the control characteristics illustrated in Fig. 24A for a small change in the posture data (posture change).

Subsequently, the control part 122 determines whether or not automatic exposure control is ON in step S102. In a case where automatic exposure control is OFF, a series of processings illustrated in Fig. 25 end.

On the other hand, in a case where automatic exposure control is ON, the control part 122 performs a posture change amount calculation processing in subsequent step S103. The posture change amount can be calculated from the posture data measured by the detection part 125 such as the gyro sensor 126 or the acceleration sensor 127, for example.

The control part 122 then determines whether or not a trend of the posture change has changed in step S104. The trend of the posture change may be a large posture change or a small posture change, where it is determined that the "posture change is large" in a case where the change mount of the posture data is higher than a threshold and it is determined that the "posture change is small" in a case where the change amount of the posture data is equal to or lower than the threshold. Then, in a case where the trend of the previous posture change is determined as a "large posture change" and the trend of the current posture change is determined as a "small posture change" from the posture change amount acquired in immediately previous step S103, it is determined that the trend of the posture change has changed. Similarly, also in a case where the trend of the posture change has changed from a "small posture change" to a "large posture change", it is determined that the trend of the posture change has changed.

In a case where the trend of the posture change has not changed, the control part 122 returns to the processing in step S102.

On the other hand, in a case where the trend of the posture change has changed, the control part 122 determines whether or not the posture change has changed from small to large in subsequent step S105.

In a case where the posture change has changed from small to large, the control part 122 performs a second control setting processing in step S106.

In the second control setting processing, the illuminance threshold th1, the illuminance threshold th2', and the illuminance threshold th3' are set to be used as the determination thresholds of the illuminance Ix. Further, in the second control setting processing, the maximum value of the exposure time in electronic shutter control is set at "Smax2". Thereby, automatic exposure adjustment is made by the control characteristic illustrated in Fig. 24B for a large posture change.

On the other hand, in a case where the trend of the posture change has changed from large to small, the control part 122 performs the first control setting processing in step S107. The processing contents in step S107 are similar to the processing contents in step S101.

The control part 122 which has performed step S106 or step S107 returns to the processing in step S102.

As described with reference to Fig. 24 and Fig. 25, the shooting apparatus 1 according to the present embodiment performs electronic shutter speed control for controlling the exposure time in the imaging device part 112 as exposure adjustment, and switches the adjustment range of the exposure time of electronic shutter speed control between a first range (Smin to Smax1) and a second range (Smin to Smax2) in which the longest exposure time is set to be shorter than the first range on the basis of the detection information of the gyro sensor 126 or the acceleration sensor 127.

According to the present embodiment, the posture data is generated at a sampling rate higher than the frame rate, and the detection information of the gyro sensor 126 or the acceleration sensor 127 is always confirmed during shooting so that the trend of the posture change can be known.

In a case where the posture change is large, as the exposure time is longer, a blur is more likely to occur in an image. Thus in a case where the posture change is large, exposure adjustment is made in the second range, thereby preventing a blur from occurring.

<7. Microphone>

The shooting apparatus 1 is configured such that the microphones 35 are arranged inside the casing 2 and the holes for capturing voice are formed at the positions corresponding to the microphones 35 on the outer periphery of the casing 2.

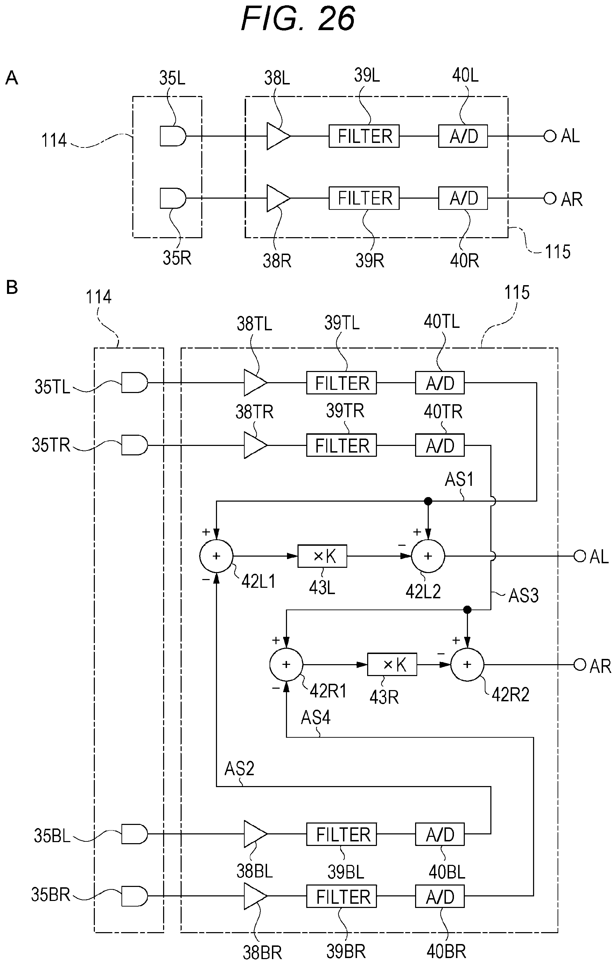

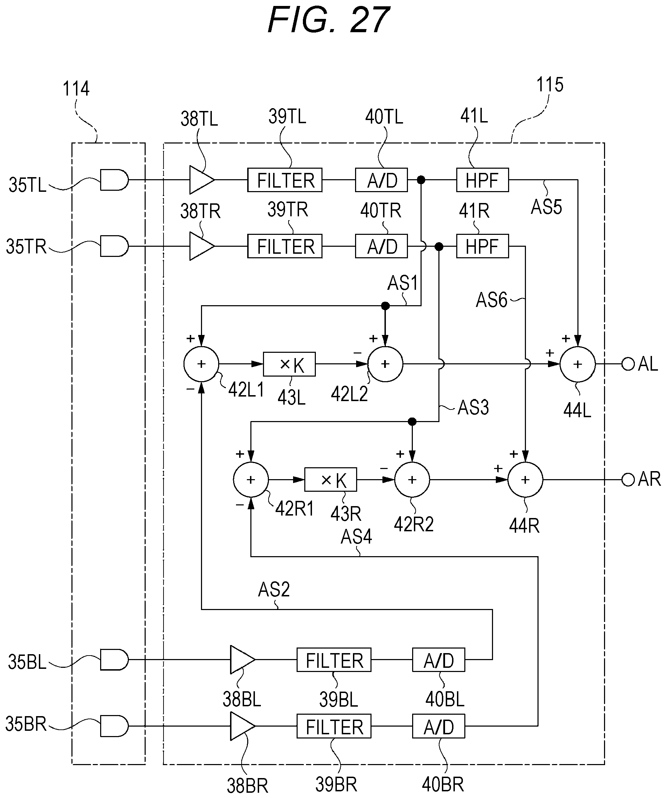

Fig. 26A, Fig. 26B, and Fig. 27 illustrate exemplary block diagrams of the voice input part 114 and the voice processing part 115.

Fig. 26A illustrates an exemplary configuration in a case where two microphones 35, 35 are provided apart on the right and left sides at the upper part of the casing 2 as illustrated in Fig. 14.

The upper left one is assumed as microphone 35L and the upper right one is assumed as microphone 35R. A pair of microphones 35R and 35L is provided as the voice input part 114.

An analog voice signal input from the microphone 35L provided on the upper left of the casing 2 is amplified by a microphone amplifier 38L, restricted in its bandwidth by a filter 39L, digitalized by an A/D converter 40L, and input as voice data AL of the left channel into the signal processing part 121 in the subsequent phase.

An analog voice signal input from the microphone 35R provided on the upper right of the casing 2 is similarly input as voice data AR of the right channel into the signal processing part 121 via a microphone amplifier 38R, a filter 39R, and an A/D converter 40R.

The shooting apparatus 1 includes the microphones 35, 35 in the configuration illustrated in Fig. 26A thereby to generate the image data such as moving picture having stereo voice data.

The microphones 35, 35 are then arranged at the upper part of the casing 2 so that the shooter's voice input from above the casing 2 or the like is easily captured. Thereby, the highly-convenient shooting apparatus 1 can be provided to the shooter who shoots an explanation moving picture or the like, for example.

Fig. 26B illustrates a possible example in a case where two microphones 35, 35 are provide apart on the right and left sides at the upper part of the casing 2 and two microphones 35, 35 are provided apart on the right and left sides at the lower part of the casing 2 as illustrated in Fig. 1.

The upper left one on the casing 2 is assumed as microphone 35TL, the upper right one is assumed as microphone 35TR, the lower left one on the casing 2 is assumed as microphone 35BL, and the lower right one is assumed as microphone 35BR.

An analog voice signal input from the microphone 35TL provided on the upper left of the casing 2 is input into a subtractor 42L1 via a microphone amplifier 38TL, a filter 39TL, and an A/D converter 40TL.

On the other hand, an analog voice signal input from the microphone 35BL provided at the lower left of the casing 2 is input into the subtractor 42L1 via a microphone amplifier 38BL, a filter 39BL, and an A/D converter 40BL.

In the subtractor 42L1, the voice signal input from the microphone 35BL is subtracted from the voice signal input from the microphone 35TL. For example, part of the shooter's voice or the like input from above the casing 2 is extracted. On the other hand, voice issued from a distance is output as substantially the same voice signals via the upper microphone 35TL and the lower microphone 35BL, and thus they are canceled in the subtractor 42L1 and remain little . That is, a difference between the voice signals input via the lower microphone and the upper microphone is extracted in the subtractor 42L1.

The difference signal extracted in the subtractor 42L1 is multiplied by a coefficient K by a multiplier 43L. Additionally, the coefficient K is any value between 0 and 1, and is assumed at 0.5, for example.

The multiplied difference signal is subtracted from the voice signal input from the upper microphone 35TL in a subsequent subtractor 42L2. Thereby, the difference between the upper microphone 35TL and the lower microphone 35BL is reduced from the signal output from the subtractor 42L2. The signal is input as the voice data AL of the left channel into the signal processing part 121 in the subsequent phase.

A difference between the extracted input signals of the upper and lower microphones is similarly reduced from an analog voice signal input from the microphone 35TR provided at the upper right of the casing 2 and an analog voice signal input from the microphone 35BR provided at the lower right of the casing 2, and the resultant signal is input as the voice data AR of the right channel into the signal processing part 121 in the subsequent phase.

That is, in the configuration of Fig. 26B, for example, assuming output AS1 of the A/D converter 40TL and output AS2 of the A/D converter 40BL, the voice data AL of the left channel can be expressed as:

$$AL = AS1 - (AS1 - AS2) \times K$$

Similarly, assuming output AS3 of the A/D converter 40TR and output AS4 of the A/D converter 40BR, the voice data AR of the right channel can be expressed as:

$$AR = AS3 - (AS3 - AS4) \times K$$

With the configuration illustrated in Fig. 26B, the voice input signals which have a large difference between the upper and lower microphones, such as shooter's voice, for example, are attenuated.

Thus, it is possible to eliminate a possibility that only the shooter's voice is recorded at high volume and surrounding voices are difficult to listen to, for example.

Fig. 27 illustrates another possible example in a case where microphones 35 are provided at both the upper part and the lower part of the casing 2 as illustrated in Fig. 1.

A signal output from the subtractor 42L2 by use of the voice signals of the upper left microphone 35TL and the lower left microphone 356BL is similar as in Fig. 26B, and the description thereof will be omitted.

In the example illustrated in Fig. 27, the signal (or the signal output from the subtractor 42L2) from which the difference between the input signals of the upper and lower microphones is reduced is added with only the high-frequency component of the upper left microphone 35TL. Specifically, the signal of the microphone 35TL passing through the microphone amplifier 38TL, the filter 39TL, and the A/D converter 40TL is further passed through a high-pass filter (HPF) 41L to extract the high-frequency component, and the high-frequency component and the output signal of the subtractor 42L2 are added in an adder 44L to be input into the signal processing part 121 in the subsequent phase.

That is, in the configuration of Fig. 27, for example, assuming the output AS1 of the A/D converter 40TL, the output AS2 of the A/D converter 40BL, and output AS5 of the HPF 41L, the voice data AL of the left channel can be expressed as:

$$AL = AS1 - (AS1 - AS2) \times K + AS5$$

Similarly, assuming the output AS3 of the A/D converter 40TR, the output AS4 of the A/D converter 40BR, and output AS6 of a HPF 41R, the voice data AR of the right channel can be expressed as:

$$AR = AS3 - (AS3 - AS4) \times K + AS6$$

For example, the use form illustrated in Fig. 5A will be discussed. In this case, the shooter's (wearer's) voice is directly input into the microphones 35TL and 35TR provided at the upper part of the casing 2, but the shooter's voice is more likely to be input into the microphones 35BL and 35BR provided at the lower part via surrounding reflective objects or the like.

The surrounding reflective objects can include the clothes of the shooter which easily absorbs the high-frequency component, or the like.

In a case where the high-frequency component in the voice signals input from the microphones at the lower part are attenuated, a difference in the high-frequency component between the upper microphones and the lower microphones increases, and the high-frequency component is cut in the subtractors 42L2 and 42R2 with the configuration illustrated in Fig. 26B.

With the configuration illustrated in Fig. 27, the high-frequency component may be added again in the adders 44L and 44R, and thus the clear voice signals can be input into the signal processing part 121 in the subsequent phase.

Additionally, the upper right microphone 35TR and the lower right microphone 35BR are similarly processed by use of the microphone amplifiers 38TR and 38BR, the filters 39TR and 39BR, the A/D converters 40TR and 40BR, the subtractors 42R1 and 42R2, a multiplier 43R, the adder 44R, and the HPF 41R, and the detailed description thereof will be omitted.

Additionally, the respective configurations illustrated in Fig. 26A, Fig. 26B, and Fig. 27 are for stereo voice input by the shooting apparatus 1, but a configuration for monaural voice input may be employed.

<8. Exemplary internal configuration II of shooting apparatus>

The shooting apparatus 1 according to the present embodiment generates the posture data corresponding to the image data as described above. In the configuration of Fig. 19, the control part 122 can manage image data generation and posture data generation, and thus the frames of the image data can be associated with the posture data in the internal processing (such as associating the time codes of the frames with the posture data, for example) of the control part 122. However, a control part for controlling image data generation and a control part for posture data generation may be operated in different microcomputers or the like. Then, in this case, it is assumed that the association information of the frames may not be added to the posture data output from the shooting apparatus 1.

In such a case, an exemplary configuration in which the posture data can be associated with the frames in the information processing apparatus 150 which receives the image data and the posture data from the shooting apparatus 1 will be described as an exemplary internal configuration II of the shooting apparatus. This exemplary configuration is directed for associating the image data as a moving picture with the posture data from the data themselves when the information processing apparatus 150 acquires the image data and the posture data.

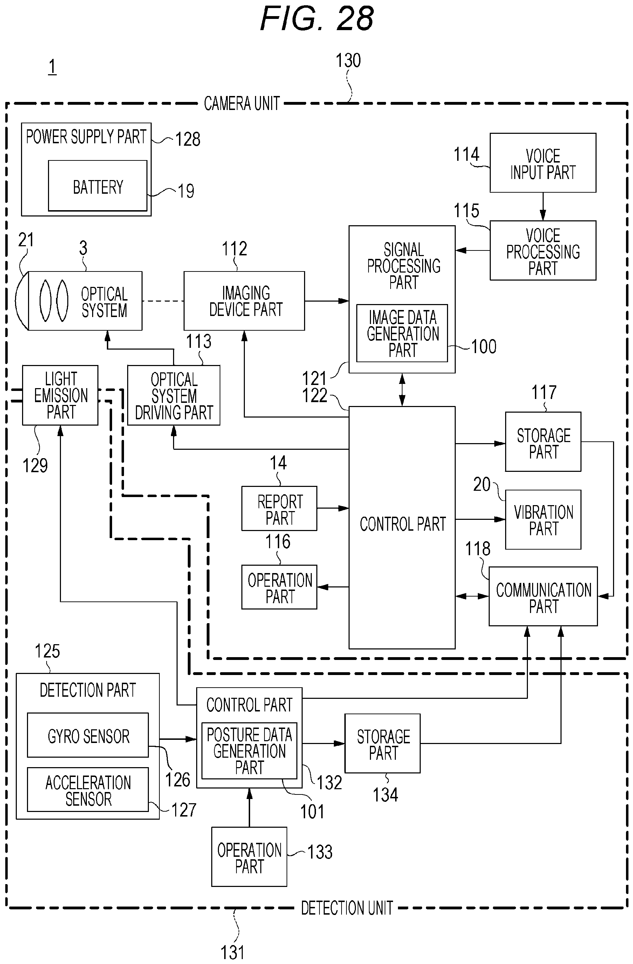

Fig. 28 illustrates a block diagram of the exemplary internal configuration II of the shooting apparatus 1.

The shooting apparatus 1 illustrated in Fig. 28 includes a camera unit 130 and the detection unit 131. The camera unit 130 does not include the detection part 125 among the respective components illustrated in Fig. 19. Further, the control part 122 does not include the function of the posture data generation part 101.

On the other hand, the detection unit 131 includes the detection part 125 having the gyro sensor 126 and the acceleration sensor 127. Further, the detection unit 131 includes a control part 132 having the function of the posture data generation part 101, an operation part 133, and a storage part 134.

The control part 132 generates the posture data indicating a posture of the shooting apparatus 1 on the basis of the detection information from the detection part 125 by the function of the posture data generation part 101.

Further, the detection unit 131 includes a light emission part 129. The light emission part 129 has a LED and its light emission driving circuit, for example, and emits a light for synchronizing the image data and the posture data in response to an instruction of the control part 132. The light emission part 129 functions as a notification part for making a notification for associating the image data with the posture data in response to a trigger.

The light emission part 129 is configured such that the LED is provided in a lens tube of the camera unit 130, for example, and a light emitted by the LED influences part of the image data shot by the imaging device part 112. Specifically, it is configured such that a light emitted from the LED influences an imaging signal of the imaging device part 112. Alternatively, an entire frame image is in a high-luminance state due to light emission by the LED.

In this case, the imaging device part 112 functions as a sensing part for sensing a notification by the light emission part.

Additionally, a light is emitted by the LED in the light emission part 129 not in synchronization with a timing when the camera unit 130 starts shooting, for example. Thus, for example, the shooter performs an operation for starting shooting on the camera unit 130, and then performs an operation for starting generating the posture data on the detection unit 131. Thereby, the light emission part 129 emits a light and the imaging device part 112 generates frame data including pixels with luminance based on the emitted light. Thereby, a frame shot at the start of generating the posture data can be specified by searching the frames of the image data.

The detection unit 131 operates not in synchronization with the camera unit 130, but the control part 132 generates a timing signal for sampling at the same frequency rate as the frame rate of the image data, for example, samples the detection information of the gyro sensor 126 or the acceleration sensor 127, and generates the posture data.

Thus, the posture data is generated at a rate at which one item of posture data corresponds to one frame of the image data shot by the camera unit 130.

Additionally, the operation part 116 of the camera unit 130 includes buttons (such as moving picture button 10) and the like by which the user instructs to start shooting, and the operation part 133 of the detection unit 131 includes buttons and the like by which the user instructs to start generating the posture data.

The posture data generated by the posture data generation part 101 of the control part 132 is transmitted to the storage part 117, and is transmitted to the communication part 118 of the camera unit 130 as needed. The posture data is transmitted together with the image data to the information processing apparatus 150 as an external apparatus, for example. That is, the communication part 118 is assumed as one form of the data output part.

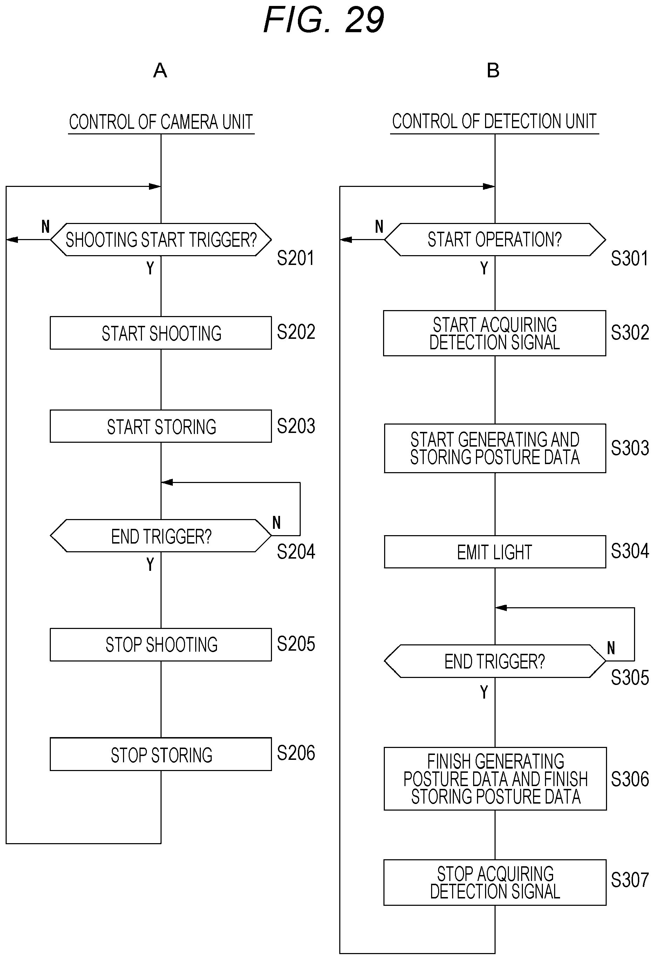

The operations of the camera unit 130 and the detection unit 131 will be specifically described with reference to Fig. 29.

Fig. 29A illustrates an exemplary flowchart of control of the camera unit 130. The control part 122 of the camera unit 130 determines whether or not it has sensed a shooting start trigger in step S201. The shooting start trigger is sensed when the shooter presses the moving picture button 10, the time-lapse button 11, or the like, for example. In a case where the shooting start trigger is not sensed, the control part 122 performs step S201 again.

Additionally, the shooting start trigger may be generated by timer control, remote control, automatic shooting start control when something is detected, or the like other than when the user operates the moving picture button 10 or the time-lapse button 11.

In a case where the control part 122 has sensed the shooting start trigger, it controls the start of shooting in step S202, and controls the start of storing the shot image data in subsequent step S203. Thereby, the image data as a moving picture is stored in the storage part 117.

The control part 122 determines whether or not it has sensed an end trigger in step S204. The processing in step S204 is performed and generating and storing the image data started in the previous step are continued until the control part 122 senses the end trigger.

According to the exemplary mode transitions of Fig. 18, operating the moving picture button 10 or the time-lapse button 11 during moving picture storage is the end trigger. Of course, the end trigger may be caused in other cases such as elapse of a predetermined time, remote operation, automatic shooting/recording end control when something is detected, or the like.

The control part 122 which has sensed the end trigger performs shooting stop control in step S205 and performs control of stopping storing the image data in step S206.

The control part 122 performs a series of processings illustrated in Fig. 29A so that the shooter operates to shoot and to store the image data, for example.

Fig. 29B illustrates an exemplary flowchart of control of the detection unit 131. The control part 132 of the detection unit 131 determines whether or not it has sensed a start operation in step S301. The start operation in this case indicates a user operation on the posture data generation start button in the operation part 133.

In a case where the control part 132 has not sensed the start operation, it performs the processing in step S301 again.

In a case where the control part 132 has sensed the start operation, it starts acquiring a detection signal in step S302. The detection signal is a detection signal associated with a posture output from the gyro sensor 126 or the acceleration sensor 127 as the detection part 125.

The control part 132 then starts generating the posture data and storing the posture data in step S303.

The detection signal is acquired (sampled) in step S302 and the posture data is generated in step S303 on the basis of a timing signal with the same frequency as the vertical synchronous signal used in the camera unit 130.

That is, the control part 132 generates an asynchronous timing signal with the same frequency as the vertical synchronous signal, and acquires the detection signal on the basis of the timing signal. Further, the control part 132 generates the posture data from the detection signal, and stores it in the storage part 134. Thus, one item of posture data corresponding to one frame of the moving picture shot by the camera unit 130 is stored, for example.

Further, the control part 132 causes the light emission part 129 to emit a light in step S304 substantially at the same time with the start of the processings of acquiring the detection signal and generating the posture data. Thereby, a high-luminance part based on the emitted light is formed in a frame in the image data shot by the camera unit 130 at the timing.

Additionally, although steps S302 to S304 are indicated for convenient description, if the light emission control and the start of acquiring the detection signal for generating the posture data are performed substantially at the same time, the order of the processings is not problematic. Further, even if there is some time lag, the temporal difference has only to be fixed. At least the frames influenced by the LED-emitted light in the image data and the posture data indicating a posture of the shooting apparatus 1 at that time have only to be associated later.

The control part 132 determines whether or not it has sensed the end trigger instep S305. It performs the processing in step S305 until it senses the end trigger.

In a case where the control part 132 has sensed the posture data storage end trigger in response to an operation of the shooter or the like, it finishes generating and storing the posture data in step S306, and stops acquiring the detection signal in step S307.

The control part 132 performs a series of processings illustrated in Fig. 29B so that the posture data corresponding to the image data such as moving picture is stored.

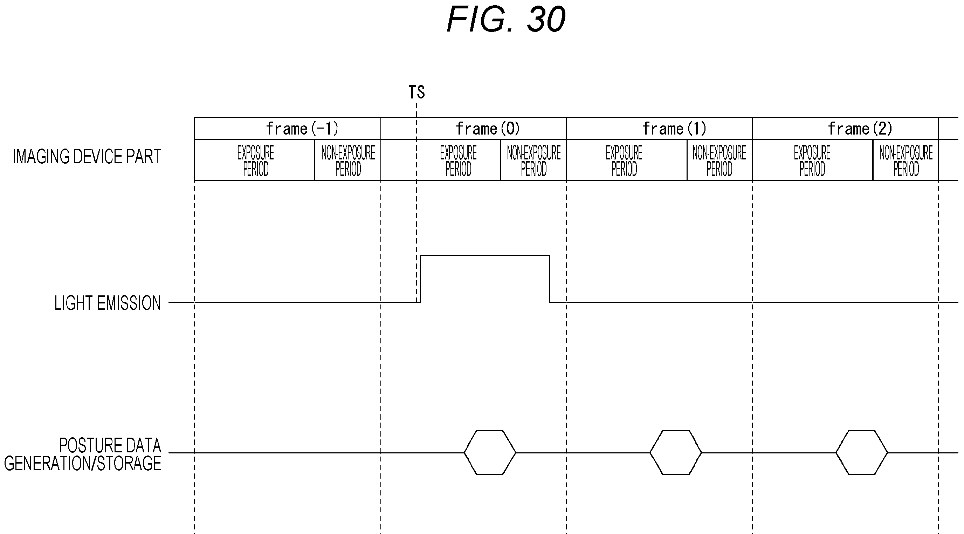

Fig. 30 illustrates a specific timing chart of the shooting operation and the operations of the detection unit 131.

In the above processings, a light is emitted by the light emission part 129 or the posture data is generated as in Fig. 30, for example. That is, it is assumed that when each frame is shot and recorded in the camera unit, the start operation is performed at a timing TS. Steps S302, S303, and S304 are accordingly performed. That is, a LED light is emitted by the light emission part 129, the posture data starts being generated/stored, and the posture data subsequently keeps being generated/stored at the same cycle as the frame cycle.

Specifically, when the shooter presses the moving picture button 10 of the shooting apparatus 1, the shooting apparatus 1 enters the "moving picture shooting state" and continuously repeats the exposure time and the non-exposure time so that each frame as image data is generated/stored. When the shooter performs an operation for starting acquiring the posture data by the detection unit 131 of the shooting apparatus 1 in this state, the light emission part 129 emits a light once in response to the operation timing, and the posture data starts being detected and stored at substantially the same timing as the light emission.

The light emission part 129 emits a light not in synchronization with the shooting operation of the camera unit 130 with the configuration illustrated in Fig. 28, and thus a timing to emit a light is different each time in the exposure period and the non-exposure period of a frame of the image data as illustrated in Fig. 30. In the example illustrated in Fig. 30, a light is emitted during the exposure period. Further, the light emission period is set to be longer than the non-exposure period. This is because the exposure period of each frame is asynchronous with the light emission timing and thus a light is emitted for a longer time than the non-exposure period so that a light is more accurately emitted in at least part of the exposure period. Further, in a case where the non-exposure period is the longest, or even in a case where the electronic shutter speed is the lowest, a light may be emitted for a longer time than the maximum time duration of the non-exposure period such that the light emission part 129 accurately emits a light in the exposure period.

However, it is desirable that the light emission period of the light emission part 129 is within the duration of one frame period. This is because if a light is emitted such a long time, the frames influenced by the light emission increase.

The posture data generation part 101 of the detection unit 131 detects and stores the posture data according to light emission of the light emission part 129. The posture data is detected and stored not in synchronization with the exposure period and the non-exposure period of each frame, and thus the posture data may be detected and stored in the non-exposure period, or the posture data may be detected and stored over two frames at one time.

Also with the exemplary configuration of Fig. 28 for performing the above operations, the shooting apparatus 1 shoots a moving picture such as semispherical image or spherical image by the optical system 3 using the fisheye lens in a non-central projection system. In this case, the camera unit 130 and the detection unit 131 perform the processings of Fig. 29A and Fig. 29B, respectively, thereby to output the posture data of the casing 2 corresponding to each frame of the moving picture.

The posture data at a corresponding timing per frame is acquired so that the image data as a moving picture can be processed later by use of the posture data.

In particular, the posture data generation part 101 processes to form information for head frame identification in the frames of the image data when it starts generating the posture data, and thus which frame the posture data starts being generated with reference to can be known from the image data as a moving picture. Thereby, the device which has acquired the image data and the posture data can specify the head frame of the moving picture corresponding to the posture data.

Then, as exemplary information formation for head frame identification, the imaging device part 112 includes the light emission part 129 for emitting a light to be exposed and the posture data generation part 101 causes the light emission part 129 to emit a light so that the image data with luminance due to the light emission is formed as information for head frame identification in the frame of the image data shot at the light emission timing.

That is, the light emission part 129 is caused to emit a light so that a high-luminance frame of the image, which is different from an object light, is formed in the image data.

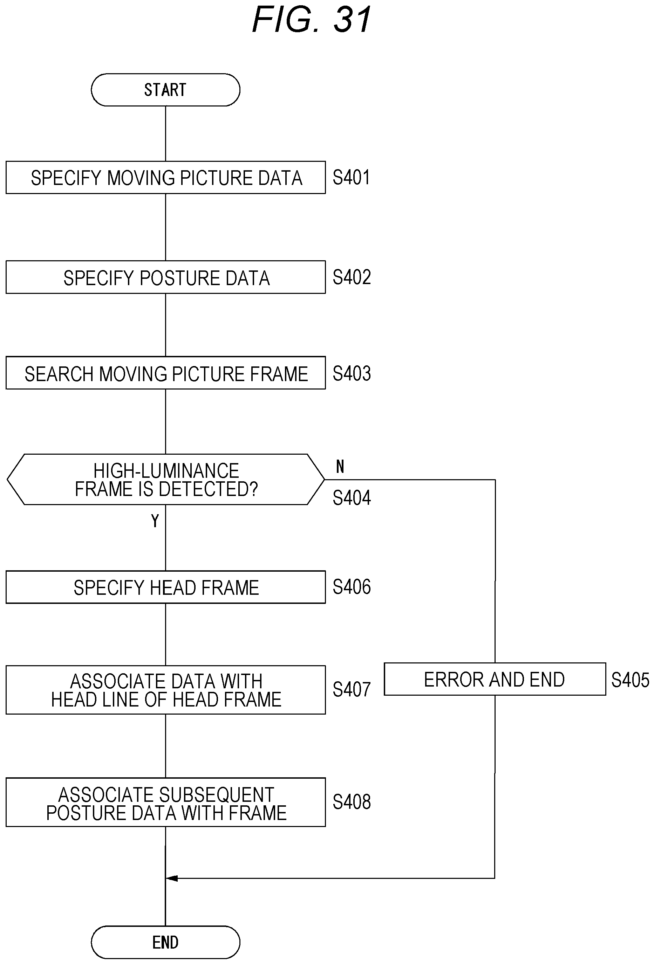

Thereby, the information processing apparatus 150 which has acquired the image data and the posture data can specify the head frame of the moving picture data corresponding to the posture data by searching the high-luminance frame of the image as illustrated in Fig. 31.

Additionally, with the configuration illustrated in Fig. 28, the detection unit 131 is attached on an existing camera unit thereby to easily manufacture the shooting apparatus 1 according to the present embodiment.

Further, as another form, the camera unit 130 and the detection unit 131 are separately provided to the shooter and the shooter can attach or detach them as needed.

Further, the posture data generation part 101 generates the posture data once per frame on the basis of the timing signal asynchronous with the image data generation part 100.

That is, the shooting apparatus 1 is formed such that a shooting system including the image data generation part 100 for moving picture and a posture data generation system including the posture data generation part 101 are asynchronous systems.

Thereby, the shooting apparatus 1 having the posture data generation system can be easily realized. In this case, the head frame of the moving picture data corresponding to the posture data can be specified by marking and the posture data is generated once per frame so that the correspondence between the frames and the posture data is not disturbed even in the asynchronous manner.

Additionally, the frame synchronous signal of the image data generation part 100 is asynchronous with the timing signal used by the posture data generation part, but they have substantially the same frequency, and even if moving picture shooting is continued for a certain time, the sample timing is not offset over one frame.

Further, as described in Fig. 30, the light emission period of the light emission part 129 is set within one frame period.

The light emission part 129 is caused to emit a light thereby to form a high-luminance frame of the image, but the image is different from the object light or is originally unnecessary, and thus the light emission period is shortened.

Specifically, the light emission period is set within one frame period so that one frame or two frames are high-luminance frames of the image and more unnecessary frames can be prevented from occurring.

Further, in the case of the exemplary configuration of Fig. 28, the shooting apparatus 1 is configured such that generating the image data to be stored as a moving picture by the image data generation part 100 and generating the posture data corresponding to the image data stored as a moving picture by the posture data generation part 101 are started by different start triggers, respectively.

For example, the recording start operation and the posture recording start operation are provided as different operations to the user.

Thereby, the user can arbitrarily select whether or not to record the posture during recording.

Also with the exemplary configuration of Fig. 28, the shooting apparatus 1 includes the data output part (the communication part 118 or the storage part 117), and can pass the image data and the posture data to the external device (information processing apparatus 150).

Thereby, the external device (information processing apparatus 150) can acquire the posture data together with the image data, and can perform the processings using the posture data.

The information processing apparatus 150 which has received both the image data and the posture data associates the image data with the posture data. It will be specifically described with reference to Fig. 31.

The information processing apparatus 150 specifies the moving picture data in step S401. The processing is performed when the user who views a moving picture or the like shot by the shooting apparatus 1 selects the image data such as moving picture which he/she wants to view, for example.

Additionally, when the information processing apparatus 150 acquires both the image data and the posture data, it may automatically perform the processing of associating the data of Fig. 31.

After specifying the moving picture data, the information processing apparatus 150 specifies the posture data corresponding to the moving picture data in step S402.

Subsequently, the information processing apparatus 150 searches a specific frame from the respective moving picture frames in time series in step S403. The frame to be searched here is a high-luminance frame due to previous light emission by the light emission part 129. For example, a frame in which an entire pixel is at so high luminance due to LED light emission or a frame in which a specific pixel region is at so high luminance due to LED light emission is to be searched.

The information processing apparatus 150 determines whether or not it has detected a high-luminance frame in step S404.

In a case where the information processing apparatus 150 has not detected the high-luminance frame, it performs the error processing in step S405 and terminates a series of processings. The error processing is a processing of displaying a message "association between moving picture data and posture data failed" or the like on the display apparatus of the information processing apparatus 150, for example.

On the other hand, in a case where the information processing apparatus 150 has detected the high-luminance frame, it specifies a head frame in step S406. In the processing, the high-luminance frame may be assumed as head frame, or a next frame to the high-luminance frame may be assumed as head frame. Further, in a case where two high-luminance frames are detected, any of them may be assumed as head frame or a next frame to the two frames may be assumed as head frame.

Then, the information processing apparatus 150 associates the initial data of the posture data with the head line of the head frame in step S407, and associates the subsequent posture data with the moving picture frames, respectively, in step S408.

Thereby, each frame of the moving picture is associated with each item of posture data, and the information processing apparatus 150 can recognize which posture the shooting apparatus 1 was in while shooting each frame.

The image data and the posture data are then appropriately associated, and various correction processings described below can be performed.

<9. Exemplary internal configuration III of shooting apparatus>

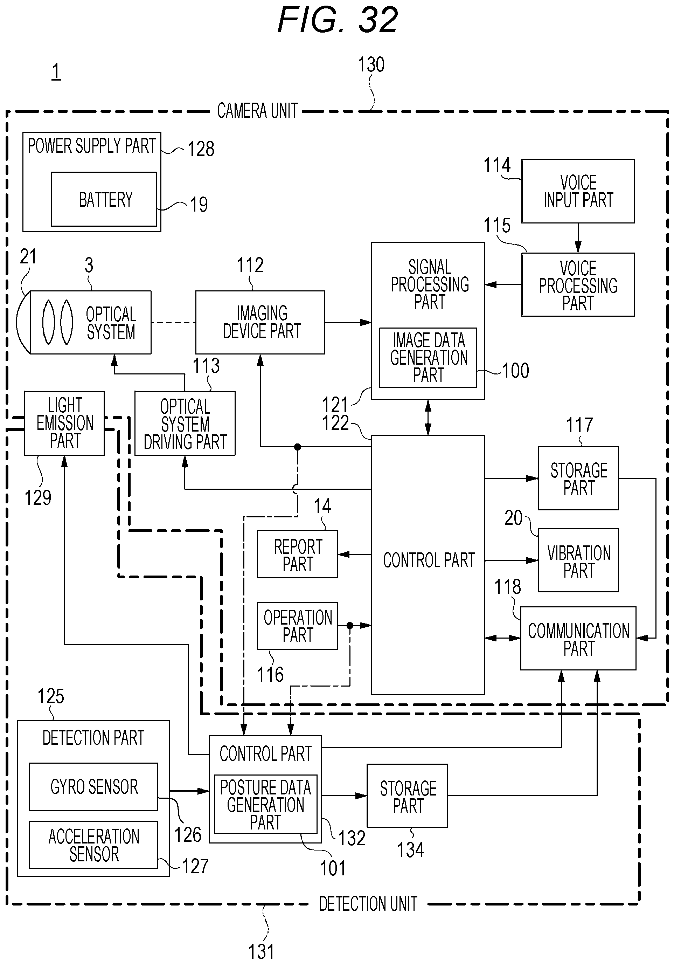

Fig. 32 illustrates a block diagram of an exemplary internal configuration III of the shooting apparatus 1. Fig. 32 illustrates another example in a case where the light emission part 129 is provided similarly as in the exemplary configuration of Fig. 28.

The shooter operates the operation part 116 such as the moving picture button 10 so that the detection unit 131 also receives the shooting start trigger sensed by the camera unit 130 and the posture data is generated and stored in response to the shooting start trigger in the shooting apparatus 1 illustrated in Fig. 32. Thus, the detection unit 131 is not provided with an operation part for starting generating and storing the posture data.

Further, the control part 132 of the detection unit 131 acquires the vertical synchronous signal sent from the control part 122 to the imaging device part 112, and generates the posture data on the basis of the vertical synchronous signal.

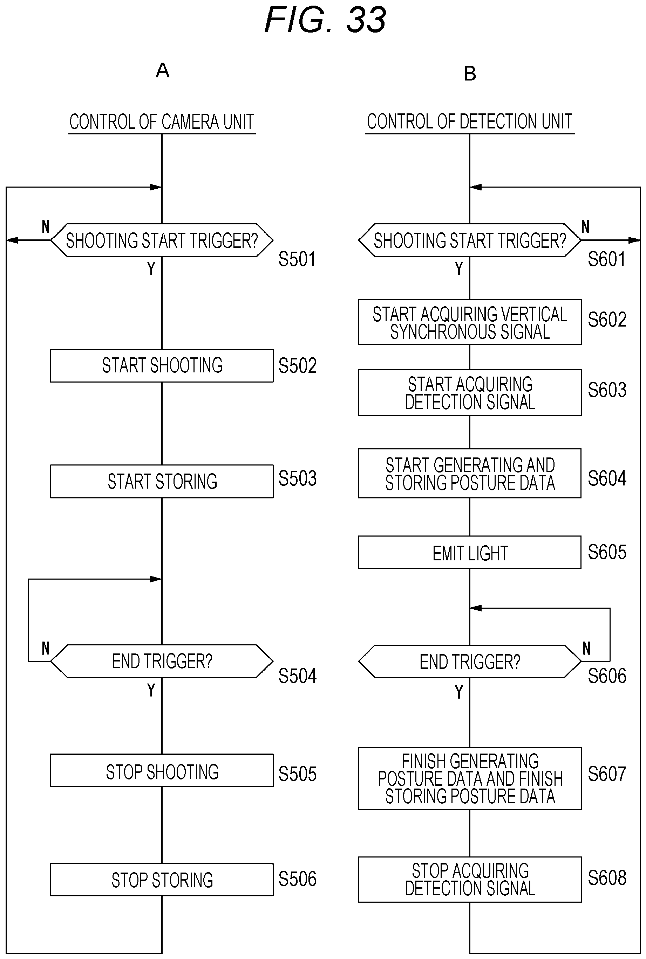

Specific processings will be described with reference to Fig. 33.

Fig. 33A is a flowchart of the respective processings performed by the control part 122 of the camera unit 130. Fig. 33B is a flowchart of the respective processings performed by the control part 132 of the detection unit 131.

The control part 122 of the camera unit 130 determines whether or not it has sensed the shooting start trigger in step S501. Further, the control part 132 of the detection unit 131 determines whether or not it has sensed the shooting start trigger in step S601. In this case, the control part 132 senses the shooting start trigger by a notification from the control part 122 of the camera unit 130.

The control part 122 of the camera unit 130 repeatedly performs the processing in step S501 until it senses the shooting start trigger. Similarly, the control part 132 of the detection unit 131 also repeatedly performs the processing in step S601 until it senses the shooting start trigger.

When the shooter presses the moving picture button 10, for example, to input the shooting start trigger, the control part 122 of the camera unit 130 starts performing the processing in step S502, and the control part 132 of the detection unit 131 starts performing the processing in step S602.

The control part 122 of the camera unit control part 130 starts shooting in step S502, and starts storing the shot image data in subsequent step S503.

On the other hand, the control part 132 of the detection unit 131 starts acquiring the vertical synchronous signal in step S602. The signal is acquired from the control part 122 of the camera unit 130.

Subsequently, the control part 132 starts acquiring the detection signal in step S603, and starts generating and storing the posture data in step S604.

Further, the control part 132 causes the LED of the light emission part 129 to emit a light in step S605. The light emission part 129 can emit a light in synchronization with the vertical synchronous signal used in the camera unit 130, and thus can emit a light at a timing to start the exposure period of one frame configuring the shot moving picture, for example.

Additionally, the control part 132 of the detection unit 131 grasps the timing to start the exposure period of each frame, and thus the posture data may be generated and stored a plurality of times in one frame period (including the exposure period and the non-exposure period). In a case where the posture data is generated and stored a plurality of times, it is possible to grasp when each item of posture data is acquired in one frame period. Thereby, blur correction and the like described below can be appropriately made.

The control part 122 of the camera unit 130 determines whether or not it has sensed the end trigger in step S504. Similarly, the control part 132 of the detection unit 131 determines whether or not it has sensed the end trigger in step S606.

In a case where the shooter presses the moving picture button 10 again and the shooting end instruction is sensed, for example, when the control part 122 of the camera unit 130 has sensed the end trigger, the control part 132 of the detection unit is also notified of the end trigger. Thereby, both the camera unit 130 and the detection unit 131 sense the end trigger substantially at the same time.

The control part 122 of the camera unit 130 which has sensed the end trigger stops shooting in step S505, and stops storing the image data in step S506.

Further, the control part 132 of the detection unit 131 which has sensed the end trigger finishes generating and storing the posture data in step S607, and stops acquiring the detection signal in step S608.

The respective processings illustrated in Fig. 33A and Fig. 33B are performed by the control part 122 of the camera unit 130 and the control part 132 of the detection unit 131, respectively, and thus the synchronized image data and posture data can be stored.

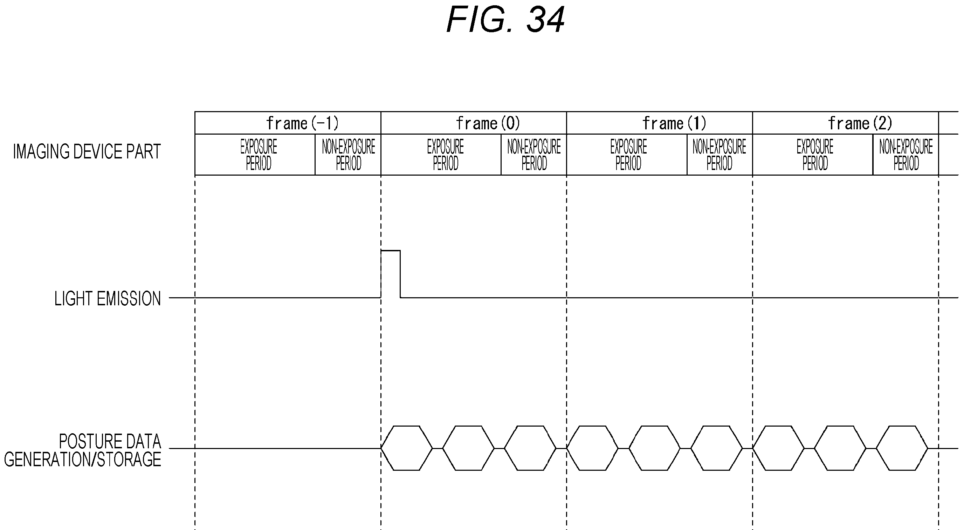

Fig. 34 illustrates a specific timing chart of the shooting operation and the operations of the detection unit.

In the shooting apparatus 1 including the components illustrated in Fig. 32, the camera unit 130 is synchronized with the detection unit 131 so that the light emission part 129 can emit a light at a predetermined timing such as at the head of the exposure period. Thereby, a light can be accurately emitted in the exposure period even if the light emission period is shortened, thereby reducing consumed power for light emission of the light emission part 129.

The light emission period of the light emission part 129 may be shortened according to the exposure period, but it is desirable that the light emission period is within one frame period even if it is prolonged due to the amount of light or the like. It is directed for preventing an increase in frames influenced by light emission.

Further, it is possible to grasp when the posture data is generated in each frame period even if a plurality of items of posture data is generated/stored in one frame period due to the synchronization therebetween.

In this way, the posture data generation part 101 generates the posture data one or more times per frame on the basis of the frame synchronous signal common with the image data generation part 100. That is, the common vertical synchronous signal is used between the shooting system including the image data generation part 100 for moving picture and the posture data generation system including the posture data generation part 101.

Thus, the head frame of the moving picture data corresponding to the posture data can be specified by marking and the frame is synchronized so that each item of posture data can be accurately associated with each frame even if the posture data is generated a plurality of times per frame of the moving picture.

Further, generating the image data to be stored as a moving picture by the image data generation part 100 and generating the posture data corresponding to the image data to be stored as a moving picture by the posture data generation part 101 are started in response to the common start trigger (shooting start trigger).

For example, the image data and the posture data start being generated in response to an operation as the recording start operation.

Thereby, it is possible to realize the apparatus capable of storing the posture data together with the moving picture while minimizing user's operation loads.

The processings of associating the image data with the posture data performed by the information processing apparatus 150 which has received both the image data and the posture data are substantially the same as the processings illustrated in Fig. 31, and thus the detailed description thereof will be omitted.

Additionally, in the processing of associating the first data of the posture data with the head line of the head frame in step S407 of Fig. 31, since the image data is synchronized with the posture data and the posture data stored when the head line is actually exposed can be associated with the head line, the corrections described below can be more accurately made.

Additionally, the shooting apparatus 1 described in Fig. 19, Fig. 28, Fig. 32, and the like may generate/store a plurality of items of posture data per frame of the image data. In this case, it is assumed that one item of posture data corresponding to each frame is added with information based on the frame synchronous signal (vertical synchronous signal). For example, the posture data acquired at the timing of the vertical synchronous signal (almost at the timing) is added with a vertical synchronous flag.

For example, the first posture data after the timing of the vertical synchronous signal is added with vertical synchronous information thereby to determine the posture data at the head of a frame. Thereby, the apparatus for processing the image data and the posture data can accurately recognize the posture data corresponding to each frame.

A high-luminance frame with partial region at high luminance is formed by light emission of the light emission part 129, but the high-luminance frame may not be used as the first frame of the moving picture data. That is, the image data may be generated as a moving picture from a next frame to the high-luminance frame. Additionally, in a case where two high-luminance frames are present, the image data may be generated as a moving picture from a subsequent frame to the two frames.

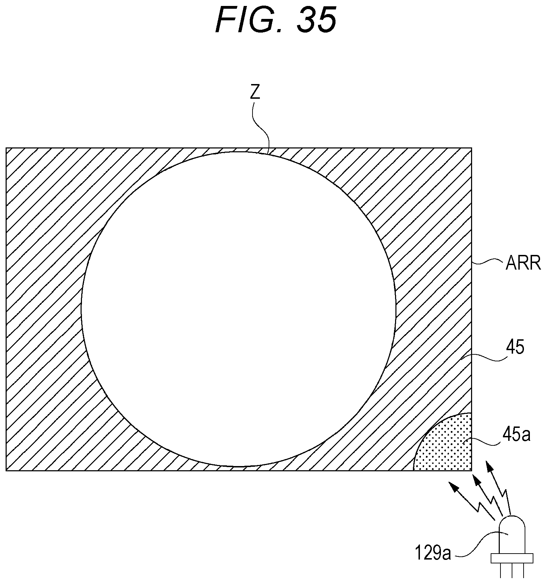

Further, the high-luminance frame can be employed as the first frame of the image data as a moving picture. It will be specifically described with reference to Fig. 35.

Fig. 35 illustrates a shooting region ARR of the imaging device and an image Z of an object to be formed. The shooting apparatus 1 according to the present embodiment uses the fisheye lens 21 as a lens closest to an object. Thus, in a case where the fisheye lens 21 employs a circumferential fisheye lens, for example, the image Z formed in the imaging device part 112 by a light passing through the optical system 3 is substantially circular. Thus, an out-of-range region 45 (shaded region in the Figure) which does not influence the image data is present on the outer periphery of the image sensor provided in the imaging device part 112.

Further, the LED 129a of the light emission part 129 is provided inside the camera unit 130 of the shooting apparatus 1 according to the present embodiment thereby to irradiate a light from the light emission part 129 on the out-of-range region 45 incapable of being exposed by a light passing through the fisheye lens 21 (a pearskin region 45a in Fig. 35).

With such a configuration, the high-luminance frame can be employed as part of the image data as moving picture.

That is, the light emission part 129 is provided such that only the imaging device outside the range in which an object light is incident by the optical system 3 in the imaging device part 112 is exposed, and thus the high-luminance image due to light emission of the light emission part 129 can be a valid object image only outside the range.

Thereby, only the pixels not used for the object image in a frame are at high luminance due to light emission. Thus, the frame can be also used to be normally reproduced. That is, it is possible to prevent an unwanted frame from occurring due to light emission of the light emission part.

Additionally, the shooting apparatus 1 according to the embodiment is exemplary, and various variants may be assumed.

In Fig. 22, the angular speed data itself obtained by the gyro sensor 126 is handled as posture data, but data obtained by performing each image correction processing on the angular speed data may be assumed as posture data.

Also in the exemplary internal configurations II (Fig. 28) and III (Fig. 32) of the shooting apparatus, various configurations described in the exemplary internal configuration I such as exposure control configuration, configuration of the voice processing part, and posture data generation configuration can be employed as needed, for example.

The light emission part 129 as an exemplary notification part is employed in the exemplary internal configurations II (Fig. 28) and III (Fig. 32), but the notification part for making a notification for association the image data with the posture data in response to a trigger may employ various examples such as a configuration for making a notification by sound, a configuration for making a notification by electromagnetic wave, and a configuration for making a notification by an electric signal, for example. Various examples such as voice detector, electromagnetic wave detector, and electric signal detector can be accordingly employed for the components of the sensing part.

<10. Reproduction/edition screen of information processing apparatus>

As described above, the shooting apparatus 1 records the moving picture data or the posture data. The moving picture data and the posture data can be transferred to the information processing apparatus 150 such as portable terminal or stationary computer apparatus, and the information processing apparatus 150 can reproduce or edit the moving picture as a processing based on an application program.

In particular, the image data is a moving picture shot by use of the fisheye lens 21, and can be accordingly subjected to fisheye distortion correction or blur correction, and gravitational direction correction of its displayed image by the application program.

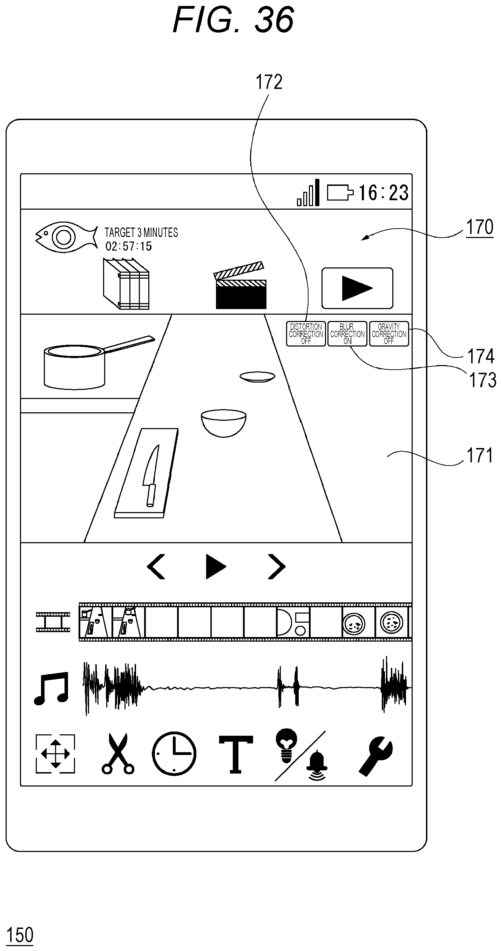

Fig. 36 illustrates that an application screen 170 is displayed on the information processing apparatus 150 as a portable terminal such as Smartphone.

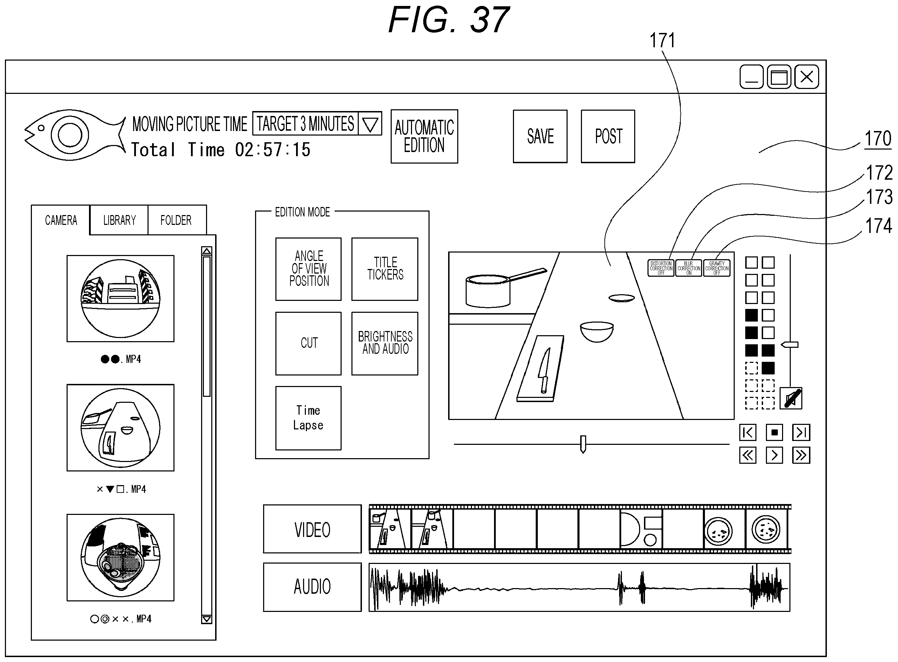

Further, Fig. 37 illustrates that the application screen 170 is displayed on the information processing apparatus 150 with a relatively large screen such as personal computer or tablet terminal.

In either case, an image region 171 is prepared in the application screen 170 thereby to display a reproduced moving picture therein.

An image reproduction operation piece, an edition operation piece, a mode operation piece, an indicator, and the like are further prepared in the application screen 170, and the user can confirm the reproduction state of a normal moving picture, a time-lapse moving picture, or a still image, or can perform a desired edition work.

Specific edition functions by the application program such as automatic edition or manual edition are enabled.

The manual edition enables:

- To delete or recover frame
- To set initial angle of view
- To designate time-lapse ON/OFF
- To insert or delete title or tickers
- Undo operation
- To save edition result
- To designate multi-view mode

Further, according to the present embodiment, fisheye distortion correction or gravitational direction correction can be made while a normal moving picture, a time-lapse moving picture, or a still image is reproduced. Further, blur correction can be made while a normal moving picture or a time-lapse moving picture is reproduced.

Thus, in the examples of Fig. 36 and Fig. 37, a fisheye distortion correction button 172, a blur correction button 173, and a gravitational direction correction button 174 are displayed within the image region 171 and can be arbitrarily operated by the user.

Additionally, the fisheye distortion correction button 172, the blur correction button 173, and the gravitational direction correction button 174 are displayed within the image region 171 by ways of example, and may be displayed outside the image region 171.

Further, the present example assumes that three buttons are displayed during image reproduction, but it may be assumed that the fisheye distortion correction button 172 and the blur correction button 173 are displayed, the fisheye distortion correction button 172 and the gravitational direction correction button 174 are displayed, or any one is displayed.

The user can designate fisheye distortion correction ON/OFF of a reproduced image by the fisheye distortion correction button 172.

The user can designate blur correction ON/OFF of a reproduced image by the blur correction button 173.

The user can designate gravitational direction correction ON/OFF by the gravitational direction correction button 174 for keeping a gravitational direction downward in the screen when operating to move a point of view of a reproduced image.

<11. Image correction processings during reproduction>

There will be described corrections in a case where an image is reproduced in the image region 171 of the application screen 170.

As described below in detail, the fisheye distortion correction method is a processing of converting a fisheye image into a central projection image by perspective projection onto an output coordinate system by use of a spherical model.

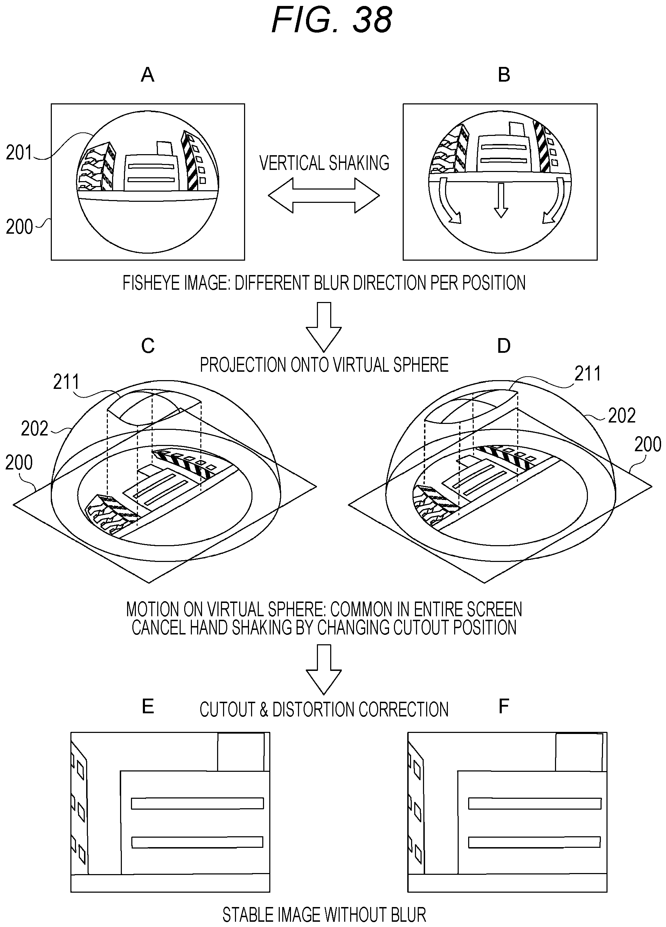

For example, image data reproduced as in Fig. 38A, or an input image 200 to be corrected is rectangular and has a circular fisheye image 201. The fisheye image 201 is projected onto a virtual sphere 202 as a spherical model of Fig. 38C.

A region 211 projected onto the virtual sphere 202 is then cut out and subjected to fisheye distortion correction to be an image illustrated in Fig. 38E.

Blur correction is directed to reduce blurs in a reproduced image during moving picture shooting, and to reduce influences of hand shaking or vibration added to the shooting apparatus 1 during shooting. According to the present embodiment, the shot image data is a fisheye image, and thus blur correction is reflected on fisheye distortion correction.

Here, a blur direction is different depending on a position in a fisheye image as indicated by arrows in Fig. 38B. For such blurs, the region 211 to be cut out is adjusted depending on the amount of blurs as in Fig. 38C to Fig. 38D to be a blur-canceled image with consecutive frames as illustrated in Fig. 38E and Fig. 38F. For such processings, a position to be cut out on the virtual sphere 202 is corrected on the basis of the amount of blurs (correction angle) found by use of the posture data as a detection value of the gyro sensor 126.

Gravitational direction correction is directed for preventing a blur in a gravitational direction even if a point of view is moved within a range displayed during reproduction. Also in this case, the image data is a fisheye image, and thus gravitational direction correction is reflected on fisheye distortion correction.

As described above, the region 211 to be cut out from the virtual sphere 202 is offset vertically and horizontally according to an operation of the user so that the user can arbitrarily change the field of view direction to be reproduced. For example, the field of view direction can be changed by the slide operation, the swipe operation, or the like on the image region 171 of the application screen 170. At this time, the gravitational direction is kept downward in the screen.

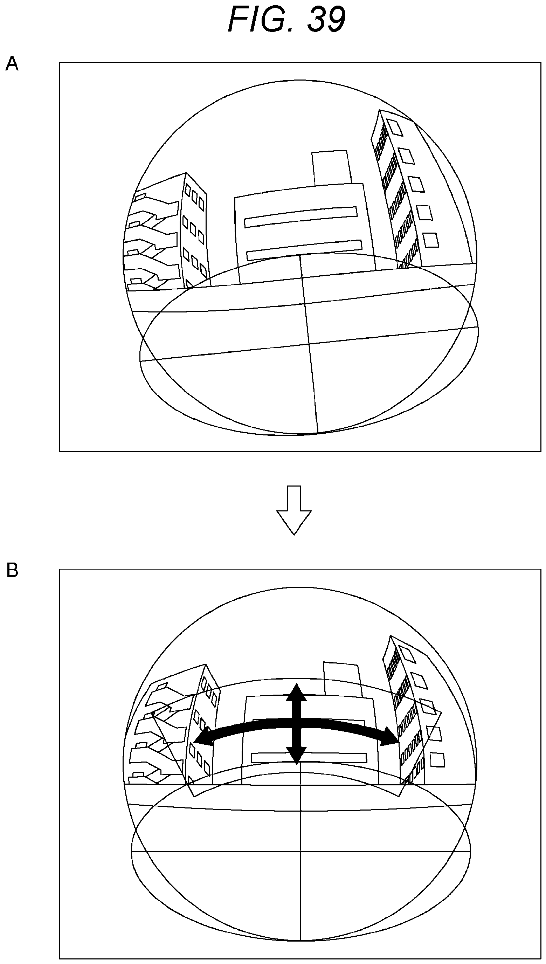

Fig. 39A illustrates that the gravitational direction is not downward. This state is displayed along the horizontal line as in Fig. 39B, thereby providing a display environment in which the user can easily view in a case of performing the field of view changing operation.

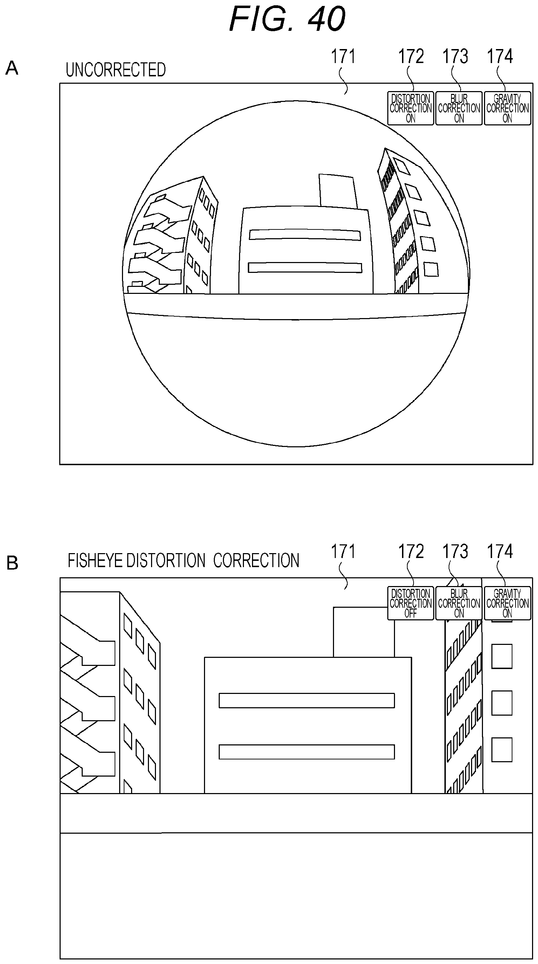

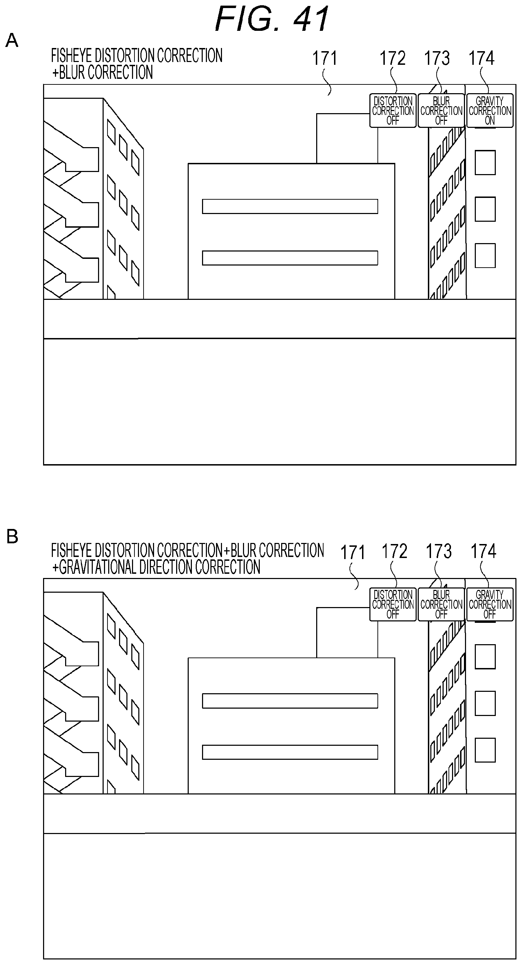

Fig. 40 and Fig. 41 illustrate examples of the image region 171 in a case where the corrections are made.

Fig. 40A illustrates that no correction is made. The original image data including a fisheye image is displayed as it is.

At the time of Fig. 40A, the fisheye distortion correction button 172, the blur correction button 173, and the gravitational direction correction button 174 function as ON operation pieces, respectively.

The user operates, such as touching or clicking (ON operation in this case), the fisheye distortion correction button 172 during reproduction so that fisheye distortion correction functions, and the reproduced image subjected to fisheye distortion correction is displayed subsequently as illustrated in Fig. 40B.

Additionally, according to the present embodiment, fisheye distortion correction, blur correction, and gravitational direction correction can be independently set ON/OFF, but blur correction and gravitational direction correction are assumed to function while fisheye distortion correction is ON. Thus, the operations of the blur correction button 173 and the gravitational direction correction button 174 are disabled while fisheye distortion correction is not made as in Fig. 40A, and thus they may not be displayed.

Alternatively, in a case where the blur correction button 173 is operated at the time of Fig. 40A, blur correction may be made while fisheye distortion correction is also set ON. Similarly, in a case where the gravitational direction correction button 174 is operated, gravitational direction correction may be made while fisheye distortion correction is also set ON.

At the time of Fig. 40B, the fisheye distortion correction button 172 functions as an OFF operation piece, and the blur correction button 173 and the gravitational direction correction button 174 function as ON operation pieces, respectively.

When the user operates the fisheye distortion correction button 172 (OFF operation in this case), the display returns to the reproduced fisheye image of Fig. 40A.

When the user operates the blur correction button 173 (ON operation) from the state of Fig. 40B, the blur correction function is started, and the state transits to the state in which blur correction functions on the fisheye distortion-corrected image as in Fig. 41A. The blur correction button 173 becomes an OFF operation piece.

When the user operates the blur correction button 173 (OFF operation) from the state of Fig. 41A, the blur correction function is terminated and the state returns to the state of Fig. 40B.

When the user operates the gravitational direction correction button 174 (ON operation) from the state of Fig. 41A, the gravitational direction correction function is started, and the state transits to the state in which all of fisheye distortion correction, blur correction, and gravitational direction correction function as illustrated in Fig. 41B. The gravitational direction correction button 174 becomes an OFF operation piece.

When the user operates the gravitational direction correction button 174 (OFF operation) from the state of Fig. 41B, the gravitational direction correction function is terminated and the state returns to the state of Fig. 41A.

When the user operates the blur correction button 173 (OFF operation) from the state of Fig. 41B, the blur correction function is terminated. Though not illustrated, blur correction is not made and gravitational direction correction functions.

Also in a case where the user operates the gravitational direction correction button 174 (ON operation) from the state of Fig. 40B, the state similarly enters the state in which blur correction is not made but gravitational direction correction functions.

As described above, the user can arbitrarily set ON/OFF fisheye distortion correction, blur correction, and gravitational direction correction while the information processing apparatus 150 is reproducing the image data based on the application program. Thereby, the corrected and uncorrected states can be visually compared while the user is viewing the moving picture or time-lapse moving picture.

Additionally, the present embodiment is described in terms of the three corrections, but an application program having the fisheye distortion correction and blur correction functions and not having the gravitational direction correction function may be assumed for the correction functions.

Further, an exemplary application program having the fisheye distortion correction and gravitational direction correction functions and not having the blur correction function may be assumed for the correction functions.

Further, an exemplary application program not having the fisheye distortion correction function and having both or either of the blur correction function and the gravitational direction correction function may be assumed.

Additionally, various examples in consideration of the above three corrections are assumed for storing a reproduced image.

For example, whenever each of various correction buttons is operated while image data as a moving picture is being reproduced, each correction changes between the ON and OFF states, and the image data including a temporal change between the ON and OFF states of each correction may be saved. Specifically, in a case where blur correction is set ON in scene 1 and blur correction is set OFF in next scene 2, the reproduced image with the ON/OFF states of blur correction switched in the respective scenes according to the operations may be saved.

Further, in a case where a reproduced image is to be saved, the ON/OFF states of each correction is presented to be selectable, and each correction may be made for the entire reproduced image according to the selection result, and saved.

A reproduced image may be saved while the reproduced image is being reproduced. In this case, the reproduced image to be saved is saved while being confirmed, thereby preventing the reproduced image in an unintended state from being saved.

Further, a reproduced image may by saved without being reproduced. In this case, the reproduced image is not reproduced, thereby achieving a reduction in processings loads on the apparatus which performs the processing (such as the information processing apparatus 150) and achieving higher efficiency of various correction processings and the reproduced image storing processing.

<12. Functional configuration of information processing apparatus>

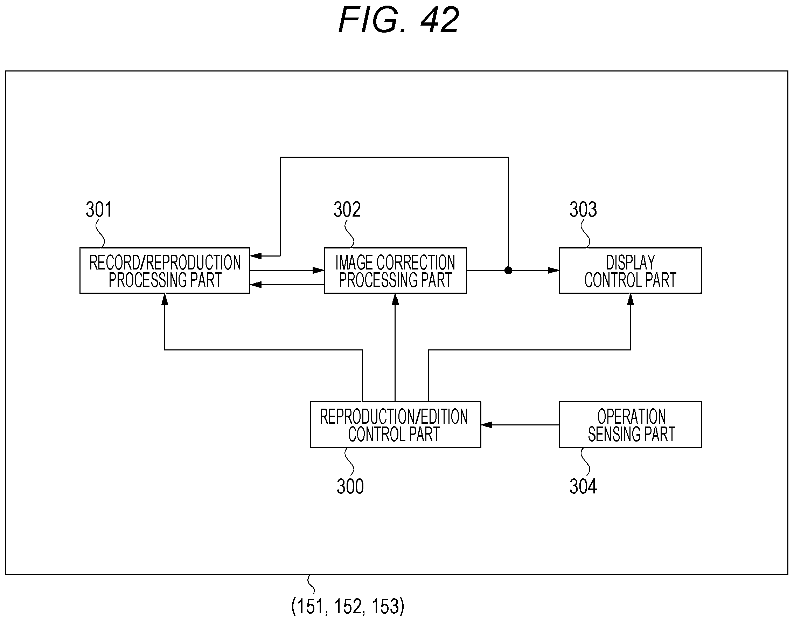

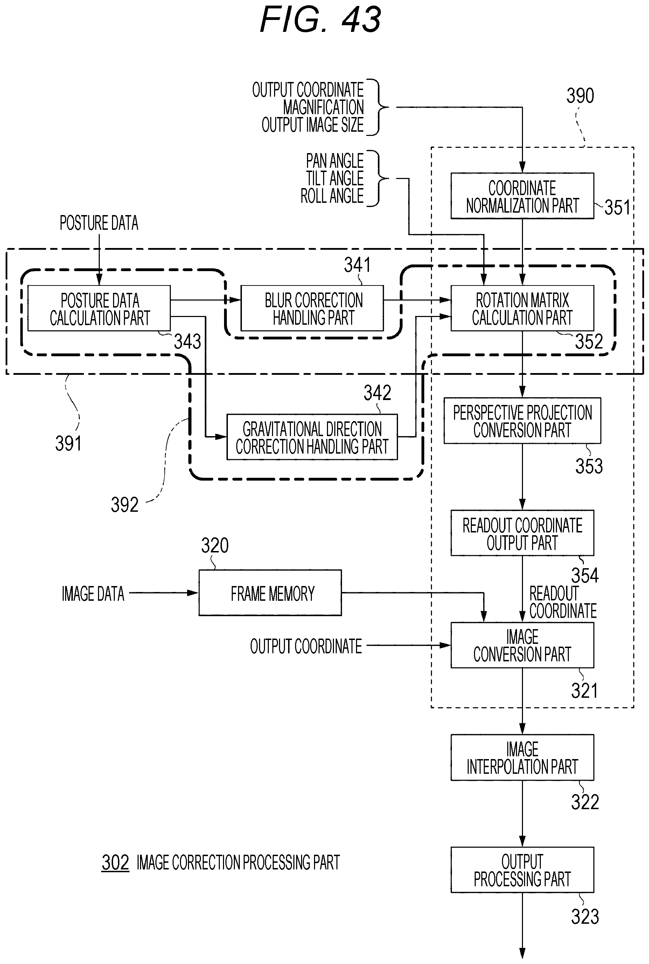

A functional configuration realized by the application program for moving picture reproduction/edition in the information processing apparatus 150 will be described with reference to Fig. 42 and Fig. 43.

Additionally, each block illustrated in Fig. 42 and Fig. 43 is a function (processing function executed in the CPU 151) mounted on the information processing apparatus 150 in software by use of the hardware resources as the CPU 151, the ROM 152, and the RAM 153 illustrated in Fig. 21.

As illustrated in Fig. 42, the information processing apparatus 150 includes the moving picture reproduction/edition functions such as a reproduction/edition control part 300, a record/reproduction processing part 301, an image correction processing part 302, a display control part 303, and an operation sensing part 304.

The reproduction/edition control part 300 functions for controlling each part in order to perform the operations of the application program in response to a user's operation.

The reproduction/edition control part 300 instructs the image correction processing part 302 to set ON/OFF fisheye distortion correction, blur correction, and gravitational direction correction for the correction functions. Further, the reproduction/edition control part 300 supplies the information indicating output coordinates, magnification, output image size, pan angle, tilt angle, roll angle, and the like to the image correction processing part 302 for the correction functions.

Here, output coordinates are within a central projection image generated from a fisheye image. The central projection image is configured of a plurality of pixels arranged in a 2D matrix. Further, an arrangement configured of pixels arranged in a predetermined direction (such as horizontal direction) is called row in the central projection image. For output coordinate supplying, each row is sequentially selected and the respective coordinates of the pixels in the selected row are supplied as output coordinates.

Further, output image size is the size of a central projection image. Magnification indicates a ratio of the output image size relative to an output coordinate plane. The output coordinate plane is a rectangular projection plane onto which at least part of a fisheye image is projected by perspective projection, and an image obtained by enlarging the output coordinate plane at the magnification is generated as a central projection image. Pan angle, tilt angle, and roll angle will be described below.

The record/reproduction processing part 301 has a function of performing a record/reproduction access processing on the storage part 159 of Fig. 21 and a record/reproduction access processing on the drive 161. Specifically, the record/reproduction processing part 301 makes record/reproduction access for reading the image data or the posture data transferred from the shooting apparatus 1 and stored in the storage part 159 or writing edited image data, edition information, or the like into the storage part 159. Further, the record/reproduction processing part 301 can make record/reproduction access for reading the image data or the posture data stored in the memory card 162 or wiring edited image data, edition information, or the like into the memory card 162 via the drive 161.

The image correction processing part 302 can perform fisheye distortion correction, blur correction, gravitational direction keeping control, and the like on the image data read by the record/reproduction processing part 301 from a storage medium. It will be described below in detail in Fig. 43.

The display control part 303 has a function of supplying control or display data required for a processing of causing the display 156 of Fig. 21 to display. Specifically, the function is directed for causing the application screen 170 illustrated in Fig. 36 and Fig. 37 to be displayed.

The operation sensing part 304 senses an operation from the input part 156 of Fig. 21 configured of a keyboard, a mouse, a touch panel, or the like. Specifically, it has a function of sensing user's reproduction operation or edition operation.

Fig. 43 illustrates an exemplary configuration of the image correction processing part 302.

The image correction processing part 302 has a frame memory 320. Each frame of the image data (input image) reproduced by the function of the record/reproduction processing part 301 is sequentially processed in an image conversion part 321 while being sequentially and temporarily held in the frame memory 320.

The image conversion part 321 converts a fisheye image into a central projection image. Each time the image conversion part 321 receives an output coordinate from the reproduction/edition control part 300, it reads a pixel value of a read coordinate corresponding to the output coordinate from the frame memory 320. The read coordinate indicates a coordinate within the fisheye image.

The image conversion part 321 then supplies the read pixel value as the pixel value of the output coordinate within the central projection image to a pixel interpolation part 322. Thereby, the fisheye image is converted into a central projection image.

The pixel interpolation part 322 interpolates the pixels in the central projection image as needed. For example, when part or all of the fisheye image is enlarged, the pixel interpolation part 322 finds and interpolates required pixels with sub-pixel accuracy. The interpolation employs an algorithm such as bilinear interpolation algorithm, bicubic interpolation algorithm, or Lanzos interpolation algorithm. The pixel interpolation part 322 supplies the pixel-interpolated central projection image to an output processing part 323.

The output processing part 323 performs the on screen display (OSD) processing, themaskprocessing, the image format conversion processing, and the like on the central projection image as needed. The output processing part 323 supplies the processed central projection image to the display control part 303 or the record/reproduction processing part 301 of Fig. 42.

The display control part 303 controls for displaying the image data from the output processing part 323, as display image, in the image region 171 of the application screen 170.

Further, in a case where the user requests to record, the record/reproduction processing part 301 controls for supplying and recording the image data from the output processing part 323 as an image to be recorded into the storage part 159 or the drive 161 of Fig. 21.

Additionally, when the reproduction/edition control part 300 designates fisheye distortion correction OFF, the image conversion part 321 transfers the image data (input image) temporarily stored in the frame memory 320 to the pixel interpolation part 322 as it is. In this case, the fisheye image is displayed or recorded.

There are provided a coordinate normalization part 351, a rotation matrix calculation part 352, a perspective projection conversion part 353, and a read coordinate output part 354 in order to find a read coordinate corresponding to an output coordinate for fisheye distortion correction.

With the components, each time an output coordinate is supplied, the output coordinate is converted into a corresponding read coordinate to be supplied to the image conversion part 321.

Association between the virtual sphere 202 and the fisheye image 201 will be described herein.

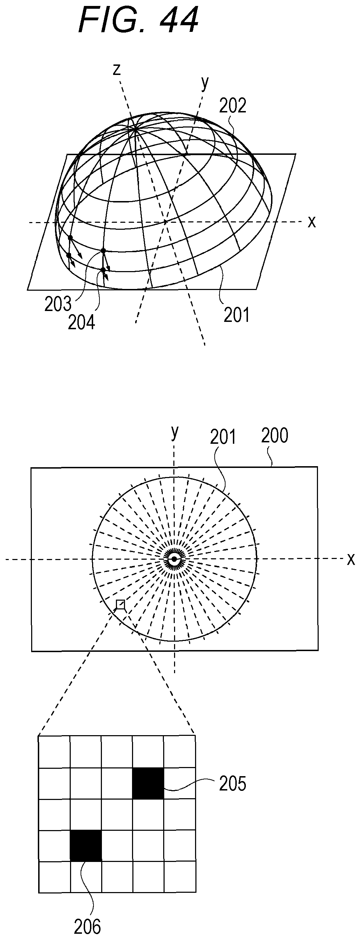

As illustrated in Fig. 44, a predetermined axis parallel to the input image 200 including the fisheye image 201 is assumed as the x-axis, and an axis parallel to the fisheye image 201 and orthogonal to the x-axis is assumed as the y-axis. Further, an axis orthogonal to the x-axis and the y-axis is assumed as the z-axis. The origin of the x-axis, the y-axis, and the z-axis is assumed at the center of the fisheye image 201, for example. Then, the surface of a hemisphere about the origin is assumed as the virtual sphere 202. The virtual sphere 202 indicates a field of view shot by the shooting apparatus 1 using the fisheye lens 21.

The virtual sphere 202 with the center of the fisheye image 201 as the origin is divided in a mesh shape. The virtual sphere 202 is divided at equal intervals in latitude and longitude, for example. The coordinates of the points obtained by projecting the division points (mesh intersections) 203 and 204 onto the fisheye image in parallel with the z-axis are assumed as coordinates 205 and 206 on the fisheye image, respectively. That is, they are read coordinates.

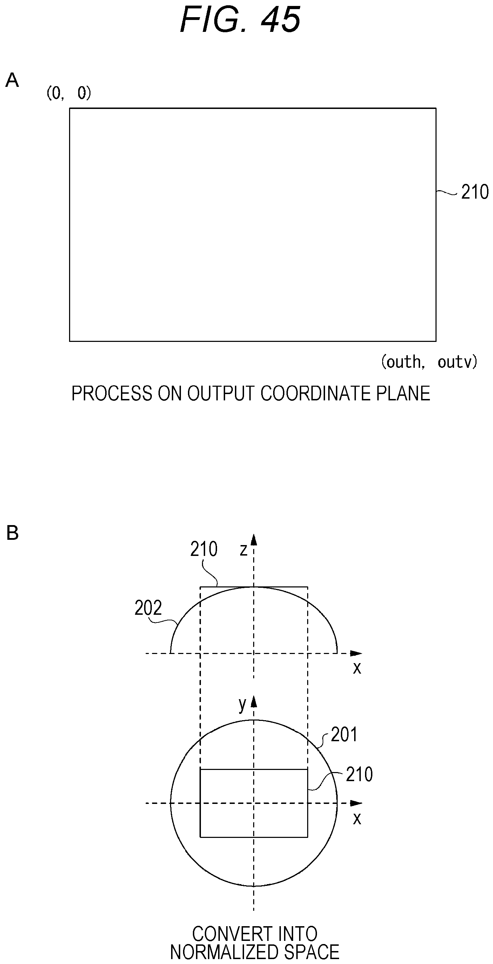

Further, association between an output image and the virtual sphere 202 is as follows. Fig. 45A illustrates an exemplary output coordinate plane 210.

The rectangular output coordinate plane 210 like this is set in the fisheye image 201.

The output coordinate plane 210 is arranged at a position where its center matches with the center of the fisheye image and contacts with the virtual sphere 202 in the initial state as illustrated in Fig. 45B, for example.

The coordinate normalization part 351 arranges (normalizes) the output coordinate plane 210 in a 3D space such that it contacts immediately above and at the center of the virtual sphere 202 as illustrated in Fig. 45B.

In this case, the coordinate normalization part 351 normalizes the output coordinates on the basis of the magnification or the output image size supplied from the reproduction/edition control part 300. For example, in a case where the horizontal coordinate of the central projection image is assumed at 0 to outh and the vertical coordinate is assumed at 0 to outv as illustrated in Fig. 45A, outh and outv are supplied as output image size.

The coordinate normalization part 351 normalizes the output coordinates in the following Equations, for example.

[Math. 1]

$$x_{norm} = \frac{1}{zoom} \cdot \frac{(x - outh/2)}{r}$$

$$y_{norm} = \frac{1}{zoom} \cdot \frac{(y - outv/2)}{r}$$

$$z_{norm} = 1$$

**where** *r* = min(*outh*, *outv*) /2

In [Math. 1], min (A, B) is a function for returning the lower value of A and B. Further, "zoom" indicates a magnification which is "1" when the diameter of the fisheye image 201 matches with the short side of the output coordinate plane 210 and the output coordinate plane 210 (or the projection plane) is arranged to contact with the virtual sphere.

Further, xnorm, ynorm, and znorm indicate the normalized x-, y-, and z-coordinates, respectively

The coordinate normalization part 351 supplies the normalized output coordinates (xnorm, ynorm, znorm) to the rotation matrix calculation part 352.

The output coordinates are normalized into the coordinates on the hemisphere with a radius of 1.0 in each Equation of [Math. 1]

Additionally, the shooting apparatus 1 enlarges at least part of the fisheye image at the magnification, but may reduce at least part of the fisheye image. On reduction, the control part 150 supplies a reduction rate instead of the magnification "zoom". In this case, "zoom" is replaced with the reduction rate in [Math. 1].

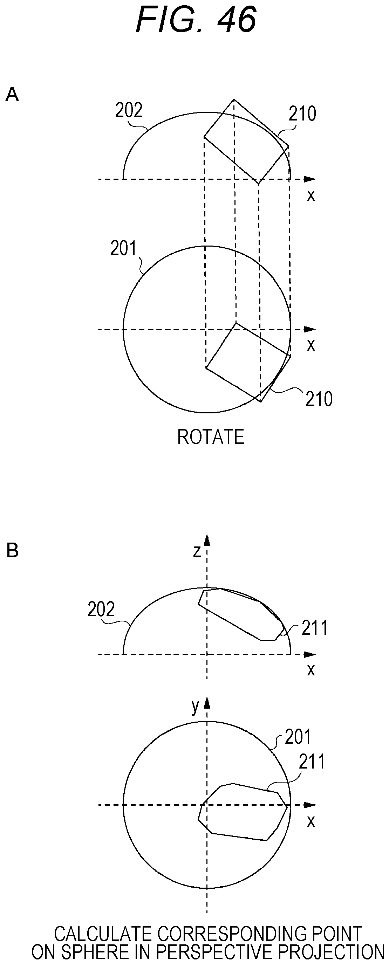

The rotation matrix calculation part 352 rotates the output coordinate plane 210 by rotation matrix calculation as illustrated in Fig. 46A. The rotation matrix calculation part 352 receives the pan angle, the tilt angle, and the roll angle from the reproduction/edition control part 300. Here, the pan angle is a rotation angle for rotating the output coordinates about the x-axis. Further, the tilt angle is a rotation angle for rotating the output coordinates about the y-axis, and the roll angle is a rotation angle for rotating them about the z-axis.

The rotation matrix calculation part 352 then makes rotation matrix calculation in the following Equation, for example.

[Math. 2]

$$\begin{pmatrix} x_{rot} \\ y_{rot} \\ z_{rot} \end{pmatrix} = \begin{pmatrix} 1 & 0 & 0 \\ 0 & \cos R_t & -\sin R_t \\ 0 & \sin R_t & \cos R_t \end{pmatrix} \begin{pmatrix} \cos R_r & 0 & -\sin R_r \\ 0 & 1 & 0 \\ \sin R_r & 0 & \cos R_r \end{pmatrix} \begin{pmatrix} \cos R_p & -\sin R_p & 0 \\ \sin R_p & \cos R_p & 0 \\ 0 & 0 & 1 \end{pmatrix} \begin{pmatrix} x_{norm} \\ y_{norm} \\ z_{norm} \end{pmatrix}$$

In [Math. 2], "Rt" indicates the tilt angle, "Rr" indicates the roll angle, and "Rp" indicates the pan angle. Further, (xrot, yrot, zrot) are the rotated output coordinates .

The rotation matrix calculation part 352 supplies the output coordinates (xrot, yrot, zrot) to the perspective projection conversion part 353.

The perspective projection conversion part 353 performs perspective projection conversion on the output coordinates.

As illustrated in Fig. 46B, the output coordinate plane 210 is projected in the perspective manner onto the surface of the sphere (the region 211). That is, the point which crosses with the sphere when a straight line is drawn from the output coordinates to the center of the sphere is found. The respective coordinates are calculated as follows.

[Math. 3]

$$x_{sph} = x_{rot} / \sqrt{x_{rot}^2 + y_{rot}^2 + z_{rot}^2}$$

$$y_{sph} = y_{rot} / \sqrt{x_{rot}^2 + y_{rot}^2 + z_{rot}^2}$$

$$z_{sph} = z_{rot} / \sqrt{x_{rot}^2 + y_{rot}^2 + z_{rot}^2}$$

$$R_x = arctan2\ (y_{sph},\ x_{sph})$$

$$R_z = arccos\ (z_{sph})$$

In [math. 3], xsph, ysph, and zsph are the coordinates obtained by projecting the output coordinates onto the coordinates on the surface of the virtual sphere. Further, arctan2 (x, y) is a function for returning an angle formed by a straight line connecting (y, x) and the origin and the x-axis. Further, arccos indicates the inverse function of the sine function. Further, Rx and Rz indicate angles relative to the x-axis and the z-axis in the perspective-projected output coordinates in polar coordinate expression, respectively.

The perspective projection conversion part 353 supplies (Rx, Rz) in the projection-converted output coordinates (r, Rx, Rz) to the read coordinate output part 300. r indicates a radius in the polar coordinate system. r is not supplied since r is a fixed value (such as "1").

The read coordinate output part 354 coverts the output coordinate into a read coordinate and outputs it to the image conversion part 321. For example, it is assumed that the read coordinate output part 354 has a fisheye image distortion correction table storing the read coordinates corresponding to the output coordinates, and acquires and outputs a read coordinate from the fisheye image distortion correction table.

The fisheye image distortion correction table stores all or part of the read coordinates in the fisheye image in association with the output coordinates in the central projection image. In a case where a read coordinate corresponding to an output coordinate is not stored while some coordinates are stored, the read coordinate output part 354 calculates and outputs the read coordinate by interpolation calculation.

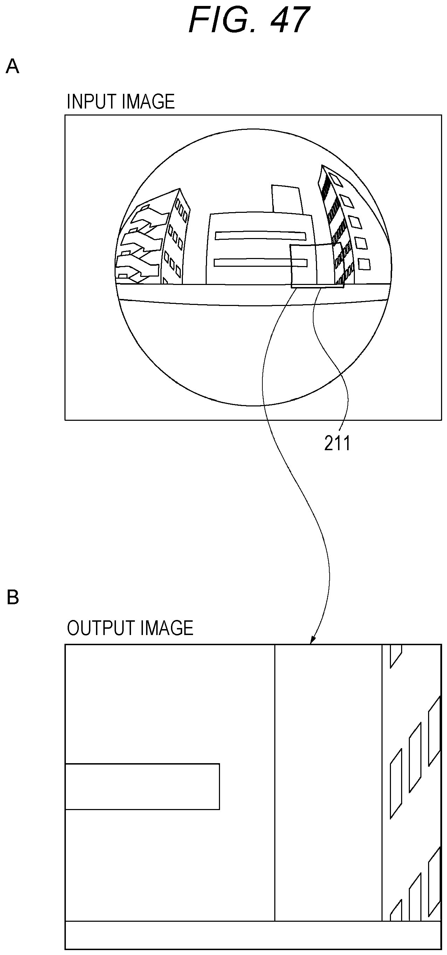

The image conversion part 321 reads a pixel from the frame memory 320 by use of the read coordinates obtained from the processings of the respective parts as described above, thereby obtaining the fisheye distortion-corrected output image. For example, the region 211 is cut out from the input image as illustrated in Fig. 47A thereby to obtain the output image in the central projection system as illustrated in Fig. 47B.

That is, in the above processings, the correspondences of the respective coordinates between the input image and the output image are found by calculating where on the virtual sphere 202 the coordinates of each pixel of the output image (2D) correspond, and applying the input image (the fisheye image 201) onto the virtual sphere 202. The pixels corresponding to the region 211 corresponding to the output image are then read out (cut out) from the input image in the frame memory 320 thereby to obtain the fisheye distortion-corrected output image.

Blur correction made during the above fisheye distortion correction will be subsequently described.

Blur correction is realized by applying a blur correction component calculated from the posture data (gyro data) when rotating the output coordinate plane 210 by the rotation matrix calculation part 352.

Even if the region 211 is fixed on the virtual sphere 202, the objet scene shot in a region (region on the fisheye image 201) to be cut out in each frame is offset due to a blur on shooting. Thus, the region to be cut out has only to be offset opposite to the offset in the shooting field direction due to a blur in order to cancel the blur from the reproduced image.

That is, the region 211 has only to be offset to cancel a change in posture of the shooting apparatus 1 in each frame.

A posture data calculation part 343 in Fig. 43 calculates a differential value, calculates an update by a sampling interval of the gyro data, and calculates norm normalization of a quaternion as illustrated in Fig. 22, for example.

A blur correction handling part 341 finds a coefficient R for blur correction by a value found from the posture data corresponding to a target frame, and supplies it to the rotation matrix calculation part 352.

It is assumed that a posture of the shooting apparatus 1 while shooting a current frame is rotated by θ about a vector u relative to the initial posture.

A quaternion q indicating rotation for canceling it is expressed as follows.

[Math. 4]

$$q = \left[\cos\frac{\theta}{2} \quad -u_x\sin\frac{\theta}{2} \quad -u_y\sin\frac{\theta}{2} \quad -u_z\sin\frac{\theta}{2}\right]$$
$$= [q_0 \quad q_1 \quad q_2 \quad q_3]$$

A rotation matrix R corresponding to the quaternion is as follows.

[Math. 5]

$$R = \begin{pmatrix} q_0^2 + q_1^2 - q_2^2 - q_3^2 & 2(q_1q_2 - q_0q_3) & 2(q_1q_3 + q_0q_2) \\ 2(q_1q_2 + q_0q_3) & q_0^2 - q_1^2 + q_2^2 - q_3^2 & 2(q_2q_3 - q_0q_1) \\ 2(q_1q_3 - q_0q_2) & 2(q_2q_3 + q_0q_1) & q_0^2 - q_1^2 - q_2^2 + q_3^2 \end{pmatrix}$$

Equation in [Math. 2] used by the rotation matrix calculation part 352 is changed into [Math. 6] described below by use of the rotation matrix R, thereby making fisheye distortion correction and blur correction at the same time.

[Math. 6]

$$\begin{pmatrix} x_{rot} \\ y_{rot} \\ z_{rot} \end{pmatrix} = R \begin{pmatrix} 1 & 0 & 0 \\ 0 & \cos R_t & -\sin R_t \\ 0 & \sin R_t & \cos R_t \end{pmatrix} \begin{pmatrix} \cos R_r & 0 & -\sin R_r \\ 0 & 1 & 0 \\ \sin R_r & 0 & \cos R_r \end{pmatrix} \begin{pmatrix} \cos R_p & -\sin R_p & 0 \\ \sin R_p & \cos R_p & 0 \\ 0 & 0 & 1 \end{pmatrix} \begin{pmatrix} x_{norm} \\ y_{norm} \\ z_{norm} \end{pmatrix}$$

Additionally, it is preferable that the above blur correction is made by determining the magnitude of a variation in the field of view. For example, whether or not the shooting apparatus 1 is shaken due to a vibration or whether or not the user has repositioned him/herself is determined by the magnitude of the amount of blurs. For example, in a case where an orientation of the body mounting the shooting apparatus 1 is changed, the scene which is being shot is accordingly changed. Thus, it is assumed that blur correction is not temporarily made at more than the predetermined amount of blurs.

Gravitational direction correction will be described below.

An output image to be reproduced and displayed is partially cut out from the fisheye image 201, and thus its cutout position is changed in response to a user's operation thereby to change the field of view direction in the image during reproduction.

Therefore, the reproduction/edition control part 300 can change the pan angle, tilt angle, and roll angle to be supplied to the rotation matrix calculation part 352 in response to a user's operation (such as flicking or sliding on the screen, or operating a pan/tilt/roll icon) thereby to change a region to be cut out from the fisheye image 201. That is, the displayed scene can be moved to a scene in the horizontal direction or in the vertical direction so that the user can arbitrarily view the object scene in the range shot in the fisheye image 201.

However, when the field of view direction is simply changed in response to a user's operation, the lower part of the reproduced image is likely to mismatch with the gravitational direction.

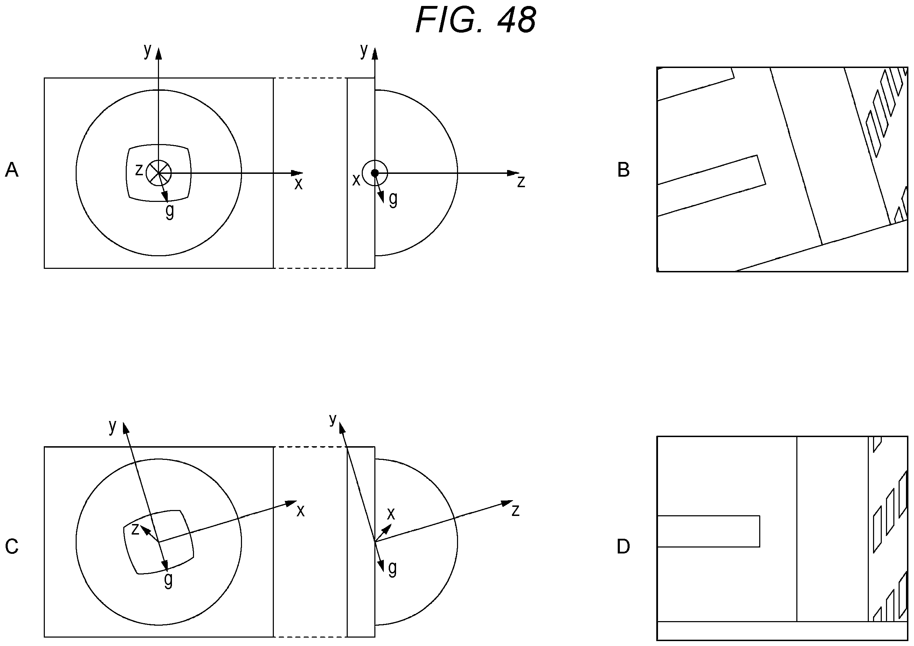

For example, Fig. 48B illustrates how the reproduced and displayed scene is tilted relative to the gravity.

This is a state in which the gravitational direction g is offset from the y-axis direction as illustrated in Fig. 48A.

Thus, gravitational direction correction is directed for preventing a gravitational direction from being offset in a displayed and reproduced image even if a field of view is changed in response to a user's operation during reproduction.

The specific processings are as follows:

- To align the gravitational direction with the y-axis
- To rotate only for pan and tilt.

Thereby, the downward direction of the reproduced image is always vertically downward in the corrected image.

Fig. 48C illustrates that the gravitational direction g is aligned with the y-axis direction. Thereby, the reproduced image with the gravitational direction g downward can be obtained as illustrated in Fig. 48D.

A gravitational direction correction handling part 342 of Fig. 43 calculates a gravitational direction in a frame to be processed by use of the acceleration data in the posture data in order to make gravitational direction correction.

Additionally, angular speed information with good S/N may be combined by use of the extended Kalman filter or the like in order to stably find an acceleration direction.

The gravitational direction correction handling part 342 then supplies the information indicating the calculated gravitational direction g to the rotation matrix calculation part 352.

The rotation matrix calculation part 352 places a constraint to match the y-axis with the gravitational direction g when performing the rotation processing by calculation of [Math. 2] or [Math. 6].

The y-axis is matched with the gravitational direction g in the case of the rotation processing by calculation of [Math. 2] so that fisheye distortion correction and gravitational direction correction are made.

The y-axis is matched with the gravitational direction g in the case of the rotation processing by calculation of [Math. 6] so that fisheye distortion correction, blur correction, and gravitational direction correction are made.

As understood from the above, the image correction processing part 302 of Fig. 43 includes a distortion correction processing part 390 for performing a distortion correction processing of converting the image data into an image in the central projection system. That is, the coordinate normalization part 351, the rotation matrix calculation part 352, the perspective projection conversion part 353, the read coordinate output part 354, and the image conversion part 321 function as the distortion correction processing part 390.

The image correction processing part 302 further includes a blur correction processing part 391 for performing a blur correction processing of reducing image blurs appearing on the image data by use of the posture data of the shooting apparatus corresponding to each frame of the image data. That is, the posture data calculation part 391, the blur correction handling part 341, and the rotation matrix calculation part 352 function as the blur correction processing part 391.

The image correction processing part 302 further includes a gravitational direction correction processing part 392 for performing a gravitational direction correction processing of keeping the gravitational direction constant in a displayed image by use of the posture data of the shooting apparatus 1 corresponding to each frame of the image data when the field of view is changed while the image data is being reproduced and displayed. That is, the posture data calculation part 391, the gravitational direction correction handling part 342, and the rotation matrix calculation part 352 function as the gravitational direction correction processing part 392.

<13. Exemplary processings of information processing apparatus>

Exemplary processings realized in the information processing apparatus 150 by the application program will be described.

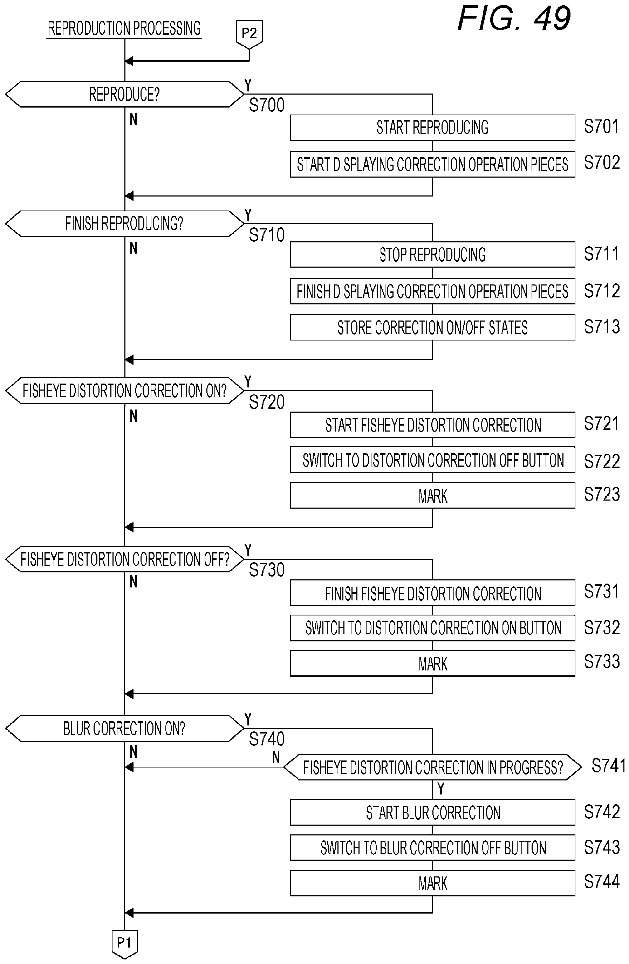

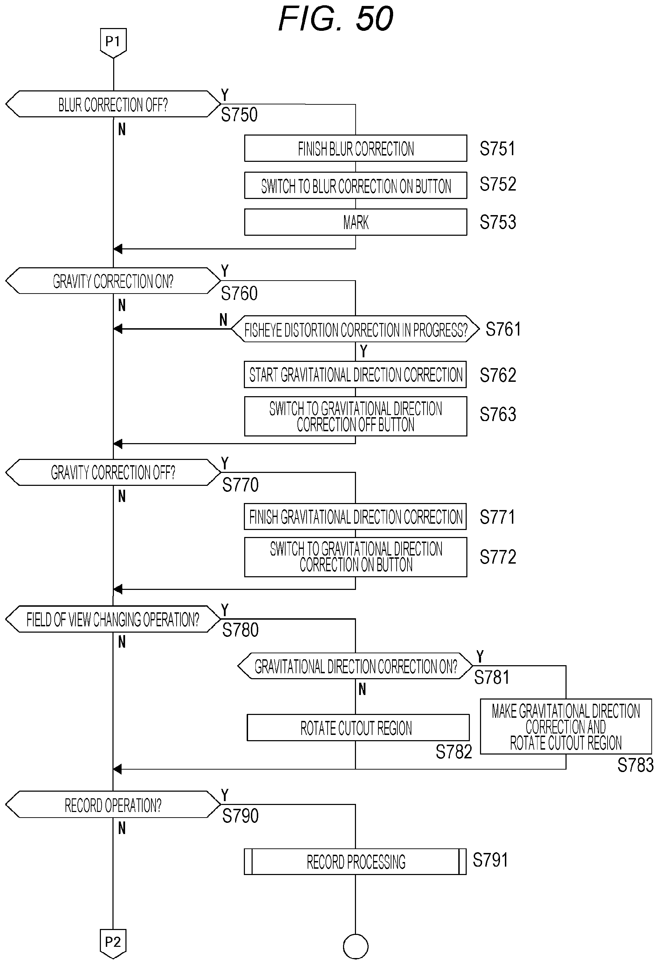

Fig. 49 and Fig. 50 illustrate exemplary processings during reproduction performed by the CPU 151 of Fig. 21 in the information processing apparatus 150 in the functional configuration of Fig. 42. For example, the exemplary processings are processings in a case where an image is reproduced on the application screen 170 illustrated in Fig. 36 or Fig. 37.

The exemplary processings will be described herein assuming that a moving picture (normal moving picture or time-lapse moving picture) is reproduced.

The CPU 151 monitors various triggers in steps S700, S710, S720, S730, S740, S750, S760, S770, S780, and S790 of Fig. 49 and Fig. 50.

Additionally, "P1" of Fig. 49 leads to "P1" of Fig. 50. Further, "P2" of Fig. 50 leads to "P2" of Fig. 49.

For example, when sensing the reproduction operation performed by the user, the CPU 151 proceeds from step S700 to S701 to perform control to start reproducing the image.

Further, in step S702, the CPU 151 causes the correction operation pieces to be displayed and overlapped on the reproduced moving picture. The correction operation pieces herein indicate the fisheye distortion correction button 172, the blur correction button 173, and the gravitational direction correction button 174 illustrated in Fig. 40, Fig. 41, and the like.

Moving picture reproduction as illustrated in Fig. 40A, for example, is started under control in steps S701 and S702. Additionally, the moving picture with fisheye distortion correction already made may be reproduced at the start of reproduction, or blur correction or gravitational direction correction may be enabled.

Further, in a case where the same moving picture was reproduced in the past, the moving picture may start being reproduced while the last correction ON/OFF states at the previous reproduction are kept. The correction ON/OFF states indicate whether or not the functions of fisheye distortion correction, blur correction, and gravitational direction correction are ON or OFF.

In a case where the reproduction end trigger is recognized when the user performs the reproduction stop operation or when the moving picture reproduction reaches the last frame, for example, the CPU 151 proceeds from step S710 to S711 to perform reproduction stop control. Thereby, the moving picture reproduction is stopped.

Further, the CPU 151 finishes displaying the correction operation pieces on the image in step S712.

Further, the CPU 151 stores the correction ON/OFF states at the end of the reproduction in the storage part 159, for example, in association with the moving picture contents in step S713. The processing enables the moving picture to be reproduced in the correction ON/OFF states at the end of the previous reproduction when the moving picture starts being reproduced in previous step S701.

In a case where the CPU 151 senses that the fisheye distortion correction button 172 has been switched ON during moving picture reproduction, it proceeds from step S720 to S721 to start fisheye distortion correction. Further, the displayed fisheye distortion correction button 172 is switched OFF in step S722. Thereby, the reproduced moving picture enters the display state of Fig. 40B, for example.

The CPU 151 marks the fisheye distortion correction start position in step S723.

The marking processing is directed for storing the frame numbers (hour/minute/second/frame) as marking information corresponding to the reproduced moving picture contents, for example. For example, the frame numbers of a fisheye distortion correction start position, a fisheye distortion correction end position, a blur correction start position, and a blur correction end position are sequentially stored as marking information. The CPU 151 stores the marking information as information corresponding to the moving picture contents in the storage part 159, for example.

In a case where the CPU 151 senses that the fisheye distortion correction button 172 has been switched OFF during moving picture reproduction, it proceeds from step S730 to S731 to terminate fisheye distortion correction. Further, it switches ON the displayed fisheye distortion correction button 172 in step S732. Thereby, the reproduced moving picture enters the display state illustrated in Fig. 40A, for example.

The CPU 151 marks the fisheye distortion correction end position in step S733.

In a case where the CPU 151 senses that the blur correction button 173 has been switched ON during moving picture reproduction, it proceeds from step S740 to S741 to confirm whether or not fisheye distortion correction is currently being made. If fisheye distortion correction is not being made, the ON-operated blur correction button 173 is disabled (S741 → NO).

If fisheye distortion correction is currently being made, the CPU 151 proceeds to step S742 to start blur correction. Further, the displayed blur correction button 173 is switched OFF in step S743. Thereby, the reproduced moving picture enters the display state illustrated in Fig. 41A, for example.

The CPU 151 marks the blur correction start position in step S744.

Additionally, the ON-operated blur correction button 173 is disabled here not during fisheye distortion correction, but if the blur correction button 173 is switched ON not during fisheye distortion correction, fisheye distortion correction and blur correction may be started together.

In a case where the CPU 151 senses that the blur correction button 173 has been switched OFF during moving picture reproduction, it proceeds from step S750 to S751 in Fig. 50 to terminate blur correction. Further, the displayed blur correction button 173 is switched ON in step S752. Thereby, the reproduced moving picture enters the display state illustrated in Fig. 40B, for example.

The CPU 151 marks the blur correction end position in step S753

In a case where the CPU 151 senses that the gravitational direction correction button 174 has been switched ON during moving picture reproduction, it proceeds from step S760 to S761 to confirm whether or not fisheye distortion correction is currently being made. If fisheye distortion correction is not being made, the ON-operated gravitational direction correction button 174 is disabled (S761 → NO).

If fisheye distortion correction is currently being made, the CPU 151 proceeds to step S762 to start gravitational direction correction. Further, the displayed gravitational direction correction button 174 is switched OFF in step S763. Thereby, the reproduced moving picture enters the display state illustrated in Fig. 41B, for example.

Additionally, the ON-operated gravitational direction correction button 174 is disabled here not during fisheye distortion correction, but if the gravitational direction correction button 174 is switched ON not during fisheye distortion correction, gravitational direction correction may be switched ON while fisheye distortion correction is started.

In a case where the CPU 151 senses that the gravitational direction correction button 174 has been switched OFF during moving picture reproduction, it proceeds from step S770 to S771 to switch gravitational direction correction OFF. Further, the displayed gravitational direction correction button 174 is switchedON in step S772. Thereby, the reproduced moving picture enters the display state illustrated in Fig. 40B or Fig. 41A, for example.

In a case where the CPU 151 senses the field of view changing operation performed by the user during moving picture reproduction, it proceeds from step S780 to S781 to branch the processing depending on whether or not gravitational direction correction is ON. When gravitational direction correction is OFF, the processing proceeds to step S782 to produce the pan angle, the tilt angle, or the roll angle in response to an operation, to rotate the output coordinate plane 210, and to change the region 211 to be cut out.

When gravitational direction correction is ON, the processing proceeds to step S783 to place a constraint on the pan angle, the tilt angle, or the roll angle in response to an operation due to gravitational direction correction, to rotate the output coordinate plane 210, and to change the region 211 to be cut out. Thereby, even if the field of view is changed as described above, the gravitational direction is prevented from being offset.

In a case where the CPU 151 senses the user's record operation during moving picture reproduction or during reproduction stop, it proceeds from step S790 to the record processing in S791.

The record operation requires an operation of newly recording the image data as a moving picture of the fisheye image reproduced as described above to be the corrected image data (corrected moving picture contents).

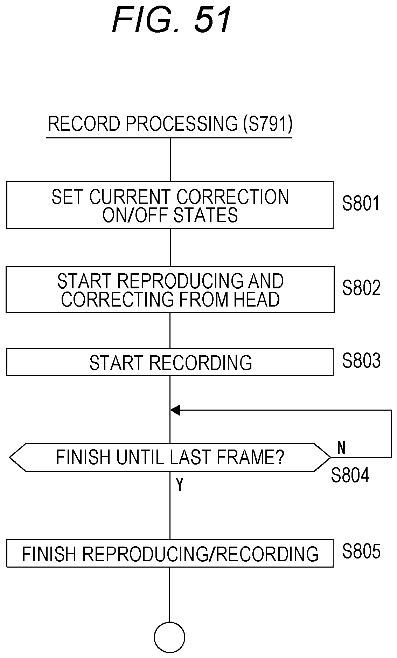

The record processing in step S791 is illustrated in Fig. 51 by way of example.

The CPU 151 sets the current correction ON/OFF states as record processing information in step S801 of Fig. 51.

The current correction ON/OFF states indicate the ON/OFF states of fisheye distortion correction, blur correction, and gravitational direction correction at the time of the record operation.

As described above, fisheye distortion correction, blur correction, and gravitational direction correction can be arbitrarily switched ON/OFF while the user is viewing the reproduced moving picture. Thereby, the display state subjected to each correction can be confirmed. That is, the user can confirm which correction is desired to be enabled for his/her viewing moving picture.

Thus, according to the present embodiment, in a case where the user wants the moving picture contents subjected to only fisheye distortion correction, for example, he/she has only to perform the record operation while only fisheye distortion correction is ON during reproduction. Similarly, in a case where the user wants the moving picture contents subjected to fisheye distortion correction and blur correction, for example, he/she has only to perform the record operation while only fisheye distortion correction and blur correction are ON during reproduction.

Additionally, the user may select the current correction ON/OFF states during the record operation. For example, the user, who has thought ever that it is effective to make both fisheye distortion correction and blur correction during reproduction, selects making both fisheye distortion correction and blur correction at the time of the record operation. In this case, the CPU 151 sets the current correction ON/OFF states as record processing information in step S801 in response to a user's operation.

Further, it is assumed that the user selects the image data (moving picture contents) irrespective of previous reproduction and records it. In this case, the correction ON/OFF states at the last reproduction of the image data may be assumed as the current correction ON/OFF states in step S801, or the user may select the image data and the correction ON/OFF states together.

In step S802, the CPU 151 starts reproducing and correcting the image data to be reproduced so far or the image data additionally designated at the time of the record operation from the head frame. Further, the corrected frames start being recorded in step S803.

That is, the image data of the original fisheye image 201 is subjected to necessary correction, thereby creating the moving picture contents as new image data.

Further, the reproduced moving picture to be saved is saved while being confirmed, and thus a reproduced image in an unintended corrections state can be prevented from being saved.

Additionally, the moving picture reproduction/correction/record in steps S802 and S803 may be similarly performed at the reproduction speed in the normal viewing state (reproduction and record at one-fold speed), but higher-speed reproduction/record may be performed to be completed in a shorter time.

The CPU 151 confirms whether or not reproduction/record has reached the last frame in step S804, and if it has reached the last frame, reproduction/record is terminated instep S805.

Further, only the correction processing and the storage processing may be performed without the moving picture reproduction. In this case, the moving picture is not reproduced, thereby achieving a reduction in processing loads on the CPU 151 and achieving higher efficiency of various correction processings and the reproduced image storage processing.

Thereby, the user can reproduce the image data shot by the shooting apparatus 1 as a moving picture in the information processing apparatus 150, can confirm the state in which fisheye distortion correction, blur correction, and gravitational direction correction are made at this time, and can designate any correction state thereby to generate the image data subjected to the correction.

For example, the image data shot by the shooting apparatus 1 which is actively moving is a moving picture of a fisheye image with large blurs. If the user reproduces and confirms the moving picture and thinks that it is better to make fisheye distortion correction or blur correction of the moving picture, he/she can obtain new image data for the moving picture with fisheye distortion correction made and with less blurs by the record operation.

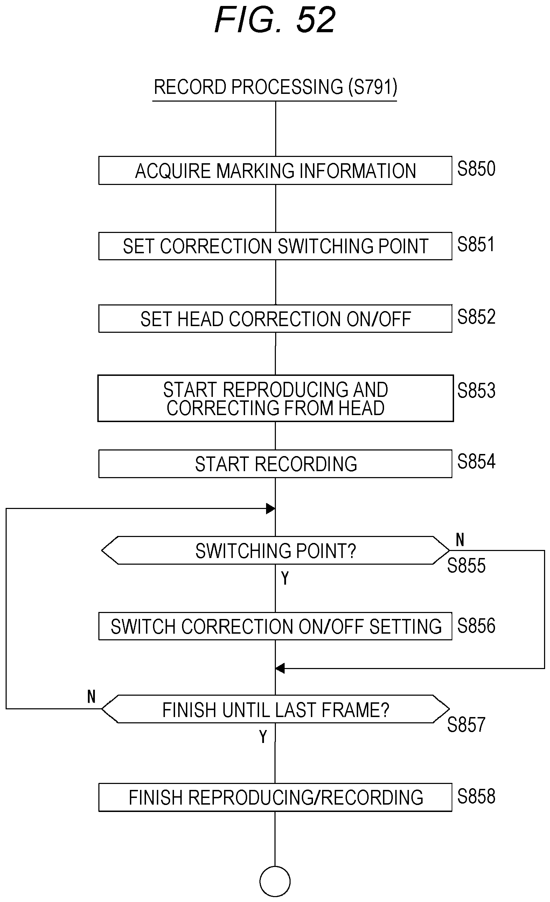

Then, Fig. 52 illustrates other example of the record processing in step S791. This example uses the marking information.

The CPU 151 acquires the marking information associated with the target image data in step S850 of Fig. 52. That is, it is information indicating a frame position for which the user switches ON/OFF fisheye distortion correction or blur correction while the moving picture of the image data is being reproduced.

In step S851, the CPU 151 sets a period in which fisheye distortion correction or blur correction is made on the target image data on the basis of the marking information, and sets a frame position as an ON/OFF switching point.

Specifically, the start frame/end frame as a fisheye distortion correction ON period, and the start frame/end frame as a blur correction ON period are grasped on the basis of the marking information, respectively. Then, a fisheye distortion correction ON frame position, and a fisheye distortion correction OFF frame position are set. Further, a blur correction ON frame position and a blur correction OFF frame position are set. Of course, no switching point may be present, or one or more switching points may be present.

In step S852, the CPU 151 performs the ON/OFF setting at the head of the moving picture on the basis of the correction ON/OFF information grasped on the basis of the marking information.

Then, in step S853, the CPU 151 starts reproducing and correcting the image data to be reproduced so far, or the image data additionally designated at the time of the record operation from its head frame. Further in step S854, it starts recording the corrected frames. That is, moving picture contents of the image data of the original fisheye image 201 are created as new image data subjected to necessary correction.

In step S855, the CPU 151 monitors whether or not a previously-set switching point has been reached. When the reproduction in progress reaches the switching point, the CPU 151 proceeds to step S856 to switch ON or OFF fisheye distortion correction or to switch ON or OFF blur correction depending on the switching point.

Thereby, the state in which fisheye distortion correction or blur correction is made is changed before and after the switching point.

The CPU 151 confirms whether or not reproduction/record has reached the last frame in step S857, and terminates reproduction/record in step S858 if reproduction/record has reached the last frame.

Additionally, moving picture reproduction/correction/record in steps S853 and S854 may be similarly performed at the reproduction speed in the normal viewing state (reproduction and record at one-fold speed), but higher-speed reproduction/record may be performed to be completed in a shorter time.

With the record processing of Fig. 52, when the user reproduces the moving picture of the image data shot by the shooting apparatus 1 in the information processing apparatus 150 and arbitrarily switches ON/OFF fisheye distortion correction and blur correction at this time, the moving picture contents on which the correction ON/OFF states during the reproduction are reflected are generated.

Thus, in a case where a period in the moving picture is assumed as fisheye distortion correction OFF, for example, the moving picture of the fisheye image is obtained in which fisheye distortion correction is not made in the period even in the moving picture to be recorded. Further, in a case where only a period is set at fisheye distortion correction ON and blur correction ON, the moving picture in the central projection system is obtained in which blurs are reduced in the period. Thereby, the user can arbitrarily set fisheye distortion correction ON/OFF and set blur correction ON/OFF, thereby creating the moving picture contents with the setting reflected.

Additionally, the marking processing is performed as in Fig. 49 and Fig. 50, but it is preferable that the marking information is changeable (frame position is adjustable) in response to a user's operation.

For example, corrections are roughly set ON/OFF while a reproduced moving picture is being viewed, the marking information is adjusted before recording, and the periods in which fisheye distortion correction or blur correction is made, and the periods in which no correction is made can be adjusted, thereby easily generating a desired moving picture.

Additionally, a period in which gravitational direction correction is enabled may be set in a moving picture.

For example, gravitational direction correction period information is added to a moving picture to be recorded thereby to generate the moving picture in which the gravitational direction is not offset even if the field of view is changed during the reproduction.

When gravitational direction correction is set ON in step S762 of Fig. 50 or gravitational direction correction is set OFF in step S771, for example, in order to set such periods, the marking processing may be performed.

<14. Summary of information processing apparatus>

As described above, the information processing apparatus 150 according to the embodiment includes the distortion correction processing part 390 for performing the distortion correction processing of converting image data as a moving picture of an image shot in a non-central projection system into an image in the central projection system, and the blur correction processing part 391 for performing the blur correction processing of reducing image blurs appearing on distortion-corrected image data by use of posture data of the shooting apparatus 1.

Thereby, when image data as a moving picture of an image shot in a non-central projection system is reproduced or edited, the user can be provided with an environment in which he/she can easily confirm the distortion-corrected or blur-corrected state. In particular, blur correction is made on distortion-corrected image data, thereby providing a blur-corrected moving picture in an easily-viewable state.

Further, the information processing apparatus 150 according to the embodiment includes the distortion correction processing part 390, the blur correction processing part 391, and the reproduction/edition control part 300 for controlling performing/stopping the distortion correction processing by the distortion correction processing part 390, and performing/stopping the blur correction processing by the blur correction processing part 391.

Image data to be reproduced is an image covering a scene in a wide field of view for a moving picture of an image in a non-central projection system. In this case, fisheye distortion correction and blur correction are arbitrarily enabled, respectively, thereby providing a variety of high-quality displays to the user.

Furthermore, when image data as a moving picture of an image shot in a non-central projection system is reproduced or edited, the user can be provided with an environment in which he/she can easily confirm the fisheye distortion-corrected or blur-corrected state, which is preferable for reproduction or edition.

The information processing apparatus 150 according to the embodiment controls switching ON and OFF the distortion correction processing and switching ON and OFF the blur correction processing when reproducing and displaying image data.

When image data is being reproduced or a moving picture is being reproduced, distortion correction and blur correction are made, respectively, or the correction processings are stopped.

Thereby, the user can view the state in which fisheye distortion correction is made and the state in which it is not made on the reproduced moving picture during reproduction . Further, the user can view the state in which blur correction is made and the state in which it is not made on the reproduced moving picture.

Further, it is therefore possible to confirm whether or not the moving picture is appropriate for fisheye distortion correction or whether or not the moving picture is appropriate for blur correction at the time of reproduction or edition.

According to the embodiment, the fisheye distortion correction button 172 is operable when image data is reproduced and displayed, and the fisheye distortion correction processing is switched ON or OFF depending on the operation information.

Thereby, the user can arbitrarily make or stop fisheye distortion correction in real-time while viewing a reproduced image. In particular, the user can try an image obtained by making fisheye distortion correction per scene in a moving picture.

According to the embodiment, the blur correction button 173 is operable when image data is reproduced and displayed, and the blur correction processing is switched ON and OFF depending on the operation information.

Thereby, the user can arbitrarily make or stop blur correction in real-time while viewing a reproduced image. In particular, the user can try an image obtained by making blur correction per scene in a moving picture.

According to the embodiment, the fisheye distortion correction button 172 and the blur correction button 173 are independently operable when image data is reproduced and displayed.

The user can arbitrarily make or stop fisheye distortion correction and blur correction in real-time while viewing a reproduced image.

According to the embodiment, the blur correction processing can be performed while the distortion correction processing is being performed. That is, blur correction is not operable in a case where a fisheye image on which the fisheye distortion correction processing is not performed is output.

While blur correction is enabled in a fisheye distortion-corrected image, the blur correction effect cannot be accurately recognized by the user in a fisheye image on which fisheye distortion correction is not made. Thus, blur correction is executable only in a case where fisheye distortion correction is being made.

Further, blur correction is made by use of the processing of rotating the output coordinate plane 210 for fisheye distortion correction, thereby realizing the efficient functional configuration. In this case, it is preferable that blur correction is made at the same time with fisheye distortion correction.

According to the embodiment, there is provided the gravitational direction correction processing part 392 for performing the gravitational direction correction processing of keeping a gravitational direction in a displayed image constant by use of posture data of the shooting apparatus corresponding to each frame of image data when a field of view is changed while the image data is being reproduced and displayed, and the reproduction/edition control part 300 controls switching ON and OFF the gravitational direction correction processing by the gravitational direction correction processing part 392.

A field of view can be changed in response to a user's operation when image data is reproduced and displayed. In this case, if the field of view is varied according to a user's operation, the gravitational direction in the displayed image may not match with the downward direction of the displayed image. Thus, the gravitational direction is kept constant in the displayed image. Thereby, the easily-viewable state can be kept even if the field of view is changed, thereby realizing preferable reproduction and display and achieving good operability in the field of view changing operation.

According to the embodiment, when image data is reproduced and displayed, the gravitational direction correction button 174 is operable thereby to control switching ON and OFF the gravitational direction correction processing depending on the operation information.

Thereby, the user can arbitrarily make or stop gravitational direction correction while viewing a reproduced image.

According to the embodiment, the distortion correction operation piece, the blur correction operation piece, and the gravitational direction correction operation piece are independently operable when image data is reproduced and displayed.

Thereby, the user can arbitrarily make or stop distortion correction, blur correction, and gravitational direction correction in real-time while viewing a reproduced image.

According to the embodiment, the gravitational direction correction processing can be performed while the fisheye distortion correction processing is being performed. Gravitational direction correction is not operable in a case where an image in a non-central projection system in which the distortion correction processing is not performed is output.

The gravitational direction correction effect cannot be accurately recognized by the user in a fisheye image on which fisheye distortion correction is not made. Thus, gravitational direction correction is executable only in a case where fisheye distortion correction is being made.

Further, gravitational direction correction realizes the efficient functional configuration by adjusting and performing the processing of rotating the output coordinate plane 210 for fisheye distortion correction. In this case, it is preferable that gravitational direction correction is made at the same time with fisheye distortion correction.

According to the embodiment, image data obtained by performing either or both of the distortion correction processing by the distortion correction processing part 390 and the blur correction processing by the blur correction processing part 391 on original image data as a moving picture of an image shot in a non-central projection system is generated and recorded in a recording medium (see Fig. 51 and Fig. 52) .

That is, new image data as a moving picture obtained by performing one or both of the distortion correction processing and the blur correction processing on original image data as a moving picture of an image in a non-central projection system is generated and recorded. Thereby, the user can easily create image data (moving picture contents) subjected to one or both of fisheye distortion correction and blur correction.

According to the embodiment, the distortion correction processing and the blur correction processing are set ON and OFF during recording depending on the information indicating whether or not the distortion correction processing and the blur correction processing are performed when original image data is reproduced (see Fig. 51).

Each correction is switched ON/OFF in response to a user's instruction when original image data is reproduced. Whether or not to make correction is set during recording according to a user's setting (whether or not to make each correction) during reproduction.

Thereby, the user determines a correction processing to be employed on a reproduced image and then performs the record operation, thereby obtaining desired image data (moving picture contents).

According to the embodiment, the distortion correction processing and the blur correction processing during recording are switched ON and OFF on the basis of the information indicating the periods in which the distortion correction processing is performed and the periods in which the blur correction processing is performed in original image data (see Fig. 52).

For example, the marking information is added to indicate the periods in which distortion correction or blur correction is made when original image data is reproduced. The marking information is used to switch ON/OFF corrections during recording.

The user arbitrarily switches ON/OFF fisheye distortion correction or blur correction while an image is being reproduced, and the marking information is added. By use of it, the periods in which fisheye distortion correction is made and the periods in which blur correction is made in a moving picture can be known. Thus, as in the example of Fig. 52, fisheye distortion correction or blur correction is switched ON/OFF according to whether or not correction is made per period during reproduction. Thereby, it is possible to easily create moving picture contents depending on whether or not correction is made during reproduction.

The program according to the embodiment of the present invention is directed for causing the CPU 151 in the information processing apparatus 150 to perform the steps (S702, S722, S732, S743, and S752) of enabling the fisheye distortion correction operation piece (fisheye distortion correction button 172) and the blur correction operation piece (blur correction button 173) while image data as a moving picture of an image shot in a non-central projection system is being reproduced, the step (S721) of performing distortion-corrected reproduction and display in response to a correction instruction made by the fisheye distortion correction operation piece while a moving picture is being reproduced, and the step (S742) of performing blur-corrected reproduction and display in response to a correction instruction made by the blur correction operation piece while a moving picture is being reproduced.

Specifically, the program is directed for causing the CPU 151 to perform the processings in Fig. 49, Fig. 50, Fig. 51, or Fig. 52.

The information processing apparatus 150 according to the present embodiment is easily realized by such a program.

Then, such a program can be previously stored in a recording medium incorporated in a device such as computer apparatus, a ROM in a microcomputer having a CPU, or the like. Alternatively, it can be temporarily or permanently stored in a removable recording medium such as semiconductor memory, memory card, optical disc, magnetooptical disc, or magnetic disc. Further, such a removable recording medium can be provided as package software.

Further, such a program can be installed from a removable recording medium into a personal computer or the like, and can be downloaded from its download site via a network such as LAN or Internet.

<15. Applications>

The technology according to the present disclosure can be applied to various products. For example, the technology according to the present disclosure may be applied to an operating room system.

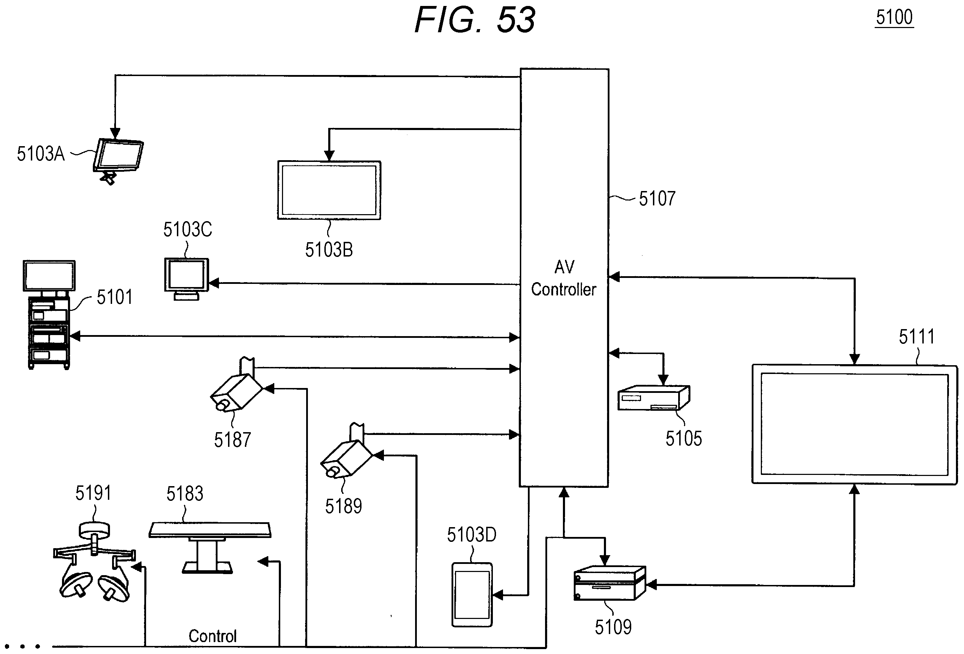

Fig. 53 is a diagram schematically illustrating an entire configuration of an operating room system 5100 to which the technology according to the present disclosure is applicable. With reference to Fig. 53, the operating room system 5100 is configured such that a group of apparatuses installed in an operating room are connected to mutually cooperate via an AV controller 5107 and an operating room control apparatus 5109.

Various apparatuses can be installed in the operating room. Fig. 53 illustrates a group of various apparatuses 5101 for endoscopic surgery, a ceiling camera 5187 provided on the ceiling of the operating room and directed for shooting the hands of an operator, a surgical site camera 5189 provided on the ceiling of the operating room and directed for shooting the entire operating room, a plurality of display apparatuses 5103A to 5103D, a recorder 5105, a patient's bed 5183, and an illumination 5191.

Here, the group of apparatuses 5101 among the apparatuses belongs to an endoscopic surgery system 5113 described below, and is configured of an endoscope, a display apparatus for displaying an image shot by the endoscope, and the like. Each apparatus belonging to the endoscopic surgery system 5113 is also called medical device. On the other hand, the display apparatuses 5103A to 5103D, the recorder 5105, the patient's bed 5183, and the illumination 5191 are provided in the operating room, for example, separately from the endoscopic surgery system 5113. Each of the apparatuses not belonging to the endoscopic surgery system 5113 is also called non-medical device. The AV controller 5107 and/or the operating room control apparatus 5109 controls the operations of the medical devices and the non-medical devices in the mutually cooperative manner.

The AV controller 5107 totally controls the image display processings in the medical devices and the non-medical devices . Specifically, the group of apparatuses 5101, the ceiling camera 5187, and the surgical site camera 5189 among the apparatuses provided in the operating room system 5100 can be apparatuses (also called origination source apparatus below) having the function of originating the information to be displayed during the surgery (also called display information below) . Further, the display apparatuses 5103A to 5103D can be apparatuses to which the display information is output (also called output destination apparatus below) . Further, the recorder 5105 can correspond to both the origination source apparatus and the output destination apparatus. The AV controller 5107 has the functions of controlling the operations of the origination source apparatuses and the output destination apparatuses, acquiring the display information from the origination source apparatuses, transmitting the display information to the output destination apparatuses, and displaying or recording it. Additionally, the display information is various images shot during the surgery, various items of information associated with the surgery (such as patient's physical information, past medical check results, and surgical procedure information, for example), and the like.

Specifically, the display information such as information indicating the images of a surgical site in the body cavity of the patient shot by the endoscope can be transmitted from the group of apparatuses 5101 to the AV controller 5107. Further, the display information such as information indicating the images of the hands of an operator shot by the ceiling camera 5187 can be transmitted from the ceiling camera 5187. Further, the display information such as information indicating the images of the entire operating room shot by the surgical site camera 5189 can be transmitted from the surgical site camera 5189. Additionally, in a case where other apparatus having the shooting function is present in the operating room system 5100, the AV controller 5107 may acquire the display information such as information indicating the images shot by the other apparatus also from the other apparatus.

Alternatively, the recorder 5105 records the information indicating the images shot in the past by the AV controller 5107, for example. The AV controller 5107 can acquire the information indicating the images shot in the past from the recorder 5105. Additionally, the recorder 5105 may previously record various items of information associated with the surgery.

The AV controller 5107 displays the acquired display information (or the images shot during the surgery, or various items of information associated with the surgery) on at least any of the display apparatuses 5103A to 5103D as output destination apparatuses. In the illustrated example, the display apparatus 5103A is suspended from the ceiling of the operating room for installation, the display apparatus 5103B is installed on a wall of the operating room, the display apparatus 5103C is installed on a desk in the operating room, and the display apparatus 5103D is a mobile device (such as tablet personal computer (PC)) having the display function.

Further, though not illustrated in Fig. 53, the operating room system 5100 may include apparatuses outside the operating room. The apparatuses outside the operating room may be a server connected to a network constructed outside the hospital, a PC used by a medical staff, a projector installed in a conference room in the hospital, and the like, for example. In a case where such external apparatuses are present outside the hospital, the AV controller 5107 can display the display information for remote medical care on a display apparatus in other hospital via a TV conference system or the like.

The operating room control apparatus 5109 totally controls the processings other than the image display processings in the non-medical devices. For example, the operating room control apparatus 5109 controls driving the patient's bed 5183, the ceiling camera 5187, the surgical site camera 5189, and the illumination 5191.

The operating room system 5100 is provided with a concentrated operation panel 5111, and the user can give an image display instruction to the AV controller 5107, or give an instruction to operate a non-medical device to the operating room control apparatus 5109 via the concentrated operation panel 5111. The concentrated operation panel 5111 is configured such that a touch panel is provided on the display face of the display apparatus.

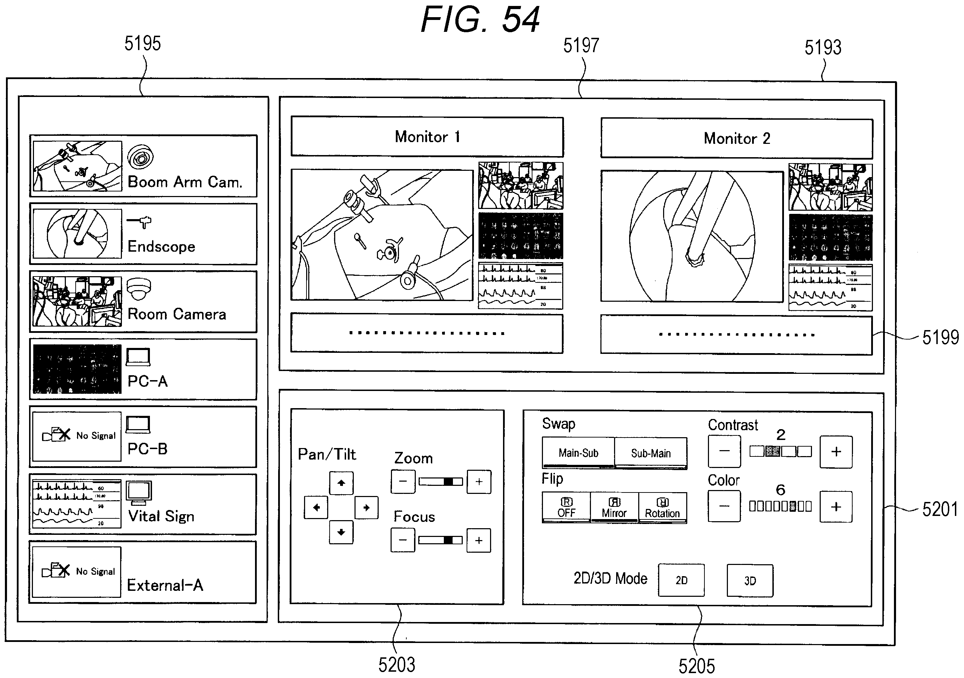

Fig. 54 is a diagram illustrating exemplary display of the operation screen of the concentrated operation panel 5111. Fig. 54 illustrates the operation screen in a case where the operating room system 5100 is provided with two display apparatuses as output destination apparatuses by way of example . With reference to Fig. 54, an operation screen 5193 is provided with an origination source selection region 5195, a preview region 5197, and a control region 5201.

The origination source selection region 5195 displays the origination source apparatuses provided in the operating room system 5100 and the thumbnail images indicating the display information of the origination source apparatuses in an associated manner. The user can select the display information to be displayed on the display apparatus from any origination source apparatus displayed in the origination source selection region 5195.

The preview region 5197 displays the previews of the screens displayed on two display apparatuses (Monitor1 and Monitor2) as output destination apparatuses. In the illustrated example, four images are PinP-displayed on one display apparatus. The four images correspond to the display information originated from the origination source apparatus selected in the origination source selection region 5195. One of the four images is displayed as a relatively large main image, and the remaining three images are displayed as relatively small sub-images. The user selects the region in which the four images are displayed as needed thereby to rearrange the main image and the sub-images. Further, a status display region 5199 is provided below the region in which the four images are displayed, and a state of the surgery (such as elapsed time of the surgery or patient's physical information, for example) can be displayed in the region as needed.

The control region 5201 is provided with an origination source operation region 5203 in which graphical user interface (GUI) parts for operating an origination source apparatus are displayed, and an output destination operation region 5205 in which GUI parts for operating an output destination apparatus are displayed. In the illustrated example, the origination source operation region 5203 is provided with the GUI part for performing various operations (pan, tilt, and zoom) on the camera in the origination source apparatus having the shooting function. The user can operate the camera in the origination source apparatus by selecting a GUI part as needed. Additionally, though not illustrated, in a case where the origination source apparatus selected in the origination source selection region 5195 is a recorder (or in a case where an image recorded in the recorder in the past is displayed in the preview region 5197), the origination source operation region 5203 can be provided with the GUI parts for performing the operations such as reproducing, stopping reproducing, rewinding, or fast-forwarding the image.

Further, the output destination operation region 5205 is provided with the GUI parts for performing various operations (swap, flip, color adjustment, contrast adjustment, and switching between 2D and 3D) on the display in the display apparatus as an output destination apparatus. The user can operate the display in the display apparatus by selecting a GUI part as needed.

Additionally, the operation screen displayed on the concentrated operation panel 5111 is not limited to the illustrated example, and the user can input, via the concentrated operation panel 5111, an operation into each apparatus provided in the operating room system 5100 and capable of being controlled by the AV controller 5107 and the operating room control apparatus 5109.

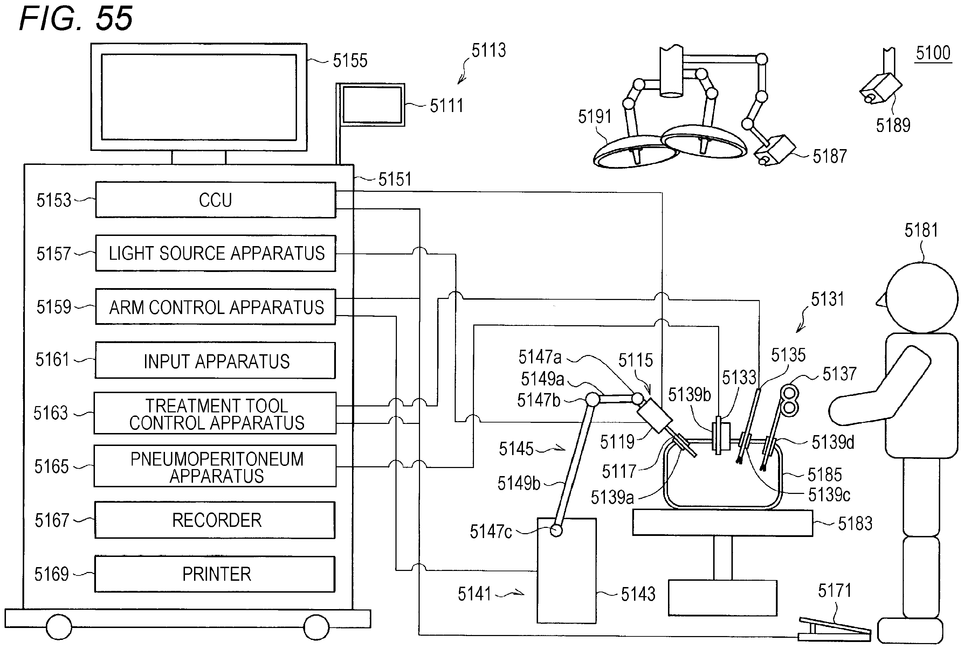

Fig. 55 is a diagram illustrating a surgery to which the operating room system described above is applied by way of example. The ceiling camera 5187 and the surgical site camera 5189 are provided on the ceiling of the operating room, and can shoot the hands of an operator (doctor) 5181 who does a treatment of a diseased site of a patient 5185 on the patient's bed 5183 and the entire operating room. The ceiling camera 5187 and the surgical site camera 5189 can be provided with the magnification adjustment function, the focal length adjustment function, the shooting direction adjustment function, and the like. The illumination 5191 is provided on the ceiling of the operating room, and illuminates at least the hands of the operator 5181. The illumination 5191 can adjust the amount of irradiated light, the wavelength (color) of the irradiated light, the irradiation direction of the light, and the like as needed.

As illustrated in Fig. 53, the endoscopic surgery system 5113, the patient's bed 5183, the ceiling camera 5187, the surgical site camera 5189, and the illumination 5191 are connected to mutually cooperate via the AV controller 5107 and the operating room control apparatus 5109 (not illustrated in Fig. 55). The concentrated operation panel 5111 is provided in the operating room, and the user can operate the apparatuses present in the operating room via the concentrated operation panel 5111 as needed as described above.

A configuration of the endoscopic surgery system 5113 will be described below in detail. As illustrated, the endoscopic surgery system 5113 is configured of an endoscope 5115, other surgical tools 5131, a support arm apparatus 5141 for supporting the endoscope 5115, and a cart 5151 on which various apparatuses for endoscopic surgery are mounted.

In an endoscopic surgery, a plurality of tubular opening tools called trocars 5139a to 5139d is tapped into the abdominal wall instead of cutting and opening the abdominal wall. Then, a lens tube 5117 of the endoscope 5115 or other surgical tools 5131 are inserted from the trocars 5139a to 5139d into the body cavity of the patient 5185. In the illustrated example, the surgical tools 5131 such as a pneumoperitoneum tube 5133, an energy treatment tool 5135, and forceps 5137 are inserted into the body cavity of the patient 5185. Further, the energy treatment tool 5135 is directed for cutting and releasing a tissue, or sealing a blood vessel, for example, by high-frequency current or ultrasonic vibration. However, the illustrated surgical tools 5131 are merely exemplary, and various surgical tools used in general endoscopic surgeries, such as tweezers and tractor, for example, may be used for the surgical tools 5131.

An image of the surgical site in the body cavity of the patient 5185 shot by the endoscope 5115 is displayed on a display apparatus 5155. The operator 5181 does a treatment such as cutting the diseased site, for example, by use of the energy treatment tool 5135 or the forceps 5137 while watching the image of the surgical site displayed on the display apparatus 5155 in real-time. Additionally, though not illustrated, the pneumoperitoneum tube 5133, the energy treatment tool 5135, and the forceps 5137 are supported by the operator 5181, his/her assistant, or the like during the surgery.

(Support arm apparatus)

The support arm apparatus 5141 includes an arm part 5145 extending from a base part 5143. In the illustrated example, the arm part 5145 is configured of joint parts 5147a, 5147b, and 5147c, and links 5149a and 5149b, and is driven under control of an arm control apparatus 5159. The endoscope 5115 is supported by the arm part 5145, and its position and posture are controlled. Thereby, the endoscope 5115 can be fixed at a stable position.

(Endoscope)

The endoscope 5115 is configured of the lens tube 5117 a region of which within a predetermined length from the tip is inserted into the body cavity of the patient 5185, and a camera head 5119 connected to the base of the lens tube 5117. In the illustrated example, the endoscope 5115 configured as a rigid scope having the rigid lens tube 5117 is illustrated, but the endoscope 5115 may be configured as a flexible scope having the flexible lens tube 5117.

An opening fitted with an objective lens is provided at the tip of the lens tube 5117. The endoscope 5115 is connected with a light source apparatus 5157, and a light generated by the light source apparatus 5157 is guided to the tip of the lens tube by a light guide extending inside the lens tube 5117, and irradiated toward an object to be observed in the body cavity of the patient 5185 via the objective lens. Additionally, the endoscope 5115 may be a forward-viewing endoscope, an oblique-viewing endoscope, or a side-viewing endoscope.

An optical system and an imaging device are provided inside the camera head 5119, and a reflected light (observation light) from the object to be observed is condensed into the imaging device by the optical system. The observation light is photoelectrically converted by the imaging device thereby to generate an electric signal corresponding to the observation light, or an image signal corresponding to the observed image. The image signal is transmitted as RAW data to a camera control unit (CCU) 5153. Additionally, the camera head 5119 is mounted with a function of adjusting a magnification and a focal length by driving the optical system as needed.

Additionally, the camera head 5119 may be provided with a plurality of imaging devices for stereoscopic view (3D display) or the like, for example. In this case, a plurality of relay optical systems for guiding the observation light to the plurality of imaging devices, respectively, is provided inside the lens tube 5117.

(Various apparatuses mounted on cart)

The CCU 5153 is configured of a central processing unit (CPU), a graphics processing unit (GPU), or the like, and totally controls the operations of the endoscope 5115 and the display apparatus 5155. Specifically, the CCU 5153 performs various image processings for displaying an image based on an image signal, such as development processing (demosaic processing), for example, on the image signal received from the camera head 5119. The CCU 5153 provides the image-processed image signal to the display apparatus 5155. Further, the CCU 5153 is connected with the AV controller 5107 illustrated in Fig. 53. The CCU 5153 provides the image-processed image signal also to the AV controller 5107. Further, the CCU 5153 transmits a control signal to the camera head 5119 and controls driving the same. The control signal can include information associated with the shooting conditions such as magnification or focal length. The information associated with the shooting conditions may be input via an input apparatus 5161, or may be input via the concentrated operation panel 5111.

The display apparatus 5155 displays the image based on the image signal image-processed by the CCU 5153 under control of the CCU 5153. In a case where the endoscope 5115 is for high-resolution shooting such as 4K (horizontal pixels 3840 × vertical pixels 2160) or 8K (horizontal pixels 7680 × vertical pixels 4320), for example, and/or is for 3D display, the display apparatus 5155 capable of high-resolution display and/or 3D display can be accordingly employed. The display apparatus 5155 with a 55-inch screen or larger is employed for high-resolution shooting such as 4K or 8K, and thus a sense of deeper immersion can be achieved. Further, a plurality of display apparatuses 5155 with different resolutions and sizes may be provided depending on an application.

The light source apparatus 5157 is configured of a light source such as light emitting diode (LED), for example, and supplies an irradiation light for shooting a surgical site to the endoscope 5115.

The arm control apparatus 5159 is configured of a processor such as CPU, for example, and operates according to a predetermined program thereby to control driving the arm part 5145 of the support arm apparatus 5141 according to a predetermined control system.

The input apparatus 5161 is an input interface for the endoscopic surgery system 5113. The user can input various items of information or instructions into the endoscopic surgery system 5113 via the input apparatus 5161. For example, the user inputs various items of information associated with the surgery such as patient's physical information or surgical procedure information via the input apparatus 5161. Further, for example, the user inputs an instruction to drive the arm part 5145, an instruction to change the shooting conditions (such as kind of irradiation light, magnification, and focal length) by the endoscope 5115, an instruction to drive the energy treatment tool 5135, and the like via the input apparatus 5161.

The kinds of the input apparatus 5161 are not limited, and various well-known input apparatuses 5161 may be employed. The input apparatus 5161 may apply a mouse, a keyboard, a touch panel, a switch, a foot switch 5171, a lever, and/or the like, for example. In a case where the input apparatus 5161 uses a touch panel, the touch panel may be provided on the display face of the display apparatus 5155.

Alternatively, the input apparatus 5161 is a user-mounted device such as glasses-type wearable device or head mounted display (HMD), for example, and performs various inputs depending on a user's gesture or line of sight detected by the devices. Further, the input apparatus 5161 includes a camera capable of detecting a user's motion and performs various inputs depending on a user's gesture or line of sight detected from a video shot by the camera. Further, the input apparatus 5161 includes a microphone capable of colleting user's voice and performs various inputs by voice via the microphone. In this way, the input apparatus 5161 is configured to be able to input various items of information in the non-contact manner, and thus especially the user (such as the operator 5181) in the clean area can operate the devices in the non-clean area in the non-contact manner. Further, the user can operate the devices without releasing his/her holding surgical tool, thereby enhancing user's operability.

A treatment tool control apparatus 5163 controls driving the energy treatment tool 5135 for cauterizing, cutting a tissue or sealing a blood vessel, or the like. A pneumoperitoneum apparatus 5165 feeds gas into the body cavity via the pneumoperitoneum tube 5133 in order to expand the body cavity of the patient 5185 for securing the field of view of the endoscope 5115 and securing the working space of the operator. A recorder 5167 is an apparatus capable of recording various items of information associated with the surgery. A printer 5169 is an apparatus capable of printing various items of information associated with the surgery in various forms such as text, image or graph.

Particularly characteristic components of the endoscopic surgery system 5113 will be described below in more detail.

(Support arm apparatus)

The support arm apparatus 5141 includes the base part 5143 as a base, and the arm part 5145 extending from the base part 5143. In the illustrated example, the arm part 5145 is configured of the plurality of joint parts 5147a, 5147b, and 5147c, and the plurality of links 5149a and 5149b coupled by the joint part 5147b, but Fig. 55 illustrates a simplified configuration of the arm part 5145 for simplicity. Actually, the shapes, the numbers, and the arrangements of the joint parts 5147a to 5147c and the links 5149a and 5149b, the directions of the rotation shafts of the joint parts 5147a to 5147c, and the like can be set as needed such that the arm part 5145 has a desired degree of freedom. For example, the arm part 5145 can be configured to preferably have six or more degrees of freedom. Thereby, the endoscope 5115 can be freely moved within the movable range of the arm part 5145, and thus the lens tube 5117 of the endoscope 5115 can be inserted into the body cavity of the patient 5185 in a desired direction.

The joint parts 5147a to 5147c are provided with the actuators, respectively, and the actuators are driven so that the joint parts 5147a to 5147c can rotate about predetermined rotation axes, respectively. The actuators are driven under control of the arm control apparatus 5159, and thus the rotation angle of each of the joint parts 5147a to 5147c is controlled, and the arm part 5145 is controlled and driven. Thereby, the position and posture of the endoscope 5115 can be controlled. At this time, the arm control apparatus 5159 can control driving the arm part 5145 in various well-known control systems such as force control or position control.

For example, the operator 5181 inputs an operation via the input apparatus 5161 (including the foot switch 5171) as needed so that the arm part 5145 may be driven under control of the arm control apparatus 5159 as needed in response to the input operation, and the position and posture of the endoscope 5115 may be controlled. The endoscope 5115 at the tip of the arm part 5145 is moved from a position to another position under the control, and then can be fixedly supported at the reached position. Additionally, the arm part 5145 may be operated in the master-slave system. In this case, the arm part 5145 can be remotely operated by the user via the input apparatus 5161 installed away from the operating room.

Further, in a case where force control is applied, the arm control apparatus 5159 may perform power assist control of receiving an external force from the user and driving the actuators of the respective joint parts 5147a to 5147c such that the arm part 5145 smoothly moves according to the external force. Thereby, when the user moves the arm part 5145 while directly touching the arm part 5145, he/she can move the arm part 5145 with a relatively weak force. Thus, the user can more intuitively move the endoscope 5115 in a simpler operation, thereby enhancing user's operability.

Here, the endoscope 5115 has been generally supported by a doctor called scopist in endoscopic surgeries. To the contrary, the support arm apparatus 5141 is used thereby to not manually but more accurately fix the position of the endoscope 5115, thereby stably obtaining an image of a surgical site and smoothly performing a surgery.

Additionally, the arm control apparatus 5159 may not necessarily be provided on the cart 5151. Further, the number of arm control apparatuses 5159 may not necessarily be one. For example, the arm control apparatuses 5159 may be provided in the respective joint parts 5147a to 5147c of the arm part 5145 of the support arm apparatus 5141, respectively, and the plurality of arm control apparatuses 5159 mutually cooperates thereby to control driving the arm part 5145.

(Light source apparatus)

The light source apparatus 5157 supplies an irradiation light to the endoscope 5115 when a surgical site is shot. The light source apparatus 5157 is configured of a LED, a laser light source, or a white light source in combination of them, for example. At this time, in a case where the white light source is configured in combination of RGB laser light sources, the output intensity and the output timing of each color (each wavelength) can be controlled with high accuracy, and thus the light source apparatus 5157 can adjust the white balance of a shot image. Further, in this case, the laser lights are irradiated from the RGB laser light sources onto an object to be observed in the time division manner, respectively, and the imaging device of the camera head 5119 is controlled and driven in synchronization with the irradiation timings, thereby shooting the images corresponding to RGB in the time division manner. With the method, a color image can be obtained without a color filter in the imaging device.

Further, the light source apparatus 5157 may be controlled and driven for changing the intensity of a light to be output at a predetermined time. The imaging device in the camera head 5119 is controlled and driven in synchronization with the timings to change the intensities of the lights thereby to obtain images in the time division manner, and the images are combined thereby to generate an image with a wide dynamic range without blocked-up shadows and blown-out highlights.

Further, the light source apparatus 5157 may be configured to supply a light in a predetermined wavelength band corresponding to special light observation. Under the special light observation, for example, a light in a narrower band than an irradiation light (or white light) during normal observation is irradiated by use of the wavelength dependency of absorption of a light in a body tissue, thereby performing narrow band imaging for shooting a predetermined tissue such as blood vessel in the superficial portion of the mucous membrane at high contrast. Alternatively, under the special light observation, fluorescent observation for obtaining an image by fluorescence caused by irradiating an excitation light may be performed. Under the fluorescent observation, an excitation light is irradiated on a body tissue thereby to observe fluorescence from the body tissue (autofluorescence observation), or a regent such as indocyanine green (ICG) is locally injected into a body tissue, and an excitation light corresponding to the fluorescent wavelength of the regent is irradiated on the body tissue thereby to obtain a fluorescent image, for example. The light source apparatus 5157 can be configured to supply a narrowband light and/or excitation light corresponding to such special light observation.

(Camera head and CCU)

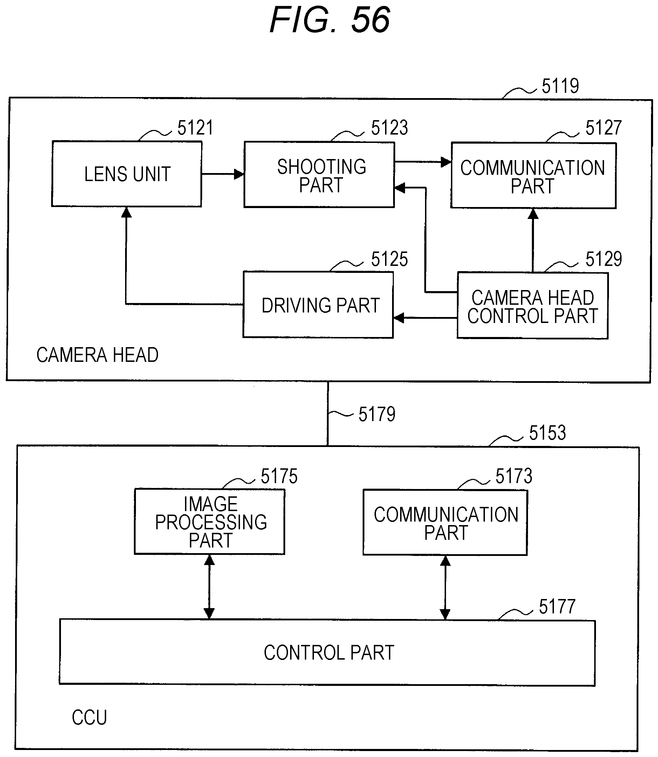

The functions of the camera head 5119 and the CCU 5153 in the endoscope 5115 will be described in more detail with reference to Fig. 56. Fig. 56 is a block diagram illustrating an exemplary functional configuration of the camera head 5119 and the CCU 5153 illustrated in Fig. 55.

With reference to Fig. 56, the camera head 5119 has the functions of a lens unit 5121, a shooting part 5123, a driving part 5125, a communication part 5127, and a camera head control part 5129. Further, the CCU 5153 has the functions of a communication part 5173, an image processing part 5175, and a control part 5177. The camera head 5119 and the CCU 5153 are connected to be bi-directionally communicable via a transmission cable 5179.

A functional configuration of the camera head 5119 will be first described. The lens unit 5121 is an optical system provided at the connection part to the lens tube 5117. An observation light taken from the tip of the lens tube 5117 is guided to the camera head 5119 to be incident into the lens unit 5121. The lens unit 5121 is configured in a combination of a plurality of lenses including a zoom lens and a focus lens. The lens unit 5121 is adjusted in its optical characteristics to condense an observation light on the light receiving face of the imaging device of the shooting part 5123. Further, the zoom lens and the focus lens are configured to be movable on the optical axis J in order to adjust the magnification and the focal point of a shot image.

The shooting part 5123 is configured of an imaging device, and is arranged subsequent to the lens unit 5121. An observation light passing through the lens unit 5121 is condensed on the light receiving face of the imaging device and photoelectrically converted thereby to generate an image signal corresponding to the observed image. The image signal generated by the shooting part 5123 is provided to the communication part 5127.

The imaging device configuring the shooting part 5123 uses a complementary metal oxide semiconductor (CMOS) type image sensor capable of color shooting in the Bayer layout, for example. Additionally, the imaging device capable of shooting a high-resolution image of 4K or more may be used, for example. A high-resolution image of a surgical site can be obtained, and thus the operator 5181 can grasp the surgical site in more detail and can more smoothly perform the surgery.

Further, the imaging device configuring the shooting part 5123 has one pair of imaging devices for acquiring a right-eye image signal and a left-eye image signal for 3D display. With 3D display, the operator 5181 can more accurately grasp the depth of a body tissue at a surgical site. Additionally, in a case where the shooting part 5123 is configured in multiplate, a plurality of lens units 5121 corresponding to the imaging devices is provided, respectively.

Further, the shooting part 5123 may not necessarily be provided in the camera head 5119. For example, the shooting part 5123 may be provided immediately behind the objective lens inside the lens tube 5117.

The driving part 5125 is configured of an actuator, and moves the zoom lens and the focus lens in the lens unit 5121 by a predetermined distance along the optical axis J under control of the camera head control part 5129. Thereby, the shooting part 5123 can adjust the magnification and the focal point of a shot image as needed.

The communication part 5127 is configured of a communication apparatus for exchanging various items of information with the CCU 5153. The communication part 5127 transmits the image signal acquired from the shooting part 5123 as RAW data to the CCU 5153 via the transmission cable 5179. At this time, it is preferable that the image signal is transmitted via optical communication in order to display the shot image of the surgical site at low latency. This is because the operator 5181 performs the surgery while observing the state of the diseased site on the shot image and thus the moving picture of the diseased site needs to be displayed in real-time to the extent possible for safer and more accurate surgery. In a case where optical communication is made, the communication part 5127 is provided with a photoelectric conversion module for converting an electric signal into an optical signal. The image signal is converted into an optical signal by the photoelectric conversion module and then transmitted to the CCU 5153 via the transmission cable 5179.

Further, the communication part 5127 receives a control signal for controlling and driving the camera head 5119 from the CCU 5153. The control signal includes, for example, the information associated with the shooting conditions such as information for designating a frame rate of a shot image, information for designating an exposure value on shooting, and/or information for designating a magnification and a focal point of a shot image. The communication part 5127 provides the received control signal to the camera head control part 5129. Additionally, a control signal from the CCU 5153 may be also transmitted via optical communication. In this case, the communication part 5127 is provided with a photoelectric conversion module for converting an optical signal into an electric signal, and the control signal is converted into an electric signal by the photoelectric conversion module and then provided to the camera head control part 5129.

Additionally, the shooting conditions such as frame rate, exposure value, magnification, and focal point are automatically set by the control part 5177 of the CCU 5153 on the basis of the acquired image signal. That is, the auto exposure (AE) function, the auto focus (AF) function, and the auto white balance (AWB) function are mounted on the endoscope 5115.

The camera head control part 5129 controls driving the camera head 5119 on the basis of the control signal received from the CCU 5153 via the communication part 5127. For example, the camera head control part 5129 controls driving the imaging device of the shooting part 5123 on the basis of the information for designating the frame rate of the shot image and/or the information for designating exposure on shooting. Further, for example, the camera head control part 5129 moves the zoom lens and the focus lens in the lens unit 5121 via the driving part 5125 as needed on the basis of the information for designating the magnification and the focal point of the shot image . The camera head control part 5129 may include a function of storing information for identifying the lens tube 5117 or the camera head 5119.

Additionally, the component such as the lens unit 5121 or the shooting part 5123 are arranged in a highly-sealed structure with high airtightness and waterproof resistance, and thus the camera head 5119 can be resistant to autoclave sterilization processing.

A functional configuration of the CCU 5153 will be described below. The communication part 5173 is configured of a communication apparatus for exchanging various items of information with the camera head 5119. The communication part 5173 receives an image signal transmitted from the camera head 5119 via the transmission cable 5179. At this time, the image signal can be preferably transmitted via optical communication as described above. In this case, the communication part 5173 is provided with a photoelectric conversion module for converting an optical signal into an electric signal for optical communication. The communication part 5173 provides the electric signal as the converted image signal to the image processing part 5175.

Further, the communication part 5173 transmits a control signal for controlling and driving the camera head 5119 to the camera head 5119. The control signal may be also transmitted via optical communication.

The image processing part 5175 performs various image processings on the image signal as RAW data transmitted from the camera head 5119. The image processings include various well-known signal processings such as development processing, image quality increase processing (such as bandwidth emphasis processing, super-resolution processing, noise reduction (NR) processing and/or hand shaking correction processing), and/or enlargement processing (such as electronic zoom processing). Further, the image processing part 5175 performs a processing of detecting an image signal for performing AE, AF, and AWB.

The image processing part 5175 is configured of a processor such as CPU or GPU, and the processor operates according to a predetermined program so that the image processings or detection processing can be performed. Additionally, in a case where the image processing part 5175 is configured of a plurality of GPUs, the image processing part 5175 divides the information associated with the image signal as needed, and performs the image processings in parallel by the plurality of GPUs.

The control part 5177 performs various controls for shooting a surgical site by the endoscope 5115 and displaying its shot image. For example, the control part 5177 generates a control signal for controlling and driving the camera head 5119. At this time, in a case where the shooting conditions are input by the user, the control part 5177 generates a control signal on the basis of the user's input. Alternatively, in a case where the AE function, the AF function, and the AWB function are mounted on the endoscope 5115, the control part 5177 calculates an optimum exposure value, an optimum focal length, and optimum white balance as needed depending on the result of the detection processing by the image processing part 5175, and generates a control signal.

Further, the control part 5177 causes the display apparatus 5155 to display the image of the surgical site on the basis of the image signal image-processed by the image processing part 5175. At this time, the control part 5177 recognizes various objects within the image of the surgical site by use of various image recognition technologies. For example, the control part 5177 detects the shapes, colors, and the like of the edges of the objects included in the image of the surgical site thereby to recognize a surgical tool such as forceps, a specific living body site, bleeding, mist during the use of the energy treatment tool 5135, and the like. When causing the display apparatus 5155 to display an image of the surgical site, the control part 5177 may overlap various items of surgery support information on the image of the surgical site to be displayed by use of the recognition result. The surgery support information is overlapped to be displayed, and is presented to the operator 5181 so that the operator 5181 can more safely and accurately perform the surgery.

The transmission cable 5179 for connecting the camera head 5119 and the CCU 5153 is an electric signal cable for electric signal communication, an optical fiber for optical communication, or a composite cable of them.

Here, wired communication is made by use of the transmission cable 5179 in the illustrated example, but wireless communication may be made between the camera head 5119 and the CCU 5153. In a case where wireless communication is made therebetween, the transmission cable 5179 does not need to be provided in the operating room, and thus a situation in which the transmission cable 5179 hinders the medical staff from moving in the operating room can be eliminated.

An exemplary operating room system 5100 to which the technology according to the present disclosure can be applied has been described above. Additionally, the description has been made herein assuming that a medical system to which the operating room system 5100 is applied is the endoscopic surgery system 5113, but the configuration of the operating room system 5100 is not limited to the example. For example, the operating room system 5100 may be applied to a flexible endoscopic system for examination or a microscopic surgery system instead of the endoscopic surgery system 5113.

It is assumed that the technology of the shooting apparatus 1 according to the present disclosure is used instead of or together with the ceiling camera 5187 or the surgical site camera 5189 among the components described above. Specifically, an operator or assistant mounts the shooting apparatus 1 to record a surgical situation in a moving picture. Further, fisheye distortion correction or blur correction is made on the shot image data, thereby achieving the system capable of presenting the surgical situation in an easily viewable manner.

Additionally, the effects described in the present specification are merely exemplary and are not restrictive, and other effect may be obtained.

<16. Present technology>

The present technology can take the following configurations.

(1) A shooting apparatus including:

a casing;
an attachment part configured to mount the casing on the neck of a user; and
an optical system that is provided at a lower part of the casing and has an optical axis facing downward relative to the horizontal direction.

(2) The shooting apparatus according to (1),
in which the attachment part is provided at an upper part of the casing.
(3) The shooting apparatus according to any of (1) or (2),
in which the optical axis of the optical system is a straight line facing downward relative to the horizontal direction while a rear face part of the casing is along a gravitational direction.
(4) The shooting apparatus according to any of (1) to (3),
in which a tilt of the optical axis relative to the horizontal direction is between around 10° and around 50°.
(5) The shooting apparatus according to any of (1) to (4), further including:

a strap attached on the casing,
in which the casing is in a vertically long shape in which the vertical width is larger than the horizontal width while it is suspended by the strap.

(6) The shooting apparatus according to any of (1) to (5),
in which an operation piece is provided on an upper face part of the casing.
(7) The shooting apparatus according to any of (1) to (6),
in which an operation piece is provided only on one side face part out of a right side face part and a left side face part of the casing.
(8) The shooting apparatus according to (7),
in which a plurality of operation pieces is provided on the one side face part.
(9) The shooting apparatus according to any of (1) to (8),
in which an operation piece is provided on the upper face part of the casing, and
an operation piece is provided only on one side face part out of the right side face part and the left side face part of the casing.
(10) The shooting apparatus according to any of (6) or (9),
in which a still image shooting function operation piece is provided for the operation piece on the upper face part.
(11) The shooting apparatus according to any of (6) or (9),
in which a marker recording function operation piece is provided for the operation piece on the upper face part.
(12) The shooting apparatus according to any of (7) to (9),
in which a moving picture shooting function operation piece is provided for the operation piece on the side face part.
(13) The shooting apparatus according to any of (7) to (9),
in which a time-lapse moving picture shooting function operation piece is provided for the operation piece on the side face part.
(14) The shooting apparatus according to any of (1) to (13),
in which the attachment part is a strap with a guide part.
(15) The shooting apparatus according to any of (1) to (14), further including:
a report part configured to report that shooting is in progress.
(16) The shooting apparatus according to any of (1) to (15), further including:
a lens cover capable of covering the optical system.
(17) The shooting apparatus according to any of (1) to (16), further including:
a vibration part configured to provide notification of a reduction in power supply voltage during shooting.
(18) The shooting apparatus according to any of (1) to (17),
in which the vibration part is provided inside the casing.
(19) The shooting apparatus according to (17), further including:

a strap attached on the casing,
in which the vibration part is provided on the strap.

(20) The shooting apparatus according to any of (1) to (19),
in which microphones are provided at the upper part and the lower part of the casing.

REFERENCE SIGNS LIST

| | |
|---|---|
| 1 | Shooting apparatus |
| 2 | Casing |
| 3 | Optical system |
| 4 | Strap |
| 5 | Front face part |
| 6 | Rear face part |
| 7 | Side face part |
| 8 | Upper face part |
| 9 | Lower face part |
| 10 | Moving picture button |
| 11 | Time-lapse button |
| 12 | Function button |
| 13 | Attachment part |
| 14 | Report part |
| 20 | Vibration part |
| 23 | Male connector |
| 25 | Female connector |
| 30 | Magnet |
| 33 | Guide part |
| 34 | Magnet |
| 35 | Microphone |
| 36 | Lens cover |
| 100 | Image data generation part |
| 101 | Posture data generation part |
| 112 | Imaging device part |
| 117 | Storage part |
| 118 | Communication part |
| 122 | Control part |
| 126 | Gyro sensor |
| 127 | Acceleration sensor |
| 129 | Light emission part |
| 150 | Information processing apparatus |
| 162 | Memory card |
| 172 | Fisheye distortion correction button |
| 173 | Blur correction button |
| 174 | Gravitational direction correction button |
| 390 | Distortion correction processing part |
| 391 | Blur correction processing part |
| 392 | Gravitational direction correction processing part |

**Claims**

1. A shooting apparatus comprising:

   a casing;
   an attachment part configured to mount the casing on the neck of a user; and
   an optical system that is provided at a lower part of the casing and has an optical axis facing downward relative
   to the horizontal direction.

2. The shooting apparatus according to claim 1,

wherein the attachment part is provided at an upper part of the casing.

3. The shooting apparatus according to claim 1,
wherein the optical axis of the optical system is a straight line facing downward relative to the horizontal direction while a rear face part of the casing is along a gravitational direction.

4. The shooting apparatus according to claim 1,
wherein a tilt of the optical axis relative to the horizontal direction is between around 10° and around 50°.

5. The shooting apparatus according to claim 1, further comprising:

   a strap attached on the casing,
   wherein the casing is in a vertically long shape in which the vertical width is larger than the horizontal width while it is suspended by the strap.

6. The shooting apparatus according to claim 1,
wherein an operation piece is provided on an upper face part of the casing.

7. The shooting apparatus according to claim 1,
wherein an operation piece is provided only on one side face part out of a right side face part and a left side face part of the casing.

8. The shooting apparatus according to claim 7,
wherein a plurality of operation pieces is provided on the one side face part.

9. The shooting apparatus according to claim 1,
wherein an operation piece is provided on the upper face part of the casing, and
an operation piece is provided only on one side face part out of the right side face part and the left side face part of the casing.

10. The shooting apparatus according to claim 6,
wherein a still image shooting function operation piece is provided for the operation piece on the upper face part.

11. The shooting apparatus according to claim 6,
wherein a marker recording function operation piece is provided for the operation piece on the upper face part.

12. The shooting apparatus according to claim 7,
wherein a moving picture shooting function operation piece is provided for the operation piece on the side face part.

13. The shooting apparatus according to claim 7,
wherein a time-lapse moving picture shooting function operation piece is provided for the operation piece on the side face part.

14. The shooting apparatus according to claim 1,
wherein the attachment part is a strap with a guide part.

15. The shooting apparatus according to claim 1, further comprising:
a report part configured to report that shooting is in progress.

16. The shooting apparatus according to claim 1, further comprising:
a lens cover capable of covering the optical system.

17. The shooting apparatus according to claim 1, further comprising:
a vibration part configured to provide notification of a reduction in power supply voltage during shooting.

18. The shooting apparatus according to claim 17,
wherein the vibration part is provided inside the casing.

**19.** The shooting apparatus according to claim 17, further comprising:

a strap attached on the casing,
wherein the vibration part is provided on the strap.

**20.** The shooting apparatus according to claim 1,
wherein microphones are provided at the upper part and the lower part of the casing.

# FIG. 1

# FIG. 2

# FIG. 3

# FIG. 4

A

1

8  12

10

2

GRAVITATIONAL DIRECTION

6

5
5a
7
11

3

H

α

9    21    5b

J

B

1

8    12

2

10

11

7
5
5a
5b

7

21    3

J

# FIG. 5

A

B

# FIG. 6

# FIG. 7

# FIG. 8

# FIG. 9

A

B

C

$$F1 = F \times \sin\theta1$$

# FIG. 10

# FIG. 11

# FIG. 12

A

B

C

# FIG. 13

# FIG. 14

# FIG. 15

A

25    23    20

B

25    23

20

C

25    23

20    20

# FIG. 16

# FIG. 17

# FIG. 18

ST1

POWER SUPPLY OFF

WIRELESS COMMUNICATION BUTTON

STANDBY STATE

WIRELESS COMMUNICATION BUTTON

MOVING PICTURE BUTTON

MOVING PICTURE BUTTON

ST2
SHOOTING MOVING PICTURE

FUNCTION BUTTON

UNCONDITIONAL

ST5

FUNCTION BUTTON

TIME-LAPSE BUTTON

TIME-LAPSE BUTTON

ST3
STORING TIME-LAPSE MOVING PICTURE

FUNCTION BUTTON

UNCONDITIONAL

ST4
RECORD MARKER

SHOOT STILL IMAGE

ST6
SHOOT STILL IMAGE

EP 3 627 218 A1

# FIG. 19

# FIG. 20

A

B

C

# FIG. 21

151     152     153

| CPU | ROM | RAM | 154

I/O INTERFACE ~155

| DISPLAY | INPUT PART | SPEAKER | STORAGE PART | COMMUNICATION PART | DRIVE | ~161

156     157     158     159     160

MEMORY CARD ~162

150

# FIG. 22

IMAGE CORRECTION PROCESSINGS

POSTURE DATA

DIFFERENTIAL VALUE CALCULATION

UPDATE BY SAMPLING INTERVAL OF GYRO SENSOR

NORM NORMALIZATION OF QUATERNION

**frame(0)**

EXPOSURE PERIOD

$\omega_{x0}, \omega_{y0}, \omega_{z0}$ → $q_0' = q_{prev}\,\omega_0/2$ | $q_0 = q_{prev} + \Delta t q_0'$ | $\hat{q}_0 = q_0/|q_0|$

$\omega_{x1}, \omega_{y1}, \omega_{z1}$ → $q_1' = q_0\,\omega_1/2$ | $q_1 = \hat{q}_0 + \Delta t q_1'$ | $\hat{q}_1 = q_1/|q_1|$

$\omega_{x2}, \omega_{y2}, \omega_{z2}$ → $q_2' = q_1\,\omega_2/2$ | $q_2 = \hat{q}_1 + \Delta t q_2'$ | $\hat{q}_2 = q_2/|q_2|$

NON-EXPOSURE PERIOD

$\omega_{xn}, \omega_{yn}, \omega_{zn}$ → $q_n' = q_{n-1}\,\omega_n/2$ | $q_n = \hat{q}_{n-1} + \Delta t q_n'$ | $\hat{q}_n = q_n/|q_n|$

$q_{prev} = \hat{q}_n$

**frame(1)**

EXPOSURE PERIOD

$\omega_{x0}, \omega_{y0}, \omega_{z0}$ → $q_0' = q_{prev}\,\omega_0/2$ | $q_0 = q_{prev} + \Delta t q_0'$ | $\hat{q}_0 = q_0/|q_0|$

$\omega_{x1}, \omega_{y1}, \omega_{z1}$ → $q_1' = q_0\,\omega_1/2$ | $q_1 = \hat{q}_0 + \Delta t q_1'$ | $\hat{q}_1 = q_1/|q_1|$

$\omega_{x2}, \omega_{y2}, \omega_{z2}$ → $q_2' = q_1\,\omega_2/2$ | $q_2 = \hat{q}_1 + \Delta t q_2'$ | $\hat{q}_2 = q_2/|q_2|$

NON-EXPOSURE PERIOD

$\omega_{xn}, \omega_{yn}, \omega_{zn}$ → $q_n' = q_{n-1}\,\omega_n/2$ | $q_n = \hat{q}_{n-1} + \Delta t q_n'$ | $\hat{q}_n = q_n/|q_n|$

$q_{prev} = \hat{q}_n$

TIME

EP 3 627 218 A1

FIG. 23

# FIG. 24

A

GAIN                                                                    EXPOSURE TIME

ELECTRONIC
SHUTTER CONTROL

AGC PROCESSING

Gmax

Smax1

Gmin

Smin

DARK ←                                    ILLUMINANCE [Ix] → BRIGHT

ILLUMINANCE
THRESHOLD th2

ILLUMINANCE
THRESHOLD th3

ILLUMINANCE
THRESHOLD th1

B

GAIN                                                                    EXPOSURE TIME

AGC
PROCESSING

ELECTRONIC
SHUTTER CONTROL

Smax1

Gmax'

Smax2

Gmax

AGC PROCESSING

Smin

Gmin

DARK ←        ILLUMINANCE
THRESHOLD th3"          ILLUMINANCE [Ix] → BRIGHT

ILLUMINANCE
THRESHOLD th3'

ILLUMINANCE
THRESHOLD th1

ILLUMINANCE
THRESHOLD th2'

# FIG. 25

```
                    ( START )
                       │
            ┌──────────────────────┐
            │   SET FIRST CONTROL  │ S101
            └──────────────────────┘
                       │
       ┌──────────────►│
       │               │
       │          ╱ AUTOMATIC EXPOSURE ╲  N
       │          ╲  CONTROL IS ON?    ╱ ─────────────────┐
       │            S102                                  │
       │               │ Y                                │
       │      ┌──────────────────────┐                    │
       │      │ CALCULATE AMOUNT OF  │ S103               │
       │      │   POSTURE CHANGE     │                    │
       │      └──────────────────────┘                    │
       │               │                                  │
       │   N      ╱ TREND OF POSTURE ╲  S104              │
       │◄──────── ╲ CHANGE IS CHANGED?╱                   │
       │               │ Y                                │
       │               │                                  │
       │          ╱ POSTURE CHANGE IS ╲  N                │
       │          ╲FROM SMALL TO LARGE?╱ ──────┐          │
       │            S105                       │          │
       │               │ Y                     │          │
       │   ┌───────────────────┐   ┌───────────────────┐ │
       │   │ SET SECOND CONTROL│   │  SET FIRST CONTROL│ │
       │   │            S106   │   │           S107    │ │
       │   └───────────────────┘   └───────────────────┘ │
       │               │◄──────────────────┘             │
       └───────────────┘                                 │
                       │                                 │
                       └─────────────────────────────────┘
                       │
                    ( END )
```

# *FIG. 26*

# FIG. 27

# FIG. 28

# FIG. 29

A                                   B

CONTROL OF CAMERA UNIT          CONTROL OF DETECTION UNIT

N — SHOOTING START TRIGGER?   S201     N — START OPERATION?   S301
Y                                       Y

START SHOOTING   S202         START ACQUIRING DETECTION SIGNAL   S302

START STORING   S203          START GENERATING AND STORING POSTURE DATA   S303

END TRIGGER?   N   S204         EMIT LIGHT   S304
Y

STOP SHOOTING   S205         END TRIGGER?   N   S305
                                                          Y

STOP STORING   S206         FINISH GENERATING POSTURE DATA AND FINISH STORING POSTURE DATA   S306

STOP ACQUIRING DETECTION SIGNAL   S307

# FIG. 30

| | frame(-1) | | frame(0) | | frame(1) | | frame(2) | |
|---|---|---|---|---|---|---|---|---|
| IMAGING DEVICE PART | EXPOSURE PERIOD | NON-EXPOSURE PERIOD | EXPOSURE PERIOD | NON-EXPOSURE PERIOD | EXPOSURE PERIOD | NON-EXPOSURE PERIOD | EXPOSURE PERIOD | NON-EXPOSURE PERIOD |

TS

LIGHT EMISSION

POSTURE DATA GENERATION/STORAGE

# FIG. 31

START

SPECIFY MOVING PICTURE DATA — S401

SPECIFY POSTURE DATA — S402

SEARCH MOVING PICTURE FRAME — S403

HIGH-LUMINANCE FRAME IS DETECTED? — S404

N → ERROR AND END — S405

Y

SPECIFY HEAD FRAME — S406

ASSOCIATE DATA WITH HEAD LINE OF HEAD FRAME — S407

ASSOCIATE SUBSEQUENT POSTURE DATA WITH FRAME — S408

END

# FIG. 32

# FIG. 33

A

CONTROL OF CAMERA UNIT

B

CONTROL OF DETECTION UNIT

N ⟨ SHOOTING START TRIGGER? ⟩ S501
Y

START SHOOTING — S502

START STORING — S503

N ⟨ END TRIGGER? ⟩ S504
Y

STOP SHOOTING — S505

STOP STORING — S506

⟨ SHOOTING START TRIGGER? ⟩ N S601
Y

START ACQUIRING VERTICAL SYNCHRONOUS SIGNAL — S602

START ACQUIRING DETECTION SIGNAL — S603

START GENERATING AND STORING POSTURE DATA — S604

EMIT LIGHT — S605

⟨ END TRIGGER? ⟩ N S606
Y

FINISH GENERATING POSTURE DATA AND FINISH STORING POSTURE DATA — S607

STOP ACQUIRING DETECTION SIGNAL — S608

## FIG. 34

| | frame(−1) | | frame(0) | | frame(1) | | frame(2) | |
|---|---|---|---|---|---|---|---|---|
| IMAGING DEVICE PART | EXPOSURE PERIOD | NON-EXPOSURE PERIOD | EXPOSURE PERIOD | NON-EXPOSURE PERIOD | EXPOSURE PERIOD | NON-EXPOSURE PERIOD | EXPOSURE PERIOD | NON-EXPOSURE PERIOD |

LIGHT EMISSION

POSTURE DATA GENERATION/STORAGE

EP 3 627 218 A1

# FIG. 35

# FIG. 36

172

170

174

173

171

TARGET 3 MINUTES
02:57:15

16:23

DISTORTION CORRECTION OFF

BLUR CORRECTION ON

GRAVITY CORRECTION OFF

150

# FIG. 37

EP 3 627 218 A1

# FIG. 38

A                                    B

201
200

VERTICAL SHAKING

FISHEYE IMAGE: DIFFERENT BLUR DIRECTION PER POSITION

PROJECTION ONTO VIRTUAL SPHERE

C                                    D

211
202
200

211
202
200

MOTION ON VIRTUAL SPHERE: COMMON IN ENTIRE SCREEN
CANCEL HAND SHAKING BY CHANGING CUTOUT POSITION

CUTOUT & DISTORTION CORRECTION

E                                    F

STABLE IMAGE WITHOUT BLUR

# FIG. 39

A

B

# FIG. 40

A    UNCORRECTED      171    172   173   174

DISTORTION CORRECTION ON | BLUR CORRECTION ON | GRAVITY CORRECTION ON

B    FISHEYE DISTORTION CORRECTION    171    172   173   174

DISTORTION CORRECTION OFF | BLUR CORRECTION ON | GRAVITY CORRECTION ON

# FIG. 41

A

FISHEYE DISTORTION CORRECTION
+BLUR CORRECTION

171    172    173    174

DISTORTION CORRECTION OFF

BLUR CORRECTION OFF

GRAVITY CORRECTION ON

B

FISHEYE DISTORTION CORRECTION+BLUR CORRECTION
+GRAVITATIONAL DIRECTION CORRECTION

171    172    173    174

DISTORTION CORRECTION OFF

BLUR CORRECTION OFF

GRAVITY CORRECTION OFF

# FIG. 42

# FIG. 43

OUTPUT COORDINATE
MAGNIFICATION
OUTPUT IMAGE SIZE

390

PAN ANGLE
TILT ANGLE
ROLL ANGLE

COORDINATE
NORMALIZATION PART — 351

POSTURE DATA

341

POSTURE DATA
CALCULATION PART

BLUR CORRECTION
HANDLING PART

ROTATION MATRIX
CALCULATION PART

343

352

391

342

GRAVITATIONAL DIRECTION
CORRECTION HANDLING PART

PERSPECTIVE PROJECTION
CONVERSION PART

353

392

READOUT COORDINATE
OUTPUT PART

354

320

READOUT
COORDINATE

IMAGE DATA →

FRAME MEMORY

OUTPUT COORDINATE →

IMAGE
CONVERSION PART

321

302 IMAGE CORRECTION PROCESSING PART

IMAGE
INTERPOLATION PART

322

OUTPUT
PROCESSING PART

323

## FIG. 44

# FIG. 45

A

(0, 0)

~210

(outh, outv)

PROCESS ON OUTPUT COORDINATE PLANE

B

210

z

202

x

y

201

210

x

CONVERT INTO
NORMALIZED SPACE

# FIG. 46

A

202  210

201

ROTATE

B

z

202  211

x

y

201
211

x

CALCULATE CORRESPONDING POINT
ON SPHERE IN PERSPECTIVE PROJECTION

# FIG. 47

A

INPUT IMAGE

211

B

OUTPUT IMAGE

## FIG. 48

*FIG. 49*

REPRODUCTION PROCESSING P2

REPRODUCE? — Y — S700

N

START REPRODUCING — S701

START DISPLAYING CORRECTION OPERATION PIECES — S702

FINISH REPRODUCING? — Y — S710

N

STOP REPRODUCING — S711

FINISH DISPLAYING CORRECTION OPERATION PIECES — S712

STORE CORRECTION ON/OFF STATES — S713

FISHEYE DISTORTION CORRECTION ON? — Y — S720

N

START FISHEYE DISTORTION CORRECTION — S721

SWITCH TO DISTORTION CORRECTION OFF BUTTON — S722

MARK — S723

FISHEYE DISTORTION CORRECTION OFF? — Y — S730

N

FINISH FISHEYE DISTORTION CORRECTION — S731

SWITCH TO DISTORTION CORRECTION ON BUTTON — S732

MARK — S733

BLUR CORRECTION ON? — Y — S740

N

N — FISHEYE DISTORTION CORRECTION IN PROGRESS? — S741

Y

START BLUR CORRECTION — S742

SWITCH TO BLUR CORRECTION OFF BUTTON — S743

MARK — S744

P1

# FIG. 50

P1

BLUR CORRECTION OFF? — Y → S750

N

| FINISH BLUR CORRECTION | S751 |

| SWITCH TO BLUR CORRECTION ON BUTTON | S752 |

| MARK | S753 |

GRAVITY CORRECTION ON? — Y → S760

N

N ← FISHEYE DISTORTION CORRECTION IN PROGRESS? S761

Y

| START GRAVITATIONAL DIRECTION CORRECTION | S762 |

| SWITCH TO GRAVITATIONAL DIRECTION CORRECTION OFF BUTTON | S763 |

GRAVITY CORRECTION OFF? — Y → S770

N

| FINISH GRAVITATIONAL DIRECTION CORRECTION | S771 |

| SWITCH TO GRAVITATIONAL DIRECTION CORRECTION ON BUTTON | S772 |

FIELD OF VIEW CHANGING OPERATION? — Y → S780

N

GRAVITATIONAL DIRECTION CORRECTION ON? — Y → S781

N

| ROTATE CUTOUT REGION | S782 |

| MAKE GRAVITATIONAL DIRECTION CORRECTION AND ROTATE CUTOUT REGION | S783 |

RECORD OPERATION? — Y → S790

N

| RECORD PROCESSING | S791 |

P2

# FIG. 51

RECORD PROCESSING (S791)

| SET CURRENT CORRECTION ON/OFF STATES | S801 |

| START REPRODUCING AND CORRECTING FROM HEAD | S802 |

| START RECORDING | S803 |

FINISH UNTIL LAST FRAME?  N  S804

Y

| FINISH REPRODUCING/RECORDING | S805 |

# FIG. 52

RECORD PROCESSING (S791)

| ACQUIRE MARKING INFORMATION | S850 |

| SET CORRECTION SWITCHING POINT | S851 |

| SET HEAD CORRECTION ON/OFF | S852 |

| START REPRODUCING AND CORRECTING FROM HEAD | S853 |

| START RECORDING | S854 |

SWITCHING POINT? — N — S855

Y

| SWITCH CORRECTION ON/OFF SETTING | S856 |

N — FINISH UNTIL LAST FRAME? — S857

Y

| FINISH REPRODUCING/RECORDING | S858 |

FIG. 53

FIG. 54

## FIG. 55

# FIG. 56

## INTERNATIONAL SEARCH REPORT

International application No.

PCT/JP2018/008289

### A. CLASSIFICATION OF SUBJECT MATTER
Int.Cl. G03B17/02(2006.01)i, G03B11/04(2006.01)i, G03B17/18(2006.01)i,
G03B17/56(2006.01)i, H04N5/225(2006.01)i

According to International Patent Classification (IPC) or to both national classification and IPC

### B. FIELDS SEARCHED

Minimum documentation searched (classification system followed by classification symbols)
Int.Cl. G03B17/02, G03B11/04, G03B17/18, G03B17/56, H04N5/225

| Documentation searched other than minimum documentation to the extent that such documents are included in the fields searched | |
|---|---|
| Published examined utility model applications of Japan | 1922–1996 |
| Published unexamined utility model applications of Japan | 1971–2018 |
| Registered utility model specifications of Japan | 1996–2018 |
| Published registered utility model applications of Japan | 1994–2018 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2016-76202 A (LG ELECTRONICS INC.) 12 May 2016, | 1-14, 16-19 |
| Y | paragraphs [0165]-[0190], [0223]-[0226], fig. 7-11, 13 & US 2016/0098138 A1, paragraphs [0213]-[0232], [0253]-[0255], fig. 7-11, 13 | 15, 20 |
| Y | JP 3209658 U (TAIWAN MICRON TECHNOLOGY, INC.) 30 March 2017, paragraphs [0013]-[0023], fig. 1 (Family: none) | 15, 20 |

☒ Further documents are listed in the continuation of Box C.  ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 25 May 2018 (25.05.2018) | 05 June 2018 (05.06.2018) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

International application No.

PCT/JP2018/008289

C (Continuation).   DOCUMENTS CONSIDERED TO BE RELEVANT

| Category* | Citation of document, with indication, where appropriate, of the relevant passages | Relevant to claim No. |
|---|---|---|
| A | WO 2007/007278 A2 (GALLO, Elmar) 18 January 2007, page 1, line 3 to page 5, line 9, fig. 1-5 & IT MI20050251 U1 | 1-20 |
| A | JP 2004-361522 A (CASIO COMPUTER CO., LTD.) 24 December 2004, paragraphs [0049]-[0055], fig. 1, 2 (Family: none) | 1-20 |
| A | US 5725136 A (SHIRES, Danny) 10 March 1998, column 2, line 11 to column 4, line 12, fig. 1-3 (Family: none) | 1-20 |
| A | JP 2007-6241 A (FUJIFILM HOLDINGS CORPORATION) 11 January 2007, paragraph [0059], fig. 1 (Family: none) | 1-20 |
| A | JP 2017-50778 A (CANON ELECTRONICS INC.) 09 March 2017, paragraphs [0009]-[0023], fig. 1-3 (Family: none) | 1-20 |
| A | JP 3176121 U (DIGITAL ACT, INC.) 14 June 2012, fig. 1, 2 (Family: none) | 1-20 |
| A | WO 2013/111549 A1 (PANASONIC CORP.) 01 August 2013, fig. 1-11 & US 9167157 B2, fig. 1-11 | 1-20 |
| A | JP 2009-118135 A (SONY CORP.) 28 May 2009, fig. 1 (Family: none) | 1-20 |

Form PCT/ISA/210 (continuation of second sheet) (January 2015)

**EP 3 627 218 A1**

**Patent documents cited in the description**

- JP 2016149752 A